# EUROPEAN PATENT APPLICATION

(11) **EP 1 557 383 A1**
(43) Date of publication of application: **27.07.2005**
(21) Application number: 03758699.7
(22) Date of filing: 26.09.2003
(51) Int. Cl.: B65G 61/00, G06F 17/60

(54) **CARGO DISTRIBUTION MANAGEMENT SYSTEM, PALETTE MANAGEMENT SYSTEM, AND COMPUTER-READABLE STORAGE MEDIUM AND PROGRAM USED FOR THEM**

(30) Priority: 26.09.2002 JP 2002281822
(71) Applicant: Toyota Steel Center Co., LTD., Tokai-shi, Aichi 476-8533 (JP)
(72) Inventor: Aoki, Tatsuhiko, Tokai-shi, Aichi 476-8533 (JP); Watarai, Toshitake, Tokai-shi, Aichi 476-8533 (JP); Tsuruta, Koichi, Tokai-shi, Aichi 476-8533 (JP)
(74) Representative: Copsey, Timothy Graham
(86) International application number: PCT/JP2003/012321
(87) International publication number: WO 2004/028934

(57) **Abstract**

This invention provides a cargo distribution management system, a pallet management system, and a computer readable recording medium capable of facilitating reducing time required for distribution using containers by marine transport or the like, acquiring information for time reduction, and decreasing distribution cost. A cargo distribution management system program executed by a server computer 1 of the system includes storage means 102, distribution status instruct means 103, distribution status output means 104, procedural document creation means 107, container packing information generation means 108, stock calculation means 109, stock planning means 110, distribution period calculation means 112, pallet information storage means 121, pallet information update means 122, transport scheduling means 123, and reference information transmission means 113.

## Description

### Technical Field

The present invention relates to a cargo distribution management system and a pallet management system for use in storing a cargo that requires a pallet in a container and distributing the cargo, and to a computer readable recording medium, and to a program.More specifically, the present invention relates to a cargo distribution management system, a pallet management system, a computer readable recording medium, and a program capable of facilitating shortening time required for distribution by marine transport using a container, acquiring information for shortening time, reducing distribution cost, and allowing anybody to refer to the acquired information.

### Background Art

To transport heavy articles such as steel materials as cargoes by sea, an general cargo ship referred to as bulk ship has been often used. If the heavy articles are transported by this bulk ship, they are carried into respective ship's holds separated by partition walls using a crane or the like and loaded thereinto while maintaining the equilibrium. Due to this, it disadvantageously takes long time to conduct cargo work. In addition, in a cargo fixing operation referred to as "shoring", "lashing" or the like, the articles are fixed by wood in large quantities in accordance with the type of the articles, which operation disadvantageously requires much cost and long time.

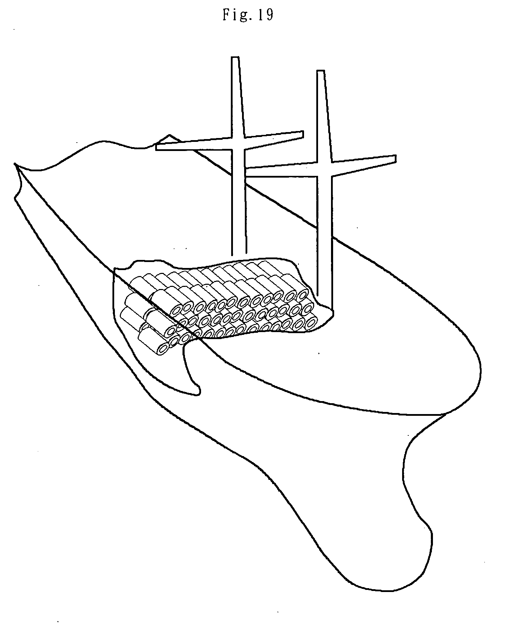

Further, although each transport target article is protected by an iron plate or the like, it tends to be damaged by the cargo work, rocking, pitching and rolling on a voyage or the like. As shown in Fig. 19, since the cargoes are directly loaded into the ship's holds, they tend to be exposed to moisture and thereby rusted. Furthermore, the conventional ship is a non-regular service, ports of call are not fixed, a distribution period (also referred to as "lead time") tends to be prolonged. Due to this, a cargo consignee side needs to secure and manage stock in large quantities so as to be able to deal with the prolonged distribution period.

Besides, the loading and unloading of cargoes into and from the conventional ship are carried out outdoors. Due to this, on bad weather such as rain, the cargo work is sometimes suspended, which makes the distribution period further prolonged. In addition, since one cargo is loaded and unloaded at one time using a crane or the like, loading/unloading operation time tends to be long as compared with loading/unloading operations carried out on a container basis.

Meanwhile, since container transport using a container transport ship is a regular service and requires a shorter distribution period, this transport means has been considered for transport of heavy articles. However, it is difficult to load heavy articles into a dry container, which is the most popular and the easiest to use.

In addition, a special container such as a flat container or an open-top container which facilitates loading is less popular and difficult to obtain as compared with the dry container. Since the special container is low in airtightness, it is necessary to strictly pack such articles as steel materials which tend to be corroded by moisture when the articles are loaded into the special container. In addition, marine transport of the special container is charged about 1.5 to 2 times as high as that of the dry container, so that the special container cannot be easily utilized in view of cost efficiency.

Additionally, a cargo loading operation (referred to as "vanning") for loading cargoes into a container (particularly, dry container) is carried out manually because of the narrow interior of the container. To fix a heavy cargo, in particular, it is necessary to do so manually using wood in large quantities similarly to transport using the bulk cargo ship. For this reason, the container transport disadvantageously requires high packing cost and long packing time. In addition, it is quite difficult to carry out the operation for loading heavy articles into the dry container, so that a rough operation method such as a method by roughly moving articles from one side and pushing them into the dry container has been used. Due to this, even if the dry container which can ensure airtightness is available, the container transport disadvantageously requires strict packing so as to resist rough handling during loading and unloading.

To overcome these disadvantages, there have been proposed pallets which facilitate loading and unloading heavy articles (see Japanese Unexamined Patent Application Nos. 7-242237 (page 6, Fig. 7) and 11-342945 (pages 4 to 6, Fig. 5)), a transport device and a transport method for transporting articles in and out of a dry container (see Japanese Unexamined Patent Application No. 11-349115 (pages 8 to 11, Fig. 31)) and the like.
Patent document 1; Japanese Unexamined Patent Application No. 7-242237 (page 6, Fig. 7)
Patent document 2; Japanese Unexamined Patent Application No. 11-342945 (pages 4 to 6, Fig. 5)
Patent document 3; Japanese Unexamined Patent Application No. 11-349115 (pages 8 to 11, Fig. 31)
Patent document 4; Japanese Unexamined Patent Application No. 2001-225911 (pages 2 to 5, Fig. 2).

However, pallets for transporting these heavy articles have higher strength than ordinary pallets and are, therefore, more expensive. To repeatedly use such pallets, it is necessary to properly manage them. In addition, heavy articles are transported in large quantities at one time and they are carried while being contained in a plurality of containers. It is, therefore, preferable to manage the heavy articles so as to correctly deliver them to destinations.

Furthermore, in case of long-period, long-distance transport which requires several days to several weeks, arrival is sometimes delayed due to the occurrence of a transport trouble caused by a long period since an orderer places an order until a cargo actually arrives at the orderer. Due to this, a consignee side such as a factory needs to secure sufficient stock, which disadvantageously pushes up cost including stock-related interest. Nevertheless, a conventional distribution management system has given no consideration to such prolonged transport (see, for example, Japanese Unexamined Patent Application No. 2001-225911 (pages 2 to 5, Fig. 2)).

To improve consignee-side operation efficiency, it has been desired to transport only necessary cargoes at one time in a short period. However, no means have been prepared so far for providing data for shortening a period. Distribution industry, shipping companies, forwarders and the like demand means for creating such data so as to be able to transport articles in a short period. Further, while parties involved individually construct systems for managing operations, it is disadvantageously necessary to input various pieces of information to the respective systems again and manage the respective systems on their own.

In addition, to transport cargoes overseas, it is necessary to create documents necessary to be submitted to customs clearance and the like. Conventionally, however, the documents have been created by rewriting other documents or the like to the necessary document by hand. This is laborious work and the resultant document often includes mistakes.

Furthermore, it is necessary to return the pallet used so as not to entail cost (tariff, custody fee, etc.) for pallet continuance in place and create documents to be submitted to the customs clearance without mistakes.

### Dicloseure of Invention

The present invention has been achieved to solve the above-stated disadvantages. It is an object of the present invention to provide a cargo distribution management system, a pallet management system, a computer readable recording medium, and a program capable of facilitating reducing time required for distribution using containers by marine transport or the like, acquiring information for time reduction, and decreasing distribution cost.

The invention will now be described following
1. A cargo distribution management system for allowing a server computer 1 to manage a cargo group 51, which is one of or both of a loaded cargo 53 which is a pallet 55 loaded with a cargo 531 and the pallet 55 unloaded with the cargo 531 and contains into a container 52, and distributing the cargo group 51 between distribution points 2 including a consignor 21, a vanning center 22, a devanning center 25, and a consignee 26, wherein
   each of the distribution points 2 comprises a terminal 7, the terminal 7 comprising a distribution status transmission means 101 for transmitting distribution status information including at least identification information for individually identifying the cargo group 51 and position information on the distribution point 2, to the server computer 1 and
   the server computer 1 comprises:
   a storage means 102 that constitutes a database storing the identification information and the distribution status information;
   a distribution status instruct means 103 for instructing the storage means 102 to store the received identification information and the distribution status information, and thereby instructing the storage means 102 to update the distribution status information stored in the storage means 102; and
   a distribution status output means 104 for outputting a result obtained by processing the distribution status information stored in the storage means 102.
2. The cargo distribution management system according to 1 above, wherein
   said identification information further includes container packing information which includes at least a volume and a containing position of said cargo group 51 in said container 52,
   said server computer 1 further comprises a container packing information generation means 108 for generating the container packing information so that a gross weight and a position of a center of gravity of the container 52 which contains the cargo group 51 fall within respective predetermined ranged, and
   said one of or both of said loaded cargo 53 and said container 52 comprise an identification information storage medium 54 which stores said identification information.
3. The cargo distribution management system according to 2 above, wherein
   said identification information storage medium 54 is a two-dimensional barcode.
4. The cargo distribution management system according to 2 above, wherein
   said server computer 1 further comprises a procedural document creation means 107 for creating a procedural document necessary for distribution based on said distribution status information stored in said storage means 102.
5. The cargo distribution management system according to 2 above, wherein
   said server computer 1 further comprises:
   a distribution period calculation means 112 for calculating a distribution period of said cargo group 51 between said distribution points 2;
   a stock calculation means 109 for calculating stock information of said cargo 531 based on said distribution status information stored in said storage means 102, and for outputting the calculated stock information; and
   a stock planning means 110 for creating a plan of supplying the cargo 531 to the consignee 26 based on the stock information obtained by the stock calculation means 109 and said distribution period obtained by said distribution period calculation means 112 so that a stock quantity of said consignee 26 becomes constant, and wherein
   said distribution period calculation means obtains a distribution processing period for each predetermined distribution processing element, and calculates a sum of distribution processing periods as the distribution period.
6. The cargo distribution management system according to 2 above, wherein
   said server computer 1 further comprises a reference information transmission means 113 for transmitting one of or both of said distribution status information stored in said storage means 102 and an output result of the distribution status output means 104 to a reference terminal 7 connected to a communication network 6 in accordance with a reference request signal transmitted from the reference terminal 7, and
   said reference information transmission means 113 determines a reference right of said reference terminal, and restricting a range in which said distribution status information can be referred to in accordance with a result of the determination.
7. The cargo distribution management system according to 2 above, wherein
   said server computer 1 further comprises:
   a pallet information storage means 121 for storing pallet information including a use history and a present position of said pallet 55;
   a pallet information update means 122 for updating the pallet information stored in the pallet information storage means 121 based on said distribution status information output from said distribution status output means 104; and
   a pallet supply means 106 for issuing an instruction to supply an empty pallet 552 that is said pallet 55 which is unloaded from one of said distribution points 2 which has the empty pallet 552 to one of the distribution points 2 which needs the empty pallet 552 while referring to said pallet information stored in said pallet information storage means 121.
8. The cargo distribution management system according to 2 above, comprising a pallet use fee charging means 124 for calculating and charging a use fee for using said pallet 55 based on said distribution status information output from said distribution status output means 104.
9. The cargo distribution management system according to 2 above, wherein
   said identification information storage medium 54 includes cargo details information of said loaded cargo 531.
10. The cargo distribution management system according to any one of 3 to 9 above, wherein
   a transport path of said cargo includes a container ship transport path.
11. The cargo distribution management system according to 10 above, wherein
   said cargo is a heavy article.
12. A consignor-side cargo distribution management system used for allowing a server computer 1 to manage a cargo group 51, which is one of or both of a loaded cargo 53 which is a pallet 55 loaded with cargo 531 and the pallet 55 unloaded with the cargo 531 and contains into a container 52, and distributing the cargo group 51 between distribution points 2 including a consignor 21, a vanning center 22, a devanning center 25 of an export destination, and a consignee 26, wherein
   the server computer 1 comprises:
   a storage means 102 constituting a database, for storing identification information for individually identifying the cargo group 51 and distribution status information including at least position information on the distribution points 2;
   a distribution status instruct means 103 for instructing the storage means 102 to store the received identification information and the distribution status information, and thereby instructing the storage means 102 to update the distribution status information stored in the storage means 102; and
   a distribution status output means 104 for outputting a result obtained by processing the distribution status information stored in the storage means 102.
13. A consignee-side cargo distribution management system used for allowing a server computer 1 to manage a cargo group 51, which is one of or both of a loaded cargo 53 which is a pallet 55 loaded with cargo 531 and the pallet 55 unloaded with the cargo 531 and contains into a container 52, and distributing the cargo group 51 between distribution points 2 including a devanning center 25, a consignee 26, and a consignor 21 which imports the cargo to the consignee 26, and a vanning center 22, wherein
   the server computer 1 comprises:
   a storage means 102 constituting a database, for storing identification information for individually identifying the cargo group 51 and distribution status information including at least position information on the distribution points 2;
   a distribution status instruct means 103 for instructing the storage means 102 to store the received identification information and the distribution status information, and thereby instructing the storage means 102 to update the distribution status information stored in the storage means 102; and
   a distribution status output means 104 for outputting a result obtained by processing the distribution status information stored in the storage means 102.
14. A pallet management system for allowing a server computer 1 to manage a pallet 55 used to distribute a cargo 531 between distribution points 2 including a consignor 21 and a consignee 26, wherein
   said server computer 1 comprises:
   a pallet information storage means 121 for storing pallet information including a use history and a present position of the pallet 55;
   a pallet information update means 122 for updating the pallet information stored in the pallet information storage means 121;
   a pallet supply means 106 for issuing an instruction to supply an empty pallet 552 that is said pallet 55 which is unused and which is unloaded with the cargo 531 from one of said distribution points 2 which has the empty pallet 552 to one of the distribution points 2 which needs the pallet 552 while referring to said pallet information stored in said pallet information storage means 121; and
   a pallet use fee charging means 124 for calculating and charging a use fee for using said pallet 552 based on said pallet information stored in said pallet information storage means 121.
15. A computer readable recording medium storing a program for allowing a computer to operate as the cargo distribution management system according to any one of 1, 12 and 13 above.
16. A computer readable recording medium storing a program for allowing a computer to operate as the pallet management system according to 14 above.
17. A program for allowing a computer to operate as the cargo distribution management system according to any one of 1, 12, and 13 above.
18. A program for allowing a computer to operate as the cargo distribution management system according to 14 above.
19. A cargo distribution management system for allowing a server computer 1 to manage a cargo group 51 including the cargo 531 and contains into a container 52, and distributing the cargo group 51 between distribution points 2 including a consignor 21, a vanning center 22, a devanning center 25, and a consignee 26, wherein
   each of the distribution points 2 comprises a terminal 7, the terminal 7 comprising a distribution status transmission means 101 for transmitting distribution status information including at least identification information for individually identifying the cargo group 51 and position information on the distribution point 2, to the server computer 1 and
   the server computer 1 comprises:
   a storage means 102 that constitutes a database storing the identification information and the distribution status information;
   a distribution status instruct means 103 for instructing the storage means 102 to store the received identification information and the distribution status information, and thereby instructing the storage means 102 to update the distribution status information stored in the storage means 102;
   a distribution status output means 104 for outputting a result obtained by processing the distribution status information stored in the storage means 102; and
   a distribution period calculation means 112 for calculating a distribution period of said cargo group 51 between said distribution points 2, and wherein
   said distribution period calculation means obtains a distribution processing period for each predetermined distribution processing element, and calculates a sum of distribution processing periods as the distribution period.
20. The cargo distribution management system according to 19 above, wherein
   said server computer 1 further comprises:
   a stock calculation means 109 for calculating stock information of said cargo 531 based on said distribution status information stored in said storage means 102, and for outputting the calculated stock information; and
   a stock planning means 110 for creating a plan of supplying the cargo 531 to the consignee 26 based on the stock information obtained by the stock calculation means 109 and said distribution period obtained by said distribution period calculation means 112 so that a stock quantity of said consignee 26 becomes constant.
21. A consignor-side cargo distribution management system used for allowing a server computer 1 to manage a cargo group 51 including cargo 531 and contains into a container 52, and distributing the cargo group 51 between distribution points 2 including a consignor 21, a vanning center 22, a devanning center 25 of an export destination, and a consignee 26, wherein
   the server computer 1 comprises:
   a storage means 102 constituting a database, for storing identification information for individually identifying the cargo group 51 and distribution status information including at least position information on the distribution points 2;
   a distribution status instruct means 103 for instructing the storage means 102 to store the received identification information and the distribution status information, and thereby instructing the storage means 102 to update the distribution status information stored in the storage means 102;
   a distribution status output means 104 for outputting a result obtained by processing the distribution status information stored in the storage means 102; and
   a distribution period calculation means 112 for calculating a distribution period of said cargo group 51 between said distribution points 2.
22. A consignee-side cargo distribution management system for allowing a server computer 1 to manage a cargo group 51 including the cargo 531 and contains into a container 52, and distributing the cargo group 51 between distribution points 2 including a devanning center 25, a consignee 26, and a consignor 21 which imports the cargo to the consignee 26, and a vanning center 22, wherein
   the server computer 1 comprises:
   a storage means 102 constituting a database, for storing identification information for individually identifying the cargo group 51 and distribution status information including at least position information on the distribution points 2;
   a distribution status instruct means 103 for instructing the storage means 102 to store the received identification information and the distribution status information, and thereby instructing the storage means 102 to update the distribution status information stored in the storage means 102;
   a distribution status output means 104 for outputting a result obtained by processing the distribution status information stored in the storage means 102; and
   a distribution period calculation means 112 for calculating a distribution period of said cargo group 51 between said distribution points 2.
23. A computer readable recording medium storing a program for allowing a computer to operate as the cargo distribution management system according to any one of 19, 21 and 22 above.
24. A program for allowing a computer to operate as the cargo distribution management system according to any one of 19, 21, and 22 above.

According to the cargo distribution management system of the present invention, each cargo group is allocated identification information so as to be able to grasp the distribution position of the cargo group. Therefore, it is possible to acquire information for appropriate distribution management.

Container packing information for well-balanced vanning in a container can be generated using the identification information. This facilitates preparing cargo group vanning.

By providing the identification information storage medium which stores details of the identification information in each of the cargo group and the container, distribution error and the like can be prevented. In addition, by using the two-dimensional barcode as the identification information storage medium, it is possible to refer to the identification information and perform high-level processing even at a distribution point where the communication network is in a bad condition or the cargo does not arrive yet.

By providing the procedural document creation means, documents necessary for customs clearance and the like can be simultaneously created, an error caused by transcription can be prevented, and document creation labor can be saved.

By providing the distribution period calculation means, a period in which the cargo group is transported between the distribution points can be individually calculated and information necessary to improve the distribution period can be acquired.

The use of this information enables a reduction in the stock of the consignee and the reduction of the distribution period enables a reduction in distribution cost.

Further, it is possible to reduce the stock of the consignee by using this information and reduce a distribution cost by shortening the distribution period. If a distribution processing period is obtained for each distribution processing element, it is possible to easily obtain the distribution period even with a plurality of distribution paths.

By providing the stock planning means, a cargo group forwarding plan which can keep the quantity of stock of the consignee to be appropriate can be made.

Since the number of days required for the distribution can be easily grasped, a shipping volume can be adjusted according to the stock status of the consignee. This thereby facilitates keeping the quantity of stock of the consignee minimum, facilitates managing the stock, and scales down a warehouse which stores the stock, thereby making it possible to reduce cost for warehouse management, land cost and the like.

By providing the reference information transmission means, the product details and present position of the cargo group can be grasped and a distribution status can be easily grasped. Further, the authentication means can restrict terminals and distribution points to be used, restrict referable discrimination position at each distribution point, and facilitate providing the system of the present invention and the like.

Further, by individually storing the present position and use history of each pallet, the pallet can be appropriately managed. This can prevent damage, delay and the like of the pallet. By providing the pallet supply means, a pallet operating rate can be increased. By providing the pallet use fee charging means, an accounting processing can be performed according to the distribution status of the cargo group.

By using cargo detail information in the identification information storage medium, the check and the like of a forwarding content can be conducted while referring to cargo details even at a distribution point where the communication network is in a bad condition or the cargo does not arrive yet.

In addition, the present invention can be suitably applied to marine transport using a container ship. The present invention can be also suitably applied to heavy article transport.

The pallet management system of the present invention can appropriately manage each pallet by individually storing the present position and use history of the pallet. This can prevent damage, delay and the like of the pallet. Further, by providing the pallet supply means, a pallet operating rate can be increased. By providing the pallet use fee charging means, an accounting processing can be performed according to the distribution status of the cargo group.

The computer readable recording medium for actuating the cargo distribution management system of the present invention can actuate the cargo distribution management system that exhibits the above-stated advantages.

Moreover, the computer readable recording medium for actuating the pallet management system of the present invention can actuate the pallet management system that exhibits the above-stated advantages.

According to the cargo distribution management system that includes the distribution period calculation means, each cargo group is allocated individual identification information so that the distribution position of the cargo group can be grasped. Therefore, it is possible to individually obtain a period in which the cargo group is transported between the distribution points and acquire necessary information for shortening the distribution period. Further, it is possible to reduce the stock of the consignee by using this information and reduce a distribution cost by shortening the distribution period.

Further, the computer readable recording medium for actuating the cargo distribution management system of the present invention can actuate the cargo distribution management system that exhibits the above-stated advantages.

### Brief Description of the Drawings

Fig. 1 is a typical block diagram illustrating the configuration of a cargo distribution management system in one embodiment according to the present invention;
Fig. 2 is a typical block diagram illustrating the configuration of the cargo distribution management system in the embodiment;
Fig. 3 is a typical block diagram for describing the handling of a cargo group at each distribution point of the cargo distribution management system in the embodiment;
Fig. 4 is a typical block diagram for describing the handling of a pallet at each distribution point of the cargo distribution management system in the embodiment;
Fig. 5 is a typical block diagram illustrating the cargo distribution management system in the embodiment;
Fig. 6 is a typical view illustrating an example of a container cargo carry-in slip created by the cargo distribution management system in the embodiment;
Fig. 7 is a typical view illustrating an example of a container-packed cargo certification-of-content created by the cargo distribution management system in the embodiment;
Fig. 8 is a typical view illustrating an example of a packing list created by the cargo distribution management system in the embodiment;
Fig. 9 is a typical view for describing an example of a screen for referring to cargoes according to progress statuses included in identification information using reference information transmission means;
Fig. 10 is a typical view for describing an example of a screen on which a progress status of cargoes of a specific type included in the identification information is displayed using the reference information transmission means;
Fig. 11 is a typical view for describing an example of a screen on which a progress status of cargoes that are being distributed, included in the identification information is displayed using the reference information transmission means;
Fig. 12 is a typical view for describing an example of a screen on which an arrangement state and the like of cargoes contained in a specific container, included in the identification information is displayed using the reference information transmission means;
Fig. 13 is a typical view for describing an example of a screen for referring to a list of cargoes exported by one container ship, included in the identification information using the reference information transmission means;
Fig. 14 is a graph illustrating an example of the output of a stock record and a stock prediction of a cargo group by the cargo distribution management system in the embodiment;
Fig. 15 is a graph illustrating an example of obtaining the statistics of a distribution period by the cargo distribution management system in the embodiment;
Fig. 16 is a typical block diagram illustrating the configuration of a cargo distribution management system which includes a plurality of transport means;
Fig. 17 is a typical block diagram illustrating the configuration of a cargo distribution management system which includes pallet manufacturing means 4;
Fig. 18 is a typical block diagram illustrating the configuration of a cargo distribution management system which includes pallet fee charging means;
Fig. 19 is a typical view for describing a manner of exporting heavy cargoes by a bulk cargo ship;
Fig. 20 is a perspective view of a pallet P1 in one embodiment according to the present invention;
Fig. 21 is a plan view of the pallet P1;
Fig. 22 is a plan view of the pallet P1;
Fig. 23 is a perspective view of a carrier used in this embodiment;
Fig. 24 is a descriptive diagram illustrating periphery of an erector of the carrier used in this embodiment;
Fig. 25 is a perspective view of a pallet-equipped carrier;
Fig. 26 is a perspective view of the pallet to which a packed stack of plate materials is fixed;
Fig. 27 is a descriptive diagram illustrating that a packing sheet is to be covered on the stack of plate materials in this embodiment;
Fig. 28 is a descriptive diagram illustrating that the pallet is to be mounted after covering the stack of plate materials with the packing sheet in this embodiment;
Fig. 29 is a descriptive diagram illustrating that the pallet is mounted on the packing sheet in this embodiment;
Fig. 30 is a descriptive diagram illustrating a state in which the pallet is reversed after being mounted in this embodiment;
Fig. 31 is a descriptive diagram illustrating a state before the pallet is reversed by a reversing machine in this embodiment;
Fig. 32 is a descriptive diagram illustrating a state after the pallet is reversed by the reversing machine in this embodiment;
Fig. 33 is a descriptive diagram illustrating a state in which the pallet is to be removed after being reversed by the reversing machine in this embodiment;
Fig. 34 is a descriptive diagram illustrating a state in which inner dolly blocks are attached to a stack before the stack is packed with a packing sheet in this embodiment;
Fig. 35 is a descriptive diagram illustrating a state in which the stack is to be packed with the packing sheet and then sealed with tapes in this embodiment;
Fig. 36 is a descriptive diagram illustrating a state in which outer dolly blocks are attached to the stack after being packed with the packing sheet in this embodiment;
Fig. 37 is a descriptive diagram illustrating a state in which hoop bands are to be inserted through band fixing holes of the pallet in this embodiment;
Fig. 38 is a perspective view of a pallet loaded with a stack of steel materials illustrating that the stack of steel materials is fixed and sealed on the pallet;
Fig. 39 is a descriptive diagram illustrating a state in which the pallet loaded with the stack of steel materials is to be mounted on a carrier in an embodiment;
Fig. 40 is a descriptive diagram illustrating a state in which the pallet loaded with the stack of steel materials is to be fixed to the carrier;
Fig. 41 is a descriptive diagram illustrating a state in which the steel material stack and pallet-equipped carriers have been contained in a container;
Fig. 42 is a descriptive diagram illustrating a state in which empty pallet-equipped empty carriers are piled up by four columns by ten layers;
Fig. 43 is an explanatory perspective view illustrating an external appearance of a coiled heavy article pallet P2-1 in one embodiment according to the present invention;
Fig. 44 is an explanatory plan view illustrating the external appearance of the coiled heavy article pallet P2-1;
Fig. 45 is a partially enlarged view for describing the detail of a mount portion of the coiled heavy article pallet;
Fig. 46 is a typical view for describing that a coil is mounted on and fixed to the coiled heavy article pallet;
Fig. 47 is an external appearance view illustrating a state in which a coiled heavy article is mounted on the coiled heavy article pallet;
Fig. 48 is a typical view for describing an external appearance of a carrier used to carry the coiled heavy article pallet;
Fig. 49 is a typical view for describing a manner of carrying the coiled heavy article pallet on which the coiled heavy article is mounted;
Fig. 50 is a typical view for describing an through hole provided with an ejection plate for facilitating taking out a fixing band inserted through the coiled heavy article pallet;
Fig. 51 is a typical view for describing an through hole provided with an ejection plate for facilitating taking out a fixing band inserted through the coiled heavy article pallet;
Fig. 52 is a typical view for describing a different coiled heavy article pallet which can separate a mount portion and legs from each other;
Fig. 53 is a typical view illustrating the different coiled heavy article pallet;
Fig. 54 is a plan view of a carrier used to carry the coiled heavy article pallet;
Fig. 55 is a side view of the carrier used to carry the coiled heavy article pallet;
Fig. 56 is a back view of the carrier used to carry the coiled heavy article pallet;
Fig. 57 is a descriptive diagram illustrating a longitudinal section of an air bearing in a state in which the carrier is levitated;
Fig. 58 is a rear view of the air bearing provided in the carrier;
Fig. 59 is a perspective view of a coiled heavy article pallet P2-2 in another embodiment according to the present invention;
Fig. 60 is a plan view of the coiled heavy article pallet P2-2;
Fig. 61 is a front view of the coiled heavy article pallet P2-2;
Fig. 62 is a side view of the coiled heavy article pallet P2-2;
Fig. 63 is a side view of the coiled heavy article pallet P2-2 if side end guides are eliminated from the pallet;
Fig. 64 is a descriptive diagram illustrating a step of mounting a coil on the coiled heavy article pallet;
Fig. 65 is a descriptive diagram illustrating a state in which the coil and the coiled heavy article pallet are fixed together by a binding band;
Fig. 66 is a perspective view illustrating a state in which the coil and the coiled heavy article pallet are fixed together by the binding band;
Fig. 67 is a descriptive diagram illustrating a step of carrying the coil together with the coiled heavy article pallet;
Fig. 68 is a partially broken side view illustrating a dry container and a carry-in/carry-out device used to execute a pallet coupled member carry-in/carry-out operation in yet another embodiment according to the present invention;
Fig. 69 is a partially broken plan view of Fig. 68;
Fig. 70 is a perspective view of a carry-in/carry-out pallet P3 in still another embodiment according to the present invention;
Fig. 71 is a front view of the carry-in/carry-out pallet P3;
Figs. 72(a) and 72(b) are partially enlarged views of Fig. 71 illustrating important sections of the carry-in/carry-out pallet P3, wherein Fig. 72(a) illustrates a state in which the carry-in/carry-out pallet is lifted above the floor of a container and Fig. 72(b) illustrates a state in which the carry-in/carry-out pallet is lowered to the floor of the container;
Figs. 73(a) and 73(b) are partially broken side views of important sections of the carry-in/carry-out pallet, wherein Figs. 73(a) and 73(b) illustrate examples of fixing a carried article by fixing means, respectively;
Fig. 74 is a partially broken perspective view of connecting means;
Fig. 75 is a partially broken perspective view illustrating another aspect of the connecting means;
Fig. 76 is a partially broken perspective view illustrating yet another aspect of the connecting means;
Fig. 77 is a perspective view of a pallet connecting unit;
Figs. 78(a), 78(b), and 78(c) are descriptive diagrams for describing aspects of an article being mounted using the pallet connecting unit, wherein Fig. 78(a) illustrate a state in which a long and bulky article is mounted and Figs. 78(b) and 78C(c) illustrate that a long article is mounted;
Fig. 79 is a side view of the connecting means in another aspect of usage;
Fig. 80 is a partially broken front view of sliding means;
Fig. 81 is a partially broken front view of the sliding means;
Fig. 82 is a plan view of first displacement means;
Fig. 83 is a plan view of a stage;
Fig. 84 is a side view of the stage;
Fig. 85 is a descriptive diagram illustrating an introducing and discharging operation using the pallet connecting unit;
Fig. 86 is a descriptive diagram illustrating the introducing and discharging operation;
Figs. 87 (a) and 87 (b) are descriptive diagrams illustrating preparation conducted in advance of the introduction of an article, wherein Fig. 87(a) illustrates preparation of articles prepared near the stage and Fig. 87(b) illustrates preparation of articles being mounted on the pallet connecting unit prepared near the stage;
Fig. 88 is a descriptive diagram for describing another aspect of an article carry-in, carry-out method and a partially broken side view illustrating a container truck and a carry-in device;
Figs. 89(a), 89(b), and 89(c) are perspective views for describing yet another aspect of the article carry-in, carry-out method, wherein Fig. 89(a) illustrates a state before start, Fig. 89 (b) illustrates a state in which a truck enters a support frame, and Fig. 89(c)s illustrates a state in which a container is detached from the truck;
Fig. 90 is a plan view of a coiled article pallet P4 in still another embodiment according to the present invention;
Fig. 91 is a perspective side view of the coiled article pallet P4 seen from an arrow II side of Fig. 90;
Fig. 92 is a perspective side view of the coiled article pallet P4 seen from an arrow III side of Fig. 90;
Fig. 93 is a perspective view for describing the pallet P4;
Fig. 94 is a perspective view illustrating a state in which pallets are piled up vertically;
Fig. 95 is a perspective view for describing function and illustrating a state in which an article is carried from a storage;
Fig. 96 illustrates a state in which a reversing machine performs a reversing operation;
Fig. 97 illustrates a state in which an article is mounted on the reversing machine;
Fig. 98 illustrates a state in which the reversing machine performs a reversing operation;
Fig. 99 illustrates a state in which an article loaded pallet is carried from the storage;
Fig. 100 illustrates a state in which the article loaded pallets are introduced into a container; and
Fig. 101 is a descriptive diagram for describing a state in which the article loaded pallets are being contained into the container.
Fig. 102 is a typical block diagram illustrating the configuration of a cargo distribution management system in the second embodiment;
Fig. 103 is a descriptive diagram for describing a period constituting the distribution period and required for each processing;
Fig. 104 is a descriptive diagram for describing a container ship departure schedule table necessary to obtain a container loading period;
Fig. 105 is a descriptive diagram for describing a consignee operating day table necessary to obtain consignee's operating and waiting periods; and
Fig. 106 is a descriptive diagram for describing an example of calculating the distribution period.

### Best Mode for Carrying Out the Invention

The detail of a cargo distribution management system, a pallet management system as well as and a computer readable recording medium and a program used therefor according to the present invention will be described hereinafter.

The type of the "cargo" handled by the cargo distribution management system is not limited to a specific type as long as the cargo can be transported by a container. In addition, the cargo can be handled as either a light article that can be carried manually or a heavy article carried by some carrying machine.

Any type of the "container" can be used as long as the container is a large-sized container for cargo export that requires a loading operation. Examples of the types of the container include a dry container, a side-open container, a flat container, and an open-top container. Further, a container transport method may be any one of a marine transport method, a ground transport method, and an air transport method, or may be an arbitrary combination of these methods.

Any type of the "pallet" can be used as long as the pallet is a carrier or a frame that can be used for container transport.

The "cargo group" is a loaded cargo or a pallet unloaded with a cargo. The "loaded cargo" is a pallet and a cargo loaded into the pallet.

Further, "vanning" means an operation for storing one of or both of the cargo and the cargo group in the container and set the cargo so as not to shift a position of the cargo during transport. To "set the cargo so as not to shift a position of the cargo" may indicate that the cargo and the like are fixed to the container to set the cargo and the like in a state in which the cargo cannot be moved unless the fixing is released. Further, to "set the cargo so as not to shift a position of the cargo" may indicate that the cargo and the like in the container is arranged so as not to generate gaps between the container and the cargo or between the adjacent cargos at least in a horizontal direction to the container to thereby prevent the shift of the cargo from occurring. "Devanning" means an operation for taking out the vanned cargo and the like in the container from the container.

The "vanning center" and the "devanning center" are facilities at which the vanning and devanning operations can be carried out, respectively. Alternatively, such facility as to be able to carry out both the vanning and the devanning may serve as both the "vanning center" and the "devanning center". Further, the facility may not be an independent facility but may be annexed to the other facility.

### 1. Configuration of cargo distribution management system

The cargo distribution management system in one embodiment according to the present invention is used in distribution management for transporting a heavy article which is a steel material, such as a flat steel plate, a steel plate coil, a rod material or a steel wire coil, manufactured by a consignor to a consignee as a cargo through a container ship.

Cargo transport in this embodiment is carried out in the following procedures.

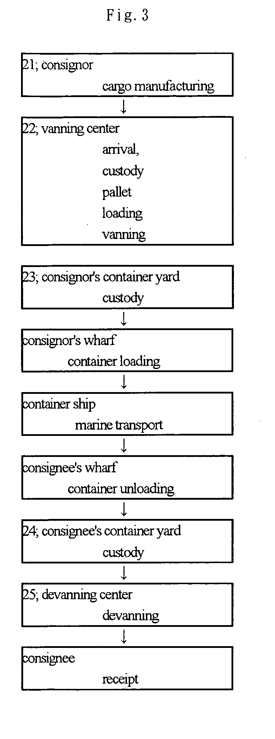

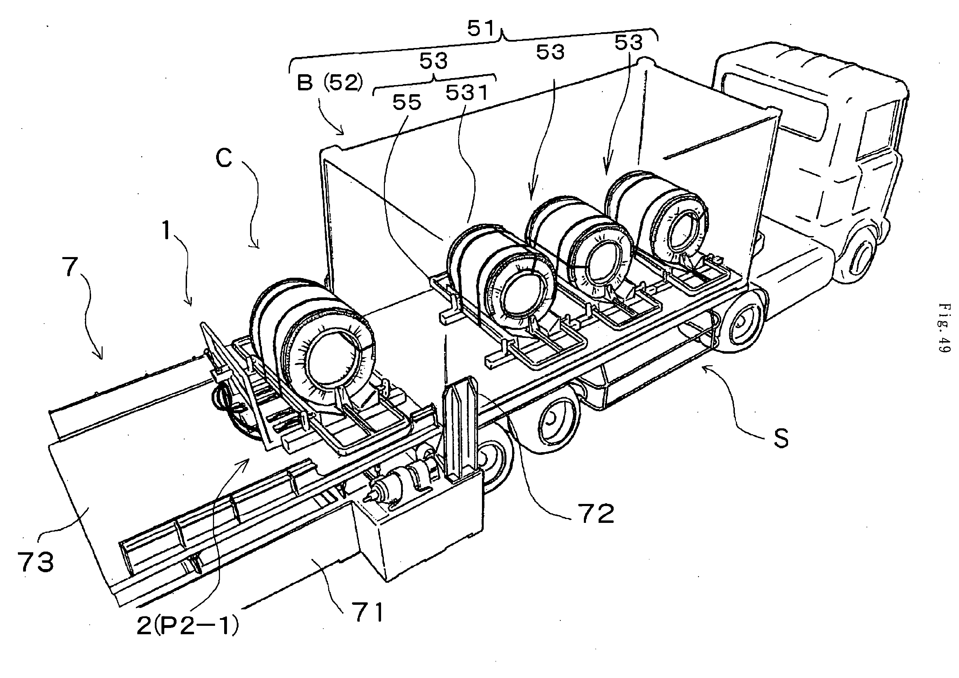

As shown in Fig. 3, cargoes 531 of the consignor 21 arrive at a vanning center 22, are kept in the center 22, loaded into a pallet 55 having no cargoes loaded thereinto (hereinafter "empty pallet 552"), and turned into loaded cargoes 53. Next, these loaded cargoes 53 are vanned into a container 52 (see, for example, Fig. 49). A cargo group 51 which is the container 52 loaded with loaded cargoes 53 is carried to a consignor container yard 23, loaded into a container ship at a wharf, and transported toward a wharf on the consignee side. In addition, on the consignee-side wharf, the cargo group 51 is unloaded to a consignee container yard 24 and delivered to a consignee devanning center 25. At the devanning center 25, devanning for unloading the loaded cargoes 53 from the container 22 is carried out.

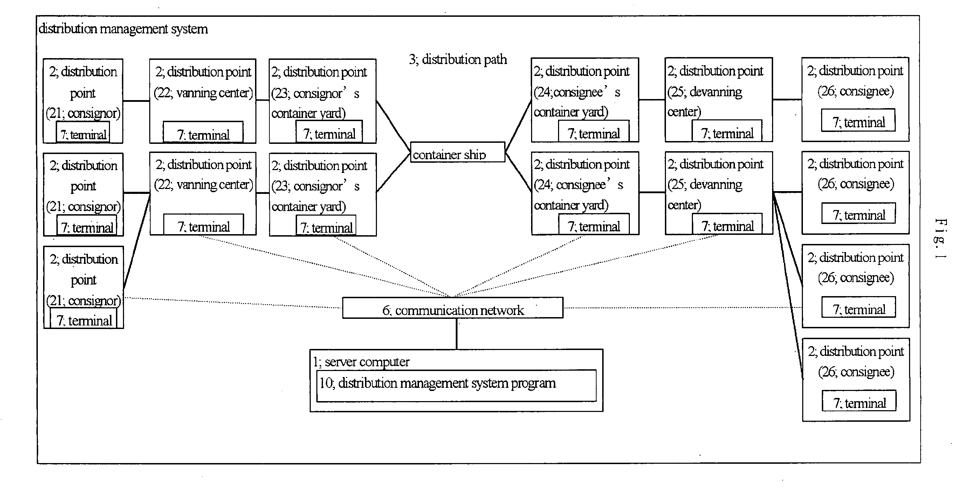

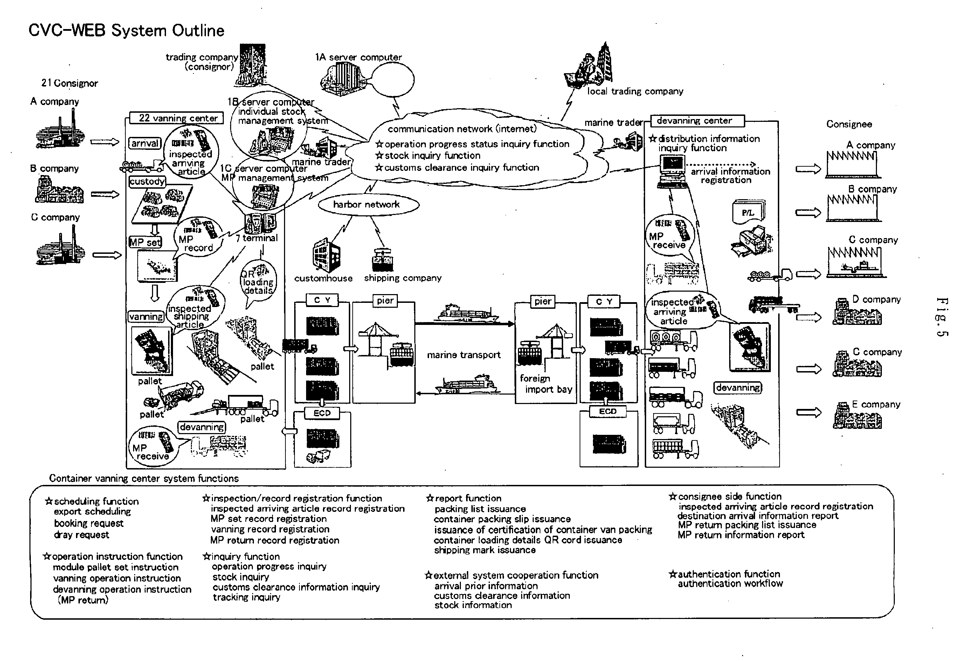

As shown in Figs. 1 and 5, the cargo distribution management system in this embodiment is constituted so that a server computer 1 and terminals 7 are connected to a communication network 6.

### (1) Server computer 1

The server computer 1 is a computer which can execute a cargo distribution management system program for actuating the cargo distribution management system and the form of the server computer 1 can be freely selected. For example, the server computer 1 may be a set of computer systems disposed at a certain location. Alternatively, the server computer 1 may be a plurality of sets of computer systems disposed at a plurality of distant locations. The plural sets of computer systems may consist of a main system which always operates and a sub-system which operates when an abnormality occurs to the main system. Alternatively, the plural sets of computer systems may distributed systems having processings of respective means distributed.

The server computer 1 can be disposed at an arbitrary location. The server computer 1 can be disposed at, for example, one of distribution points. Alternatively, the server computer 1 can be disposed at a separately prepared location such as a so-called data center.

A communication method for communicating the server computer 1 with each terminal 7 and a storage method for storing various pieces of information can be arbitrarily selected. For example, a communication method and a storage method using a XML format which enables information exchange between systems different in the form of various pieces of information can be employed.

### (2) Terminals 7

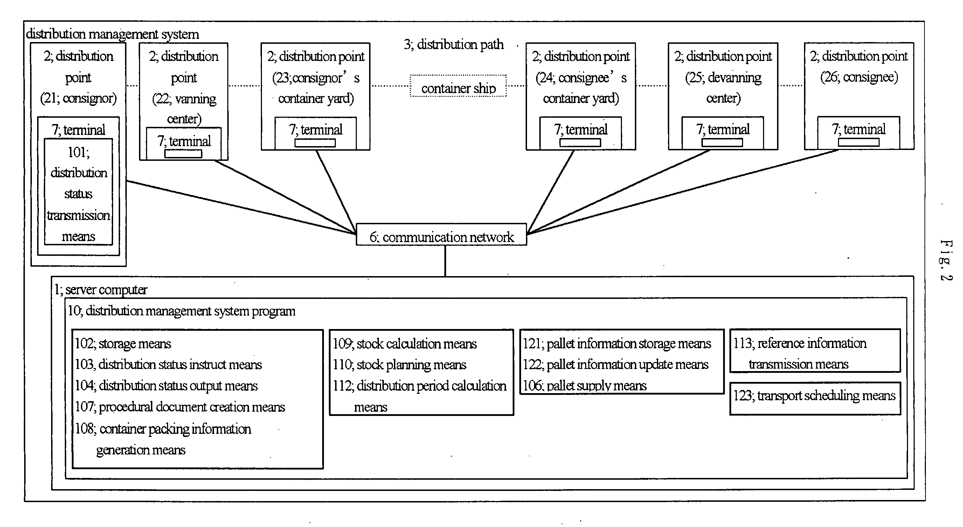

As shown in Fig. 2, each terminal 7 is a device which includes distribution status transmission means 101 and which is connected to the server computer 1 for input of distribution status information, reference thereto, and the like. As this terminal 7, an easily obtainable existing personal computer, portable terminal or the like can be used. The terminal 7 is provided at each distribution point 2.

The distribution status transmission means 101 can be stored on a storage device of the server computer 1 as a downloadable program. When the cargo distribution management system is used, the means 101 can be downloaded from the server computer 1 to the terminal 7 and executed.

It is also possible to store a program and the like necessary

for the cargo distribution management system in the terminal 7 in advance and transfer a necessary program through the communication network 6. The terminal 7 may be a terminal which uses a program, such as a World Wide Web browser, installed into an ordinary personal computer (which program will be referred to as "browser program" hereinafter). By allowing the server computer 1 to execute the program for the cargo distribution management system and setting the program to be operable from an external terminal, the program can be operated through the browser program and the object of the invention can be thereby attained. The terminals 7 shown in Figs. 2 and 5 are connected to the server computer 1 through the communication network 6. Alternatively, they may be directly connected to the server computer 1 or formed integrally with the server computer 1.

The distribution status transmission means 101 included in each terminal 7 is a means for transmitting identification information input by the terminal 7 and position information on the corresponding distribution point 2 to the server computer 1. This means can be arbitrarily selected. If the browser program stored in the terminal 7 is used, an information transmission function that this browser program inherently has can be used as the distribution status transmission means 101.

This position information is used to determine at which distribution point 2 the cargo group 51 identified by the position information is located. The position information may be replaced by an authentication means of the terminal 7. This is because the authentication means that can discriminate the respective distribution points 2 can determine at which distribution point 2 the cargo group 51 is located at the time of authentication and determine the position unitarily.

### (3) Communication network 6

The communication network 6 is a network employed for the communication between the server computer 1 and the terminals 7 and may be of an arbitrary type. Further, the number of types is not limited to one but plural types of communication networks can be selected and/or simultaneously used. Examples of the types include public networks such as the Internet and a telephone network and various dedicated lines. The communication network 6 may be either a wired network or a wireless network.

### (4) Identification information and identification information storage medium 54

The "identification information" may be any information as long as the respective cargo groups 51 can be identified by the information. The identification information can contain an arbitrary content as information. This identification information can contain arbitrary information such as a product name, a product number and other information such as product specifications (e.g., a weight and a size) as information on each cargo group 51. Further, the identification information can contain a consignor name, a consignee name, a position in the container, and the like as information on transport.

Further, the identification information can contain the pallet number of the pallet 55 to be used, the container number of the container 52 to be used, and the like.

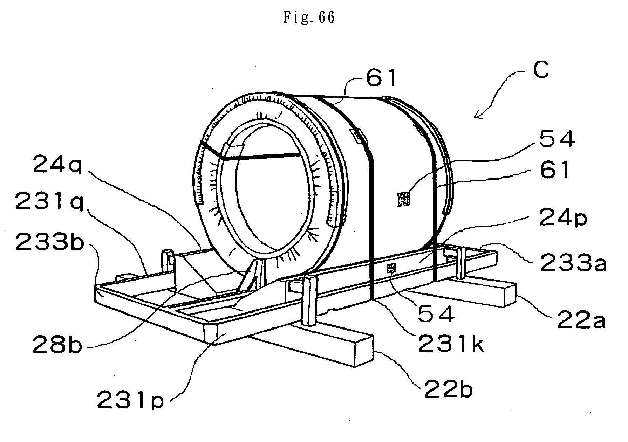

An identification information storage medium 54 which stores the identification information can be provided on each loaded cargo 53 (which may be each cargo 531 or each pallet 55) as shown in Fig. 66 or on the container 52 (not shown). Byproviding the identification information storage medium 54 on each loaded cargo 53, it is possible to refer to the identification information and thereby know the detail of the cargo group 51 even if a material, such as a slip, attached to the cargo group 51 is unavailable. This identification information storage medium 54 can store either all pieces of identification information or only part of identification information. The reason for storing only part of the identification information is that all pieces of information contained in the identification information are not always necessary.

Further, the identification information storage medium 54 may be provided on either only one of the cargo group 51 and the container 52 or both of them. If a plurality of identification information storage mediums 54 are provided, pieces of identification information different in content can be stored in the mediums 54 provided on the cargo 531, the pallet 55, and the container 52, respectively. For example, the product number of the cargo 531 can be stored in the medium 54 provided on the cargo 531, the pallet number of the pallet 55 can be stored in the medium 54 provided on the pallet 55, and the product numbers, pallet numbers and the like of the cargoes 531 and the pallets 55 contained in the container 52 can be stored in the medium 54 provided on the container 52.

As the identification information storage medium 54, any one of arbitrary storage mediums such as a barcode, a magnetic medium and a semiconductor memory can be used. This is because such a storage medium can store the identification information on each cargo group 51 and the identification information can be referred to even if it is small in size. Among these storage mediums, it is preferable to use the barcode since it can be provided at low cost.

The barcode used as the identification information storage medium 54 may be either a one-dimensional barcode or a two-dimensional barcode. The two-dimensional barcode is preferable rather than the one-dimensional barcode since the former has a storage capacity sufficient to store all contents of the identification information without selectively storing the contents. If the semiconductor memory is used as the identification information storage medium 54, a medium, such as a RFID tag and a non-contact IC card, that can read stored information using an electromagnetic wave or the like is more preferable.

### (5) Pallet 55

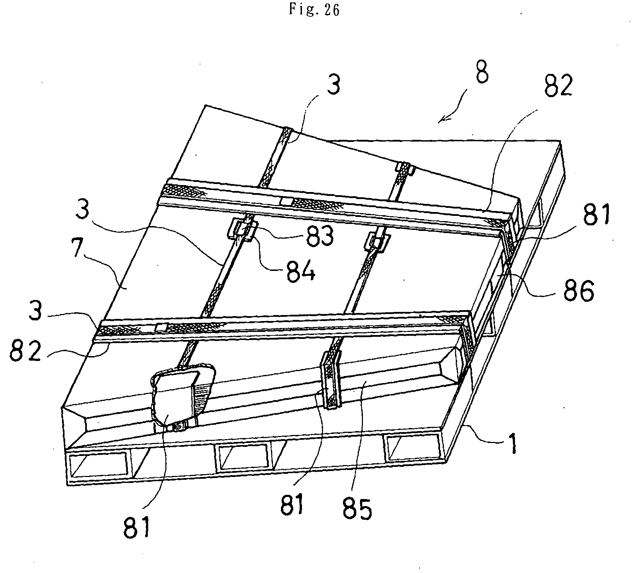

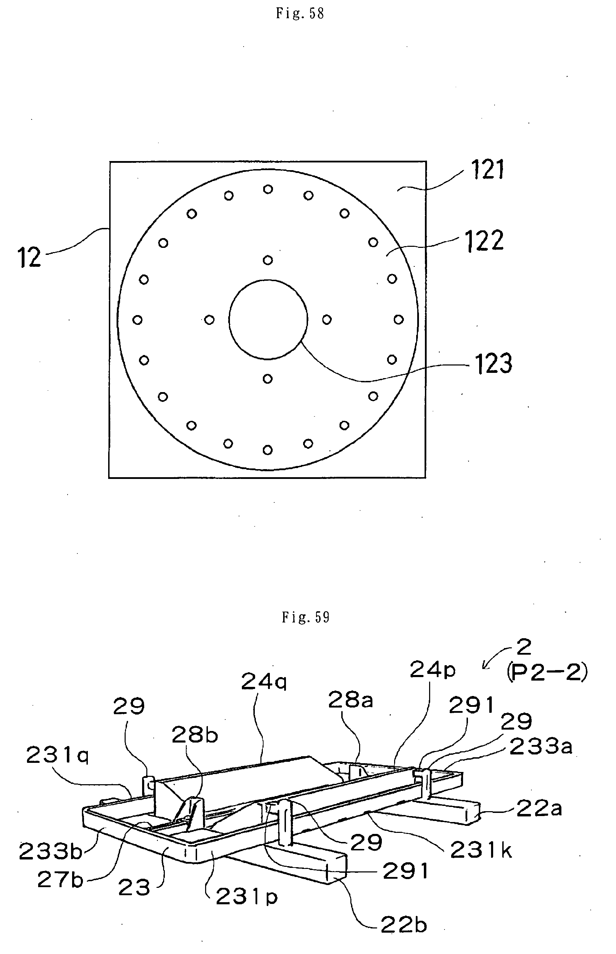

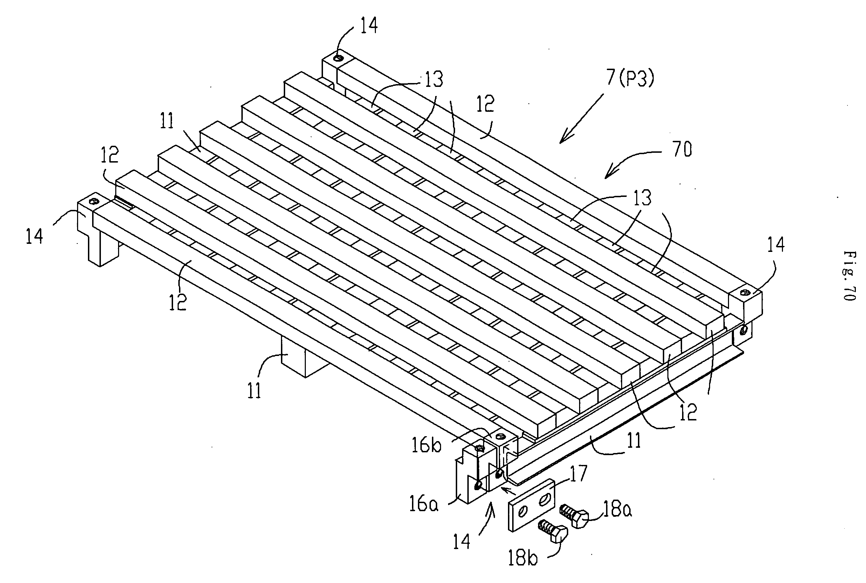

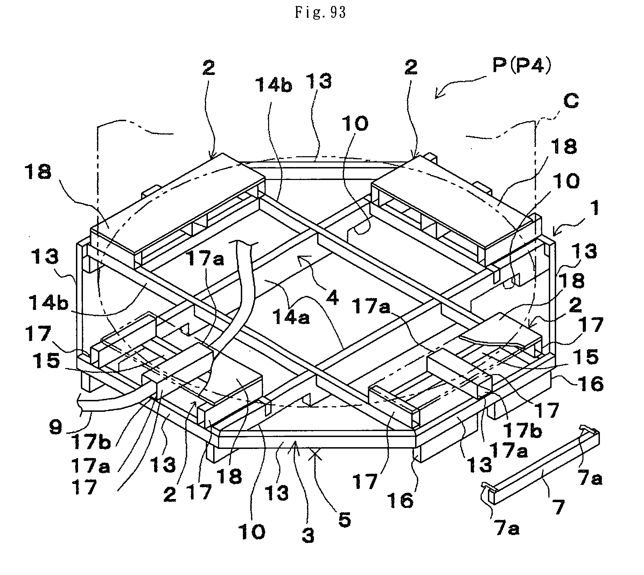

The "pallet" may be of an arbitrary type as long as it is used as a carrier of cargoes to be distributed. Examples of the pallet 55 include a standardized module pallet. Examples of the standardized module pallet include a steel plate pallet shown in Fig. 26, a steel plate coil pallet shown in Fig. 59, a specific cargo dedicated pallet such as a wire rod pallet shown in Fig. 93, and a general-purpose pallet shown in Fig. 70.

### (6) Cargo distribution management system program

As shown in Fig. 2, the cargo distribution management system program executed by the server computer in the cargo distribution management system includes an storage means 102, a distribution status instruct means 103, a distribution status output means 104, a procedural document creation means 107, a container packing information generation means 108, a stock calculation means 109, a stock planning means 110, a distribution period calculation means 112, a pallet information storage means 121, a pallet information update means 122, a transport scheduling means 123, and a reference information transmission means 113.

### (a) Storage means 102

The storage means 102 is a database that stores identification information and distribution status information. This distribution status information is information that contains at least position information on the identification information distribution points 2. The storage means 102, in accordance with the instruction from the distribution status instruct means 103, the distribution status output means 104, the procedural document creation means 107, the container packing information generation means 108, the stock calculation means 109 and the reference information transmission means 113, stores or updates the identification information and the distribution status information received from the distribution status instruct means 103, the distribution status output means 104, the procedural document creation means 107, the container packing information generation means 108, the stock calculation means 109 and the reference information transmission means 113 , the storage means 102 updates the stored distribution status information etc., and also the storage means 102 outputs the stored distribution status information etc. to the instruction source.

### (b) Distribution status instruct means 103

The distribution status instruct means 103 is a means for receiving the identification information and the distribution status information transmitted from the distribution status transmission means 101 of the terminal 7, instructing storage means 102 to store the received distribution status information in the storage means 102, and instructing storage means 102 to update the distribution status information stored in the storage means 102.

Concrete examples of storing and updating the distribution status information include inspected article registration, operation instruction record registration, booking request, dray request and the like.

### (c) Distribution status output means 104

The distributions status output means 104 is a means for outputting a result obtained by processing the distribution status information stored in the storage means 102 according to an instruction from the distribution status transmission means 101, the pallet information update means 122 or the like. The obtained result is output to a display or printer (not shown) connected to the server computer 1 or the terminal 7, the pallet information update means 122, and the like.

### (d) Procedural document creation means 107

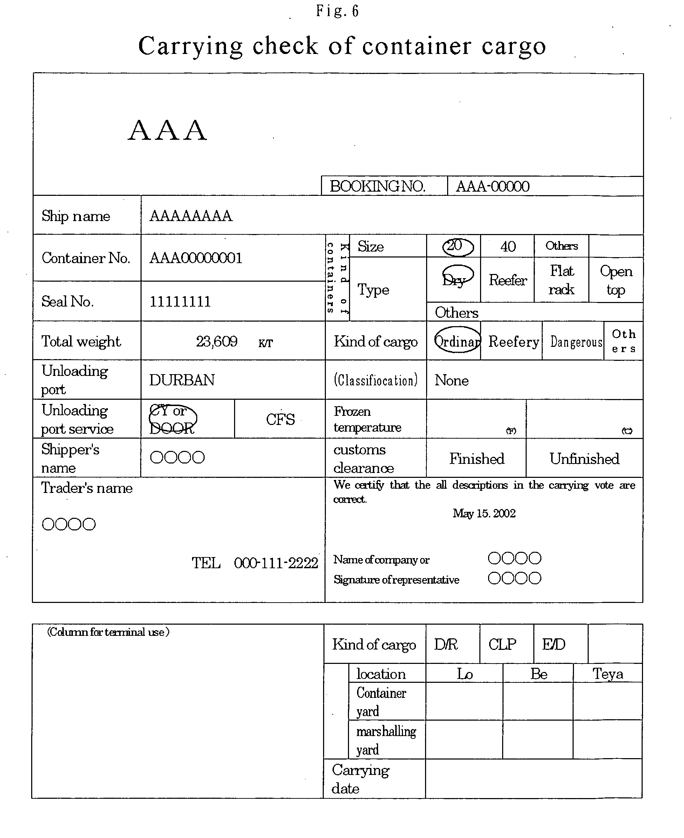

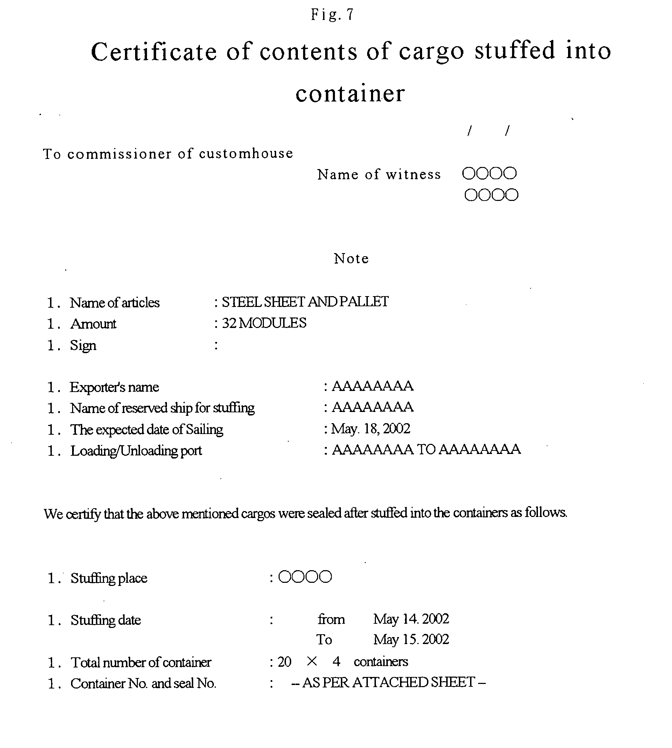

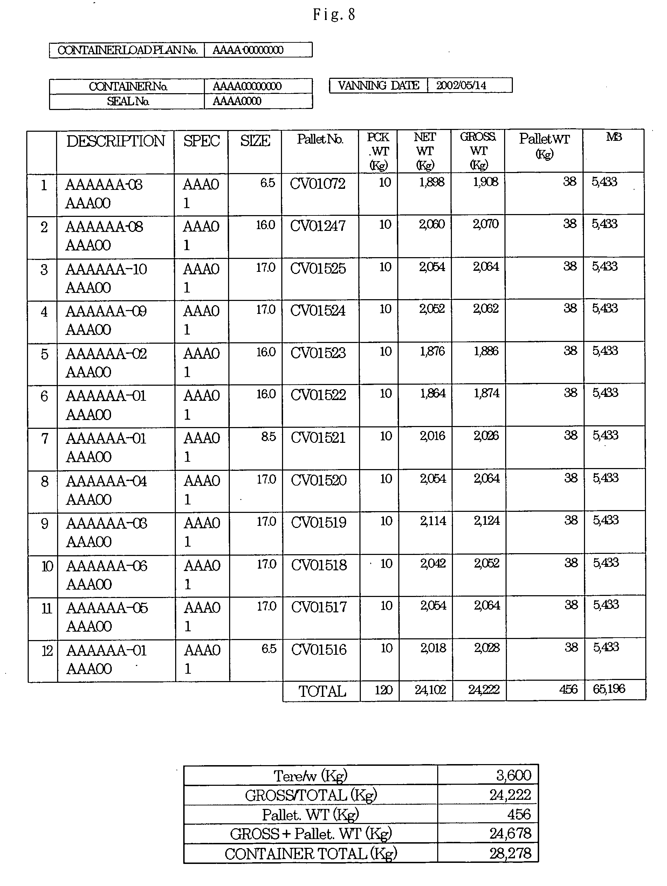

The procedural document creation means 107 is a means for creating a document necessary for transport based on the distribution status information stored in the storage means 102. Examples of the document include a container cargo packing slip shown in Fig. 6, a container-contained cargo certification-of-content shown in Fig. 7, and a packing list shown in Fig. 8. The document needs to be submitted to a customs clearance, a container ship company and the like. The created document is output to the display or the printer (not shown) connected to the terminal 7 at each distribution point 2 as well as a portable storage medium (e.g., a flexible disk or a memory card) and the like.

### (e) Container containing information generation means 108

The container packing information generation means 108 is means for generating container packing information on a container in which the loaded cargoes 53 are arranged based on the distribution status information stored in the storage means 102 so that the total weight of the container 52 that contains the loaded cargoes 53 and the position of the center of gravity of the container 52 can fall within respective predetermined ranges. Obtained information is output to the display or printer (not shown) connected to the server computer 1 or the terminal 7 and the like. The obtained result is also stored in the storage means 102. It is noted that the container packing information can be output to an arbitrary device for vanning.

Further, since ordinarily distributed containers are owned by transport companies such as ship owners, they cannot be often used for different transport destinations. Due to this, the container packing information also contains container identification information for identifying containers that store the loaded cargoes 53. This container identification information is input when the container is prepared.

### (f) Stock calculation means 109

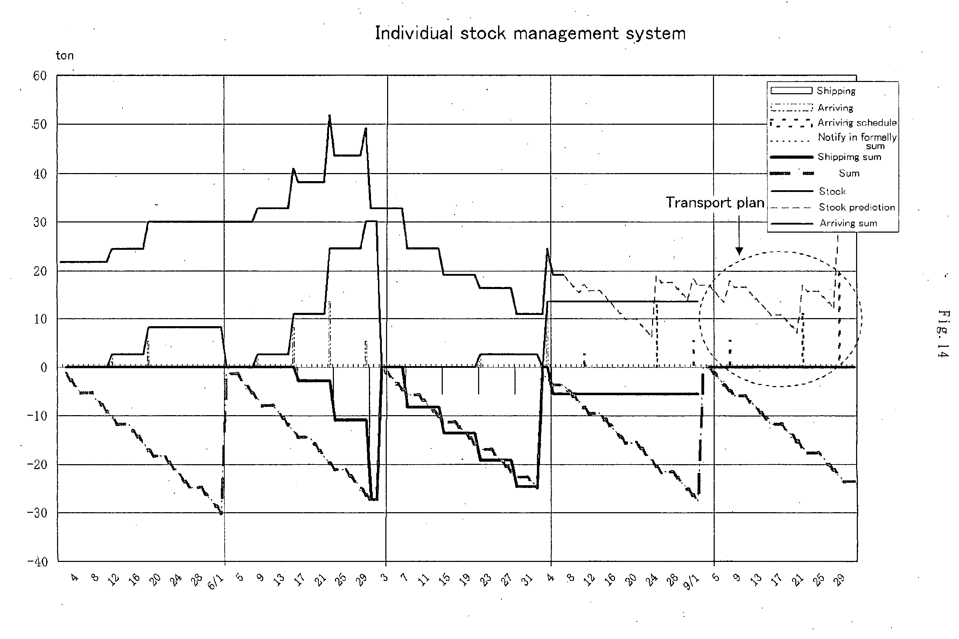

The stock calculation means 109 is a means for calculating stock information on the loaded cargoes 531 of the consignee 26 based on the distribution status information stored in the storage means 102 and stock information attained from the consignee. Obtained information, such as a graph shown in Fig. 14 is output to the display or printer (not shown) connected to the server computer 1 or the terminal 7 and the like.

This stock information is information on the change of stock to date and the like as shown in Fig. 14.

### (g) Stock planning means 110

The stock planning means 110 is a means for creating a stock plan based on the stock information obtained by the stock calculation means 109 and the distribution period obtained by the distribution period calculation means 112. This stock plan is a plan related to a time and a quantity for supplying the cargo 531 to the consignee 26 so as to be able to maintain a stock quantity almost constant such as a plan to the effect that the stock quantityof the consignee 26 is about a one-month quantity of stock. By the planning means, the security of pallets and containers necessary for the supply, the decision of a vanning time and the like are also planned.

If the stock quantity of the consignee 26 decreases, a time of use of the cargoes 531 and a quantity of the cargoes 531 can be estimated based on the ordering plan of the consignee 26. In addition, if the stock quantity of the consignee 26 increases, the stock plan can be created by determining the time and the quantity for supplying the cargoes 531 to the consignee 26 in light of a delay caused by the transport period since the visit intervals and the transport period of the container ship are known in advance. The created stock plan can be transmitted to the container packing information generation means 108 and thereby instruct the means 108 to generate container packing information.

Concrete examples of the stock plan include a vanning plan creation processing, a vanning operation instruction processing, and an export scheduling processing.

The obtained stock plan is output to the display or printer (not shown) connected to the server computer 1 or the terminal 7 and the like.

### (h) Distribution period calculation means 112

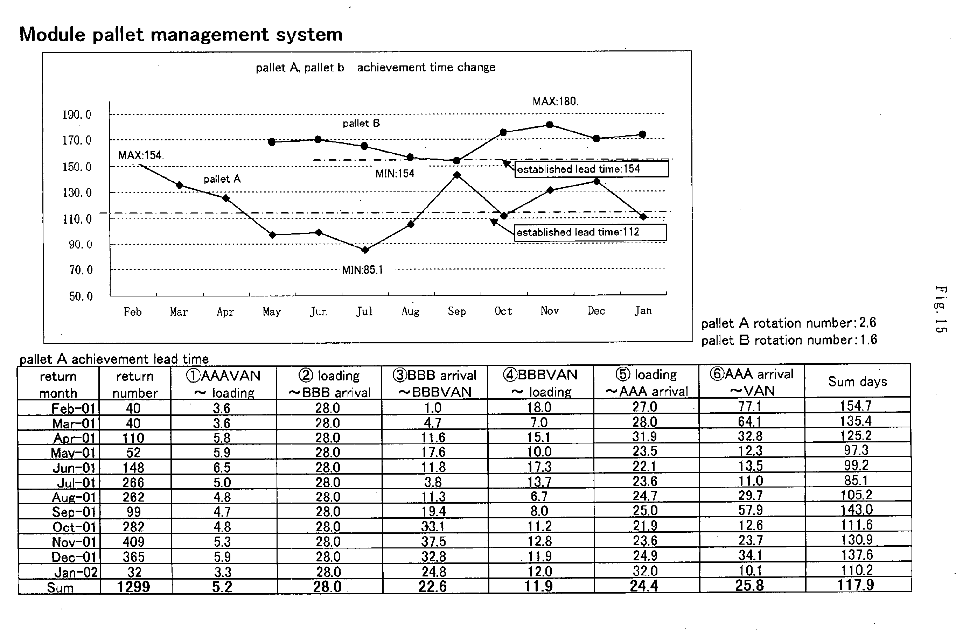

The distribution period calculation means 112 is means for calculating the distribution period (also referred to as "lead time") of the cargo group 51 between the respective distribution points 2. An obtained result, e.g. , a graph shown in Fig. 15, is output to the display or printer (not shown) connected to the server computer 1 or the terminal 7 and the like.

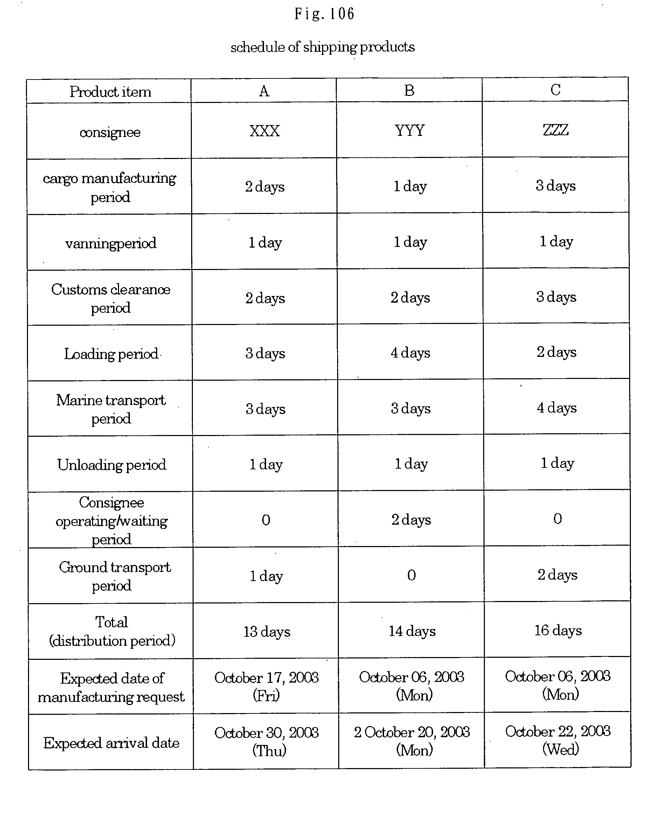

As shown in Fig. 106, this distribution period can be obtained by determining a distribution processing period required for each distribution processing element in cargo distribution and adding up the distribution processing period for the respective distribution processing elements.

Examples of this "distribution processing element" include a cargo manufacturing element, a vanning element, a customs clearance element, a loading element, a marine transport element, an unloading element, a consignee operating/waiting element, and a ground transport element. This is an element in a period obtained by dividing the distribution period according to predetermined processings.

The distribution processing period for this distribution processing element can be arbitrarily selected. Examples of the period include a cargo manufacturing period, a vanning period, a customs clearance period, a loading period, a marine transport period, an unloading period, a consignee operating/waiting period, and a ground transport period. The distribution processing period for the distribution processing element can be arbitrarily determined. For example,a method for determining the period based on a period obtained from previous distribution in advance, or the like can be used.

In addition, the distribution processing period can be varied according to the types of distribution target cargos or according to the consignees. If there are different types of cargos, periods required for manufacturing and the like often differ, accordingly. If consignees are different, transport distances differ and the periods vary, accordingly.

### (i) Pallet information storage means 121

The pallet information storage means 121 is a database which stores pallet information including the use record and present position of the pallet 55.

### (j) Pallet information update means 122

The pallet information update means 122 is a means for updating the pallet information stored in the pallet information storage means 121 based on the distribution status information output from the distribution status output means 104. In addition, the means 122 creates a document related to the return of the pallet at the time of unloading the cargoes 531 loaded on the pallet 55 and updating the pallet information as the empty pallet 552.

### (k) Reference information transmission means 113

The reference information transmission means 113 is a means for transmitting the distribution status information to the reference terminal 7 connected to the communication network 6 in accordance with a reference request signal transmitted from the reference terminal 7. The reference information transmission means 113 also transmits the distribution status information stored in the storage means 102 and the output of the distribution status output means 104.

Further, the reference information transmission means 113 can specify the user of the terminal 7 and restrict the range of the terminal information which can be referred to or updated by employing the arbitrary authentication means at the time of connecting the terminal 7 to the server computer 1.

### (1) Transport scheduling means 123

The transport scheduling means 123 is a means for making a schedule for vanning or the like based on the cargo transport plan created by the stock planning means 110 or the like so that the cargo group 51 can be loaded when the container ship arrives at a wharf in accordance with the container ship arrival date.

This schedule is planned so that a stock volume by which the cargo group 51 is stored at the consignee side can fall within a certain range. Based on this schedule, the shipping date of the cargo group 51 can be determined. For example, by acquiring a stock utilization plan of the consignee from the consignee, stock consumption can be predicted. At the same time, a stock shortage date can be calculated. The shipping date or the like can be obtained by subtracting the distribution period from the stock shortage day so that an additional cargo group 51 can arrive at the consignee on this shortage date.

### 2. Cargo management

The operation of the cargo distribution management system in this embodiment constituted as stated above will be described.

The operation of t*he cargo distribution management system can be classified to cargo management, individual stock management, pallet management, and information exchange.

The cargo management is to perform processings necessary for the distribution of the cargo and manage related to the processings.

### (1) Preprocessing

Before the cargo distribution management system distributes the cargo, the system inputs and stores specifications of the cargo 531 to be handled in the storage means 102 in advance. The heavy article that is the cargo 531 handled in this embodiment is a standard article. Therefore, by inputting a weight per unit, the type(s) of the pallet 55 to be used and the like, they can be repeatedly utilized without any change.

### (2) Processing during cargo arrival

Before the cargo 531 arrives from the consignor 21, the consignor 21, which manufactures the heavy article that is the cargo 531, can grasp the type, volume and the like of the cargoes 531 to be exported in advance. This information can be acquired by an arbitrary method in advance and the identification information can be prepared prior to the arrival. This information can be also input based on identification information on the consignor (by, for example, a barcode attached to the cargo) that is added by the consignor. These pieces of information are input by the distribution status transmission means 101 of the terminal 7 and stored in the storage means 102 by the distribution status instruct means 103.

When the cargo 531 arrives at the vanning center 22, an inspected article registration processing is carried out. In this inspected article registration processing, identification information for various types of management is stored in the storage means 102. Namely, pieces of identification information such as cargo specifications (a type, a weight, a volume, etc.), a consignor name, and a consignee name are input by the distribution status transmission means 101 of the terminal 7.

The distribution status transmission means 101 transmits the input identification information together with information indicating an arrival state to the distribution status instruct means 103. The distribution status instruct means 103 stores the transmitted identification information in the storage means 102.

Further, the loaded cargoes 53 are appropriately arranged using the container packing information generation means 108 for arranging the loaded cargoes 53 into the container so as to keep preferable equilibrium in the center of gravity.

A pallet supply means 106 for the pallet management to be described later prepares the empty pallet 552 suitable for the arriving cargoes.

The transport scheduling means 123 obtains the volume and the like of the cargo group 51 to be exported in accordance with the timing when the ship arrives and makes a schedule for the export. The stock planning means 110 or the other arbitrary means prepares the container to be used for transport.

Furthermore, the identification information storage medium 54 is prepared. To be specific, the identification information is printed as a two-dimensional barcode.

### (3) Processing during cargo loading into pallet

The cargoes 531 that arrive are loaded onto and fixed to the empty pallet 552 prepared by the pallet supply means 106 to provide the loaded cargoes 53. Thereafter, the distribution status transmission means 101 of the terminal 7 notifies the distribution status instruct means 103 that vanning can be prepared. In addition, the distribution status transmission means 101 notifies the pallet information update means 122 that the empty pallet 552 is used.

### (4) Processing during vanning

The distribution status transmission means 101 of the terminal notifies the distribution status instruct means 103 of the container identification number, seal number and the like of the prepared container 52 to update the identification information as container identification information.

The procedural document creation means 107 creates and outputs documents necessary for distribution at the customs clearance such as a container cargo packing slip and a packing list. For example, the procedural document creation means 107 creates the container cargo packing slip shown in Fig. 6. In the container cargo carry-in slip, a ship owner's name, a ship name, a container type, a container number, a gross weight, an unloading port name and the like are described. Further, as shown in Fig. 8, the packing list in which the explanation of the articles in the container 52, a weight per article, a total weight and the like are mentioned is created.

These documents can be acquired by the terminal 7 provided at the vanning center 22, the consignor container yard 23 or the like. These documents are not necessarily created at the time of vanning. This is because the documents can be submitted to the customs clearance or the like as long as they can be output in response to an output instruction issued from the vanning center 22, the consignor container yard 23 or the like.

At the time of the vanning, the container identification number and the like of the container 52 are compared with the container identification information referred to through the terminal 7 or the like so as to check whether the container is a correct container. This comparison can prevent the loaded cargoes 53 from being vanned into an erroneous container and transported to an erroneous transport destination.

### (5) Processing on destination arrival

After the container 52 loaded with the loaded cargoes 53 arrives at the consignee, the terminal 7 of the consignee is used to notify the distribution status instruct means 103 of the arrival of the loaded cargoes 53 to allow the distribution status instruct means 103 to update the identification information.

### 3. Individual stock management

The individual stockmanagement includes functions to grasp and predict stock change records on a consignor side and a consignee side using the stock planning means 110, so that an appropriate volume of the next vanning shipment can be calculated.

### (1) Stock change

Further, the individual stock management system simulates an on-the-spot stock change prediction using the consignor-side shipment plan based on demand prediction data and a stock record report from the consignee side, and creates and executes a shipment plan so that the on-the-spot stock can be kept at an appropriate level. It is thereby possible to realize a structure in which necessary articles can be delivered to a consignee-side client by a necessary quantity at a necessary time.

In a transport route using the container ship, the container ship leaves port at a fixed date and arrives at the consignee after a predetermined number of days. Due to this, a lag occurs during the transport period. In addition, even if the cargoes are already forwarded, they may be stored in the container yard or in the ship. For this reason, even if the stock is calculated based on the number of cargoes in the vanning center and the number of cargoes in stock at the consignee, an accurate stock status cannot be attained unless the number of cargoes being distributed and sequentially arriving are considered.

A stock prediction processing in this embodiment is capable of grasping even the cargo group located in the ship or the like as the stock at the vanning center by using the distribution status information and keeping the stock of the consignee to be in a minimum quantity without shortage.

As shown in Fig. 14, to perform this stock prediction processing, past stock quantities of the consignor, the quantity of cargoes that are being transported by the container ship and the like are obtained, a stock change estimated from the day of arrival of cargoes manufactured in response to a consignee's order is calculated, and the calculated stock change is output simultaneously with a graph.

This stock prediction can be made for cargoes of a specific type or the overall stock of a warehouse of each consignee. By keeping cargoes of a specified type, a lack of stock of the cargoes can be prevented. Further, by predicting the overall stock, a shipment plan which can keep minimum stock can be created.

### (2) Distribution period

A table related to a distribution period (lead time) can be created based on the identification information. As shown in Fig. 15, this table is a result that the distribution period calculation means 112 obtains a distribution period (e.g., the number of days) required to transport cargoes between the respective distribution points 2 based on the identification information stored in the storage means 102.

By obtaining such a distribution period graph, it is possible to easily grasp an interval which has a problem with the distribution period.

As indicated by dotted lines of Fig. 15, this graph also includes a result of calculating a distribution period after a present time and obtaining a transport schedule so that the stock of the consignee can fall within a certain range. By obtaining a period required for ordinary distribution as the distribution period, it is possible to reckon backward a cargo group shipping date so that the cargo group arrives at the consignee as planned and construct a transport schedule.

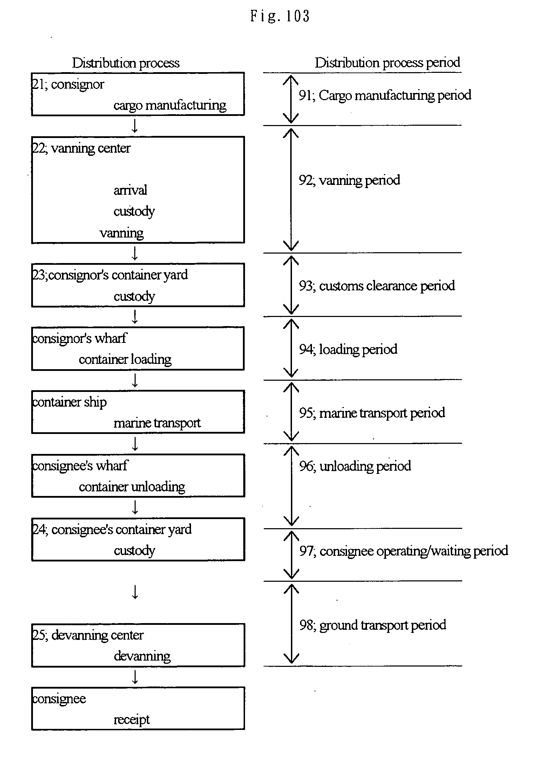

This distribution period is obtained by adding up distribution processing periods for the respective processings in the cargo distribution. As shown in Fig. 103, examples of the distribution processing periods include the cargo manufacturing period 91, the vanning period 92, the customs clearance period 93, the loading period 94, the marine transport period 95, the unloading period 96, the consignee operating/waiting period 97, and the ground transport period 98. These distribution processing periods are indicated by the number of days or time. The distribution processing periods vary according to the types of the cargo group 51 to be transported or the consignees. In some cases, the ground transport period 98 is not set because the consignee container yard 24 and the devanning center 25 are located adjacent each other.

The cargo manufacturing period 91 is a period necessary for the consignor 21 to manufacture the cargo 531.

The vanning period 92 is a period necessary to load the cargo 531 into the pallet 52 and the perform vanning the cargo 531 to the container 52 at the vanning center 22.

The customs clearance period 92 is a period required to take necessary procedures for clearing the cargo group 51 through the customs.

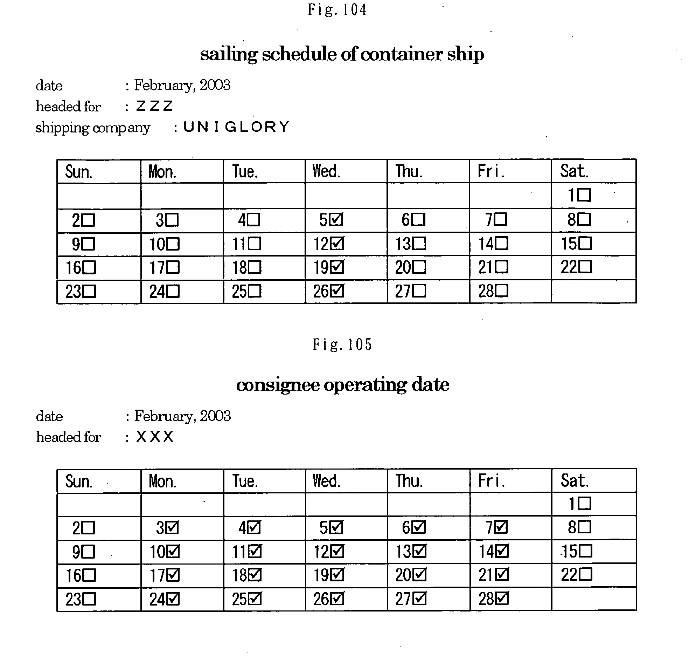

The loading period 94 is a period required before the cargo group 51 is loaded into the container ship after the cargo group 51 is cleared through the customs. This period 94 also includes a container ship arrival period (see, for example, Fig. 104) and a period required for loading.

The marine transport period 95 is a period for which the cargo group 51 is transported by the container by sea.

The unloading period 96 is a period for which the cargo group 51 is unloaded from the container ship.

The consignee operating/waiting period 97 is a period for which the transport is awaited so that the cargo group 51 arrives at the consignee in a time zone in which the consignee operates. As shown in, for example, Fig. 105, a consignee's operating schedule table is prepared and the period 97 is calculated so that the cargo group 51 arrives at the consignee on a consignee operating date based on the table.

The ground transport period 98 is a period necessary to transport the cargo from the container yard to the devanning canter 25.

These distribution processing periods can be obtained by, for example, estimating the periods in advance. Therefore, as shown in Fig. 106, the distribution processing period can be obtained by calculating the respective distribution processing periods and obtaining a sum of the distribution processing periods.

### 4. Pallet management

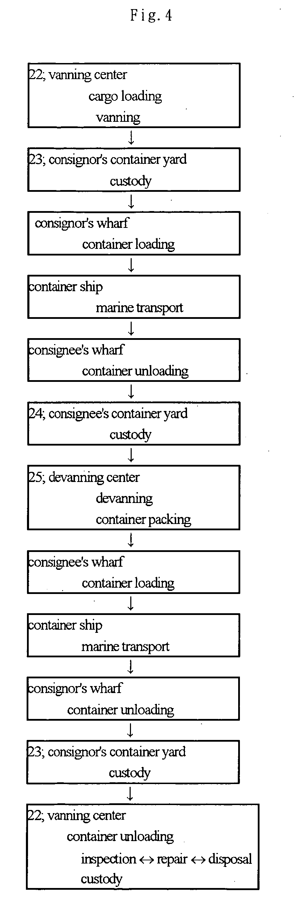

The pallet management system included in the cargo distribution management system in this embodiment can manage the pallet used in distribution. The management of the pallet will be described with reference to a flow chart related to pallet handling shown in Fig. 4.

### (1) Pallet manufacturing

The pallet used in the cargo distribution management system is allocated an individual pallet number and stored in the vanning center after the pallet is manufactured. Later management operations are carried out based on this pallet number. The pallet management system connects to the pallet information update means 122 of the server computer 1 through the terminal 7 to store and register the pallet number in the pallet information storage means 121. In addition, during the registration, the pallet is indicated as an empty pallet 552, i.e., a pallet into which cargoes can be loaded.

### (2) Processing on cargo arrival

When the cargoes 531 arrive from the consignor, the pallet management system instructs the pallet supply means 106 to supply the empty pallet 552. The pallet supply means 106 refers to the pallet information update means 122, searches for the empty pallet 552, and supplies the empty pallet 552. In addition, the pallet update means 122 changes the pallet information stored in the pallet information storage means 121 so that it is indicated that the pallet 55 is in use.

### (3) Processing during pallet return

After the cargoes 531 loaded on the pallet 55 are unloaded from the pallet 55, the pallet 55 is returned to the distribution point 2 such as the vanning center 22 that maintains the pallet 55. The pallet return is carried out by containing the pallets 55 together with the other pallets again into one of the containers storing general cargoes 531 and transporting the container to the vanning center 22 or the like. The reason for returning the pallet is to decrease a container empty state and to increase a container utilization rate.

The pallet information update means 122 changes the pallet information stored in the pallet information storage means 121 so as to indicate that the pallet 55 is being returned. At the same time, the documents related to the pallet return to be submitted to the customs clearance or the like are created.

### (4) Pallet inspection

The pallet 55 which has been returned is subjected to an inspection as to whether the pallet 55 is recyclable. At the same time, the pallet information update means 122 changes the pallet information in the pallet information storage means 121 so as to indicate that the pallet 55 is being inspected.

The pallet 55 which is determined to be recyclable as a result of the inspection is stored after the pallet information update means 122 changes the pallet information so as to indicate that the pallet 55 is an empty pallet. The pallet 55 which is determined to be recyclable if it is repaired is stored after being repaired. At the same time, repair information on the pallet 55 is added to the pallet information stored in the pallet information storage means 121.

### (5) Pallet disposal

The pallet 55 which is determined to be non-recyclable is disposed of after the pallet information update means 122 changes the pallet information so as to indicate that pallet 55 is disposed of.

By thus managing the pallets using the pallet identification numbers and thereby grasping the number of pallets and the present number of pallets at each location to enable optimum volume management, it is possible to rationalize cost. In addition, by recording histories of such items as repair, it is possible to grasp the degradation degree of each pallet and utilize manufacturing and modification of a new pallet.

### 5. Information exchange

In the cargo distribution management system in this embodiment, if the terminal 7 is connectable to a communication line, the terminal 7 can refer to information such as the distribution status information by connecting the terminal 7 to the server computer 1 and using the reference information transmission means 113. Further, the terminal 7 can input information necessary to the system from systems, equipment and the like other than this system, and transmit information thereto. For example, the system of the consignee 26 can connect to the information provision means through the communication line and acquire the distribution management information. In addition, the terminal 7 can connect to the system of the consignee 26 and provide information necessary for generation of the identification information to the system of the consignee 26.

### (1) Inquiry processing

A computer which can execute the browser program is connected, as the terminal 7 (reference terminal), to the server computer 1, whereby the computer can perform an identification information inquiry processing. In the inquiry processing, the computer authenticates an inquirer and restricts a reference range for each container or each cargo according to the inquirer.

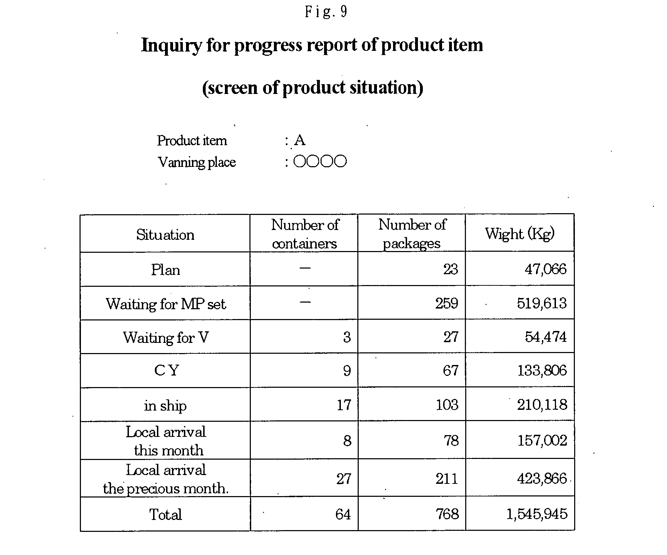

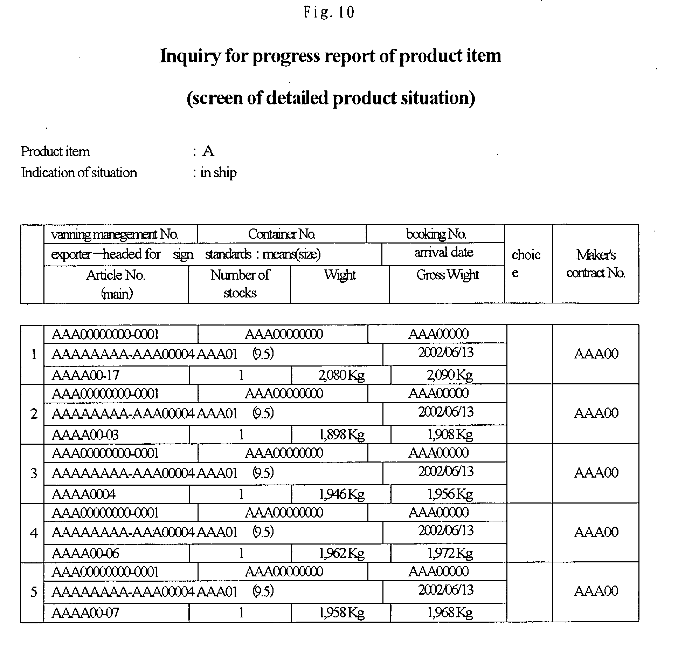

As shown in Fig. 9, in this inquiry processing, a progress state as to which distribution point 2 or the like the cargo group 51 of a specific type being distributed resides at, and the like can be obtained in the form of a list. By selecting an arbitrary distribution point 2, information on details of the residing cargo group 51 can be obtained as shown in Fig. 10.

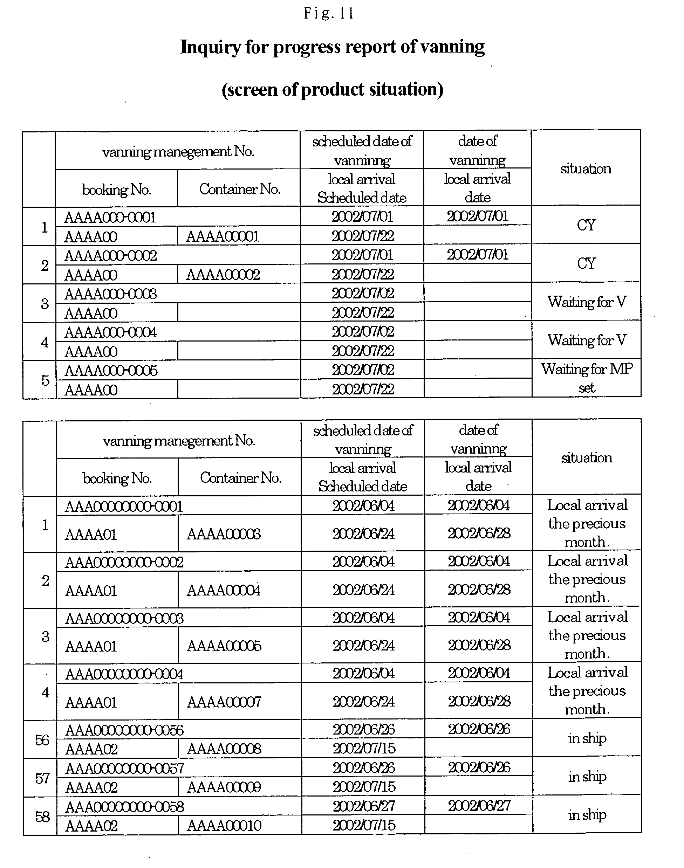

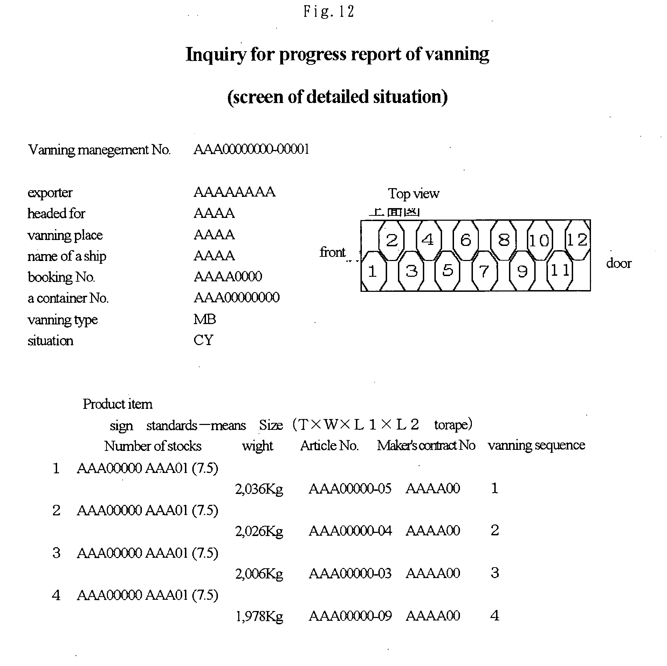

As shown in Fig. 11, by inputting the type of the cargo 531, the progress state of the cargo 531 can be obtained. As shown in Fig. 12, by designating the container 52, details of the cargo group 51 contained into the container 52 can be obtained. In addition, arrangement information which can indicate at which position the cargo group 51 is located in the container 52 can be obtained.

By referring to these pieces of information, it is possible to easily grasp from which container 52 the cargo 531 necessary for the consignee 26 is unloaded.

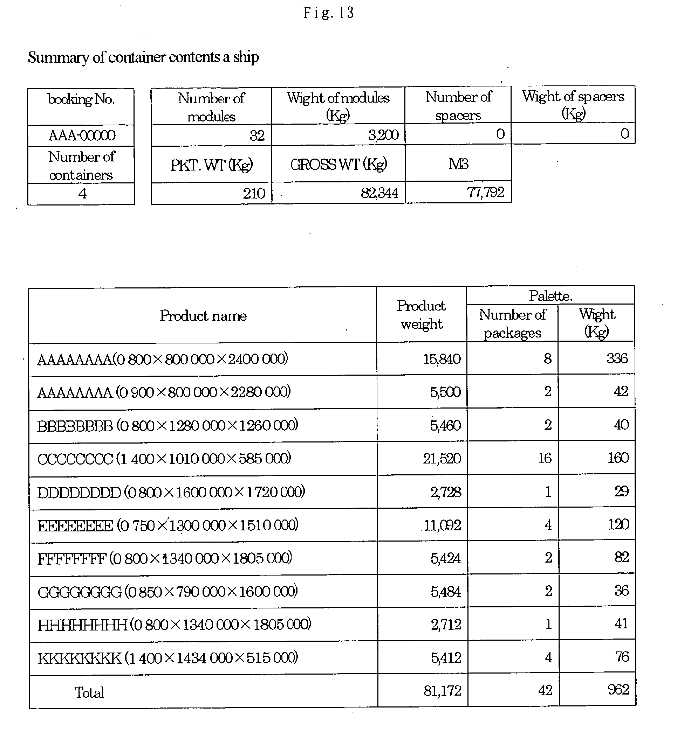

Furthermore, as shown in Fig. 13, in this inquiry processing, details of the cargo 531 in a certain progress state (on the container ship in Fig. 13) can be obtained in the form of a list. The details are necessary when an inquirer inquires of a specific distribution point 2, the container ship or the like.

### (2) Information exchange processing

The information exchange processing is a processing for establishing information exchange with the system and terminals used in the other consignors 21, consignees 26 and the like that are not directly related to this cargo distribution management system by transmitting and receiving the identification information.

Many pieces of the identification information handled by the cargo distribution management system are shared with the information on the cargoes 531 that the consignors 21 or the consignees 26 already handle. Due to this, by transferring information on the cargoes 531 from the management system or the like for the cargoes 531 used by the consignors 21 or the consignees 26 through the communication network or the like, it is possible to eliminate labor for inputting the information again on the cargo distribution management system side.

In addition, if the system on the consignor 26 receives the identification information handled by the cargo distribution management system, the system can grasp containers 52 and cargoes 531 to be received without inputting the information again in advance, thus facilitating improving receipt operation efficiency.

### 6. Pallet for container and container carry-in and carry-out method

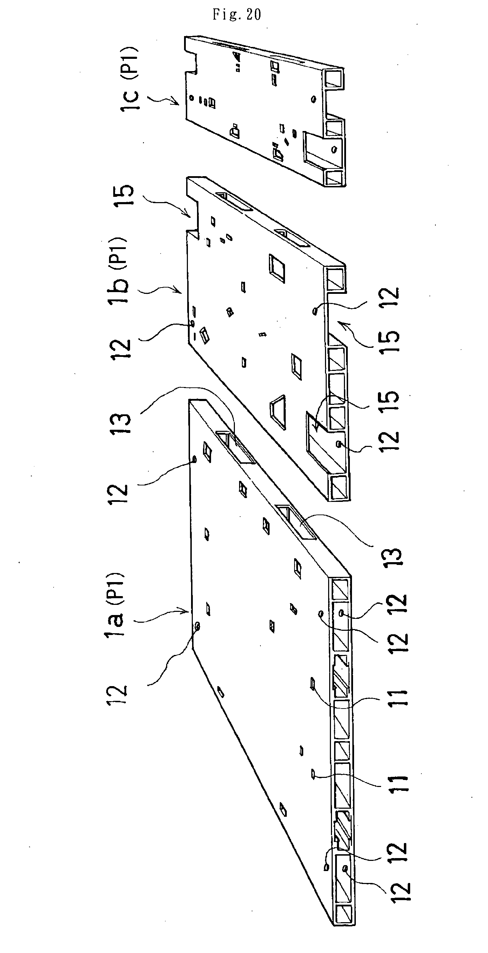

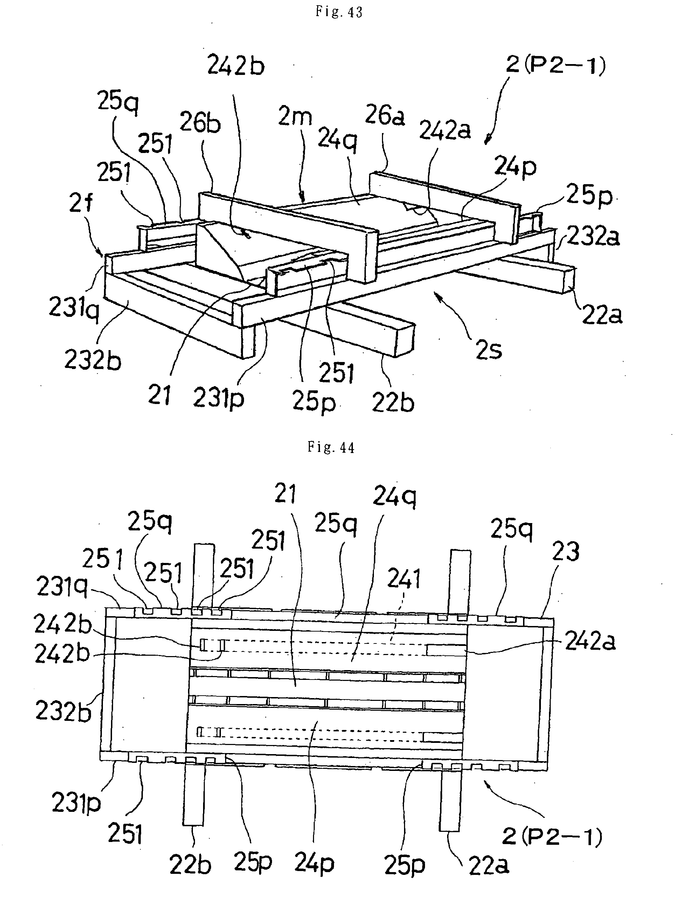

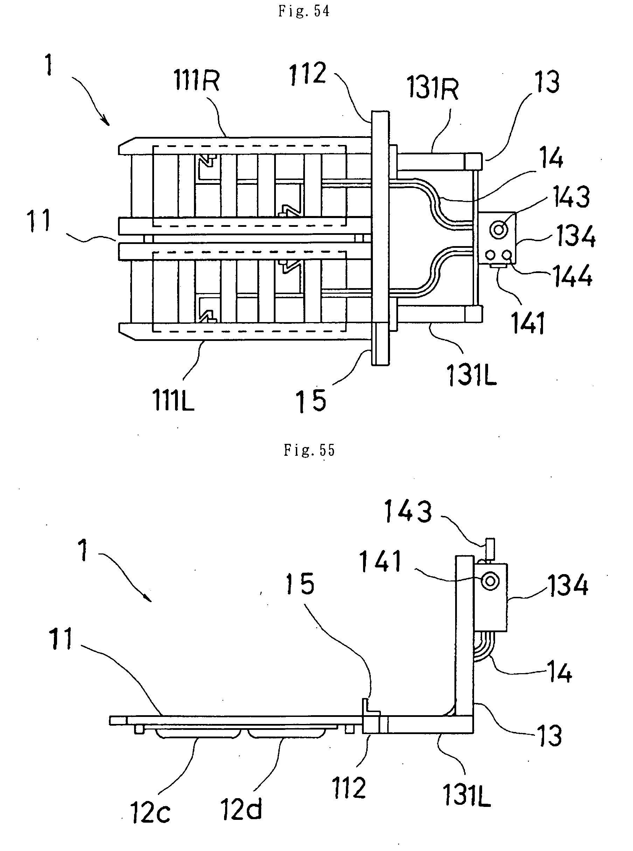

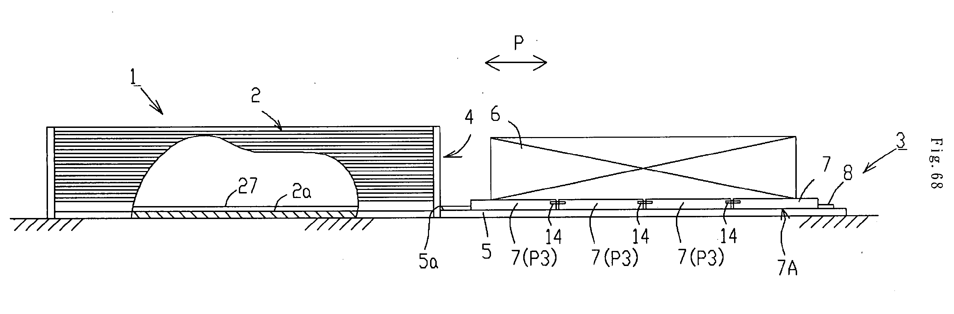

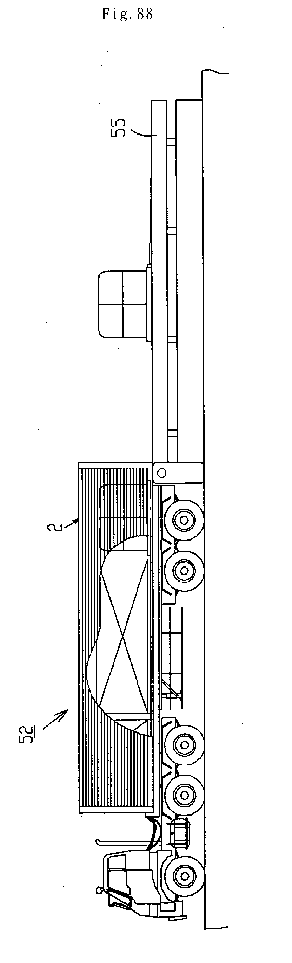

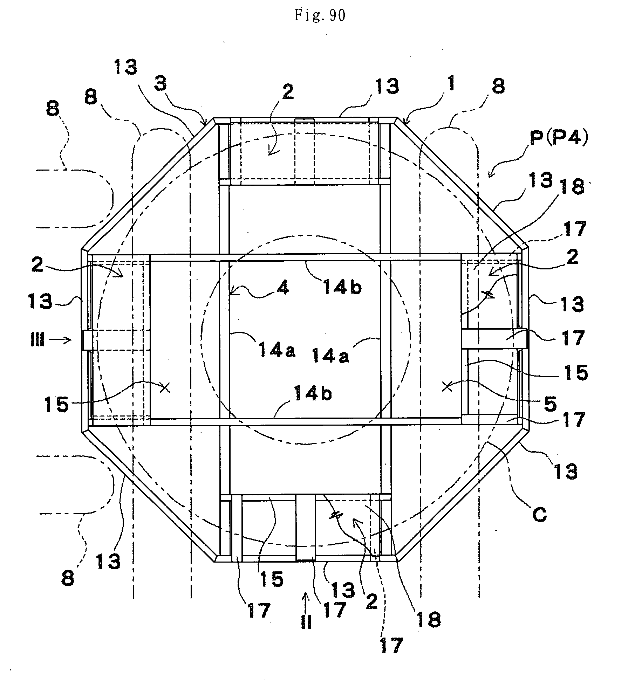

Concrete examples of various types of container pallets P1 to P4 and of carrying these pallets in and out of the container or the like will be described. Concrete examples of the pallet P1 will be described with reference to Figs. 20 to 42, those of the pallet P2 will be described with reference to Figs. 43 to 67, those of the pallet P3 will be described with reference to Figs. 68 to 89, and those of the pallet P4 will be described with reference to Figs. 90 to 101.

### [Pallet P1]

### (1) Pallet structure

Fig. 20 illustrates examples of the pallet P1 (hereinafter "pallets 1a, 1b, and 1c") in this embodiment. The pallet P1 is used for transporting heavy articles such as steel plates or the like. The pallet P1 is divided to three types of pallets shown in Fig. 20 to have 3/3, 2/3, and 1/3 sizes of the size of the container (which may be a carrier or a module) and denoted by 1a, 1b, and 1c, respectively. The pallet 1a is substantially equal to the container in the size of a plane form, a combination of the pallets 1b and 1c is substantially equal to the container in the size of the plane form, and even a combination of three pallets 1c is substantially equal to the carrier in the size of the plane form.

As illustrated in Fig. 20, each pallet has a plurality of hoop band through steel plate fixing holes (hereinafter "band fixing holes") 11 at appropriate positions outlining peripherally the different plane figures of a plurality of different stacked plates having different cutting forms, respectively so that any of different kinds of plates may be selected, stacked and fixed on a single pallet. Namely, these three types of pallets 1a, 1b, and 1c constitute a general-purpose pallets capable of fixing up to 17 types of steel plates having different cutting forms. In Fig. 20, reference numeral 12 denotes a carrier fixing bolt hole. The 3/3 pallet 1a has four bolt holes 12 formed on the upper surface of the pallet and other four bolt holes 12 also formed on the lower surface of the pallet near edges. Thus, the pallet is fixed at four points. On the other hand, the 2/3 or 1/3 pallet 1b or 1c smaller than the 3/3 pallet 1a has two bolt holes 12 formed on the upper surface of the pallet near edges diagonally to be opposed to positions of notches 15 and two bolt holes 12 similarly formed on the lower surface of the pallet. In this case, the pallet is fixed at two points.

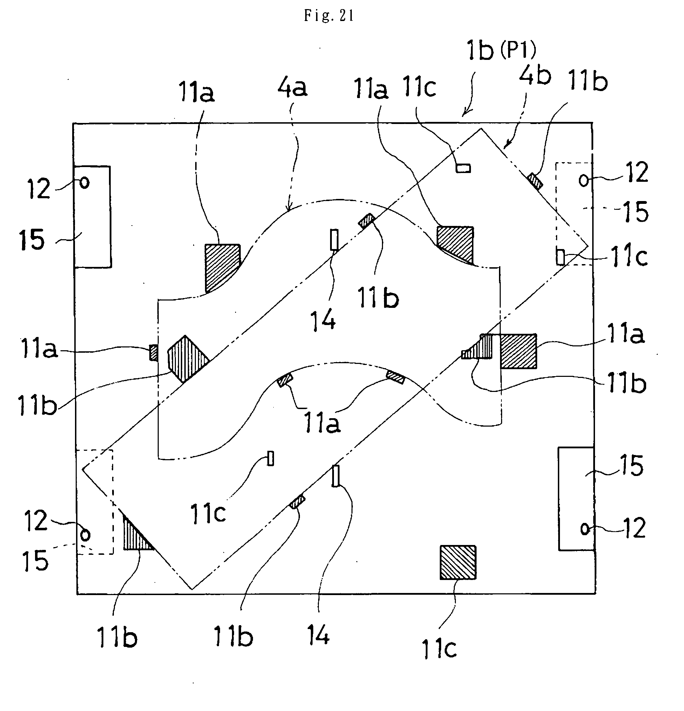

Fig. 21 illustrates another example of the 2/3 pallet 1b. In Fig. 21, the pallet 1b has a plurality of fixing holes 11a for fixing a stack of steel plates 4a and a plurality of fixing holes 11b for fixing another stack of steel plates 4b as well as a plurality of fixing holes 11c for fixing yet another stack of steel plates. Further, the pallet 1b shown in Fig. 21 has carrier fixing bolt holes 12 and notches 15. Carrier fixing positioning holes 14 are used for positioning if the rear surface of the pallet is a mount and fixing surface for mounting and fixing the stack of steel plates. Carrier fixing positioning holes are similarly formed on the rear surface of the pallet 1b.

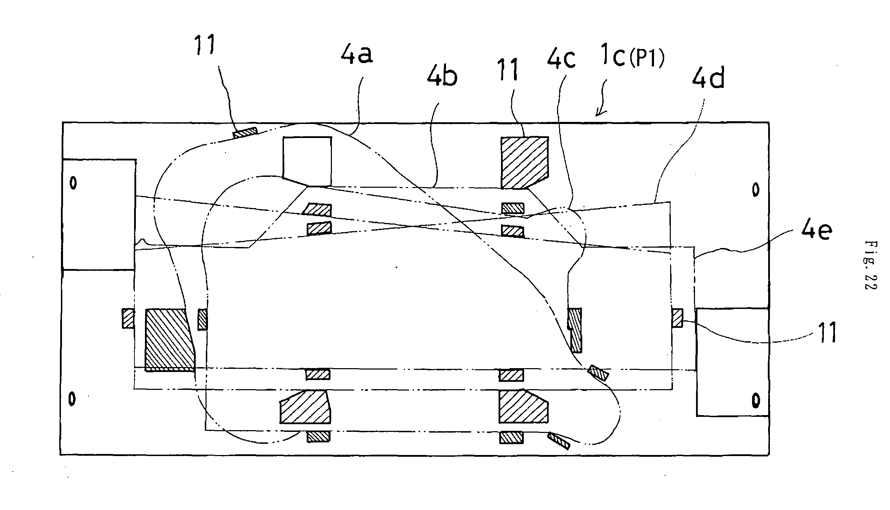

Fig. 22 illustrates another example of the 1/3 pallet 1c. In Fig. 22, the pallet 1c has 20 fixing holes 11 of various types for fixing, for example, five types of stacks of steel plates 4a, 4b, 4c, 4d, and 4e having different forms.

### (2) Carrier structure

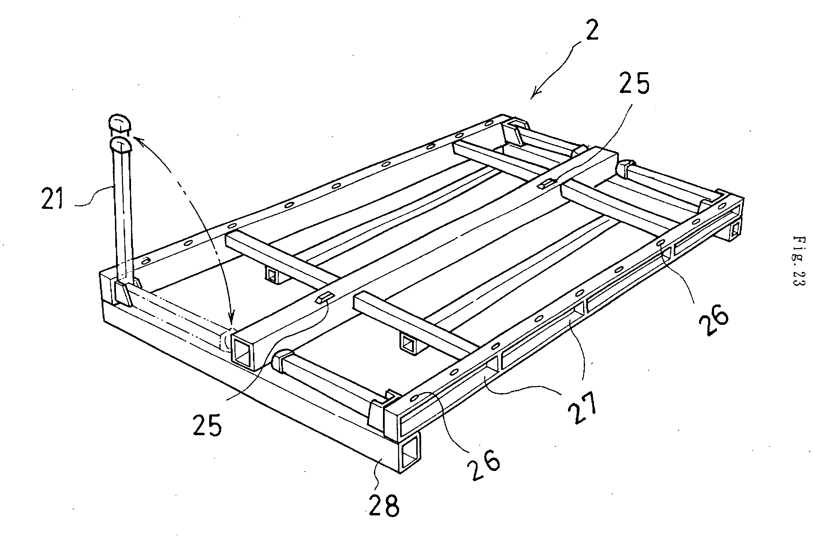

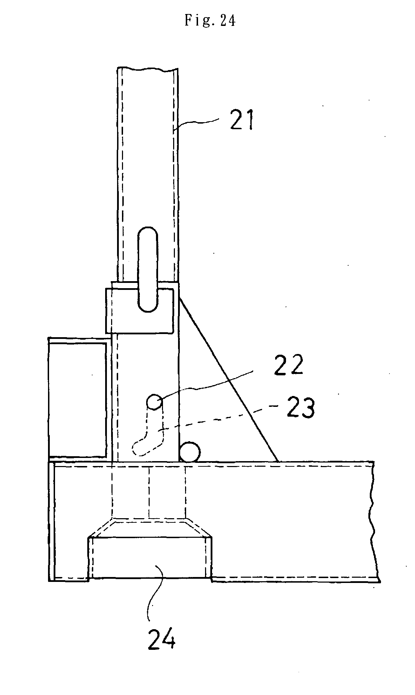

Fig. 23 illustrates one example of the carrier 2 in an embodiment according to the present invention. A loading/unloading length (longitudinal (depth) length) of this carrier 2 is a length quadrisected relative to (a quarter length of) the length of the container in a loading/unloading length direction. The carrier 2 has a transverse dimension slightly shorter than the corresponding inner size of the container. Namely, when four carriers 2 are combined and arranged in into a longitudinal row, the combined carriers 2 are substantially equal in size to the plane form of the container. A total of eight carriers 2 are piled into two layers making up four columns in a single container, each carrier being loaded with a stack of steel plates. As shown in Figs. 23 and 24, the carrier 2 has inwardly collapsible erectors 21 at its four corners. The erectors when erected allow stacks of steel plates to be piled one upon another. In Fig. 24, reference numeral 22 denotes a washer and 23 denotes a groove. When the erector 21 is raised upward, the erector 21 is relocated so that the washer 22 reaches the topmost position of the groove 23. This action allows the erector 21 to be collapsed rightward. Reference numeral 24 denotes a hole that accommodates the top of an erector attached to another carrier 2. With the erector tops inserted in the holes 24, the carriers 2 are piled one upon another in a securely layered manner.

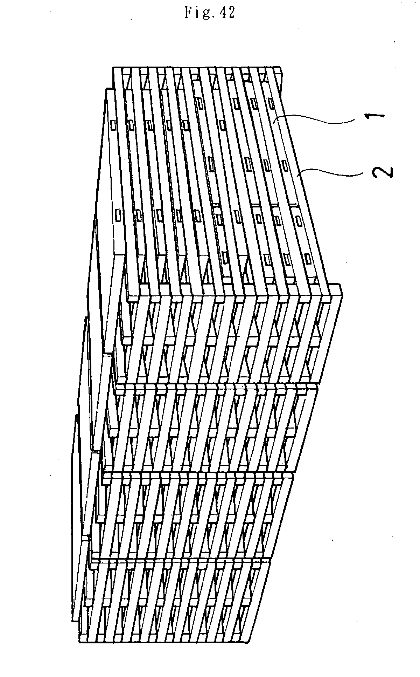

When the carriers are piled one upon another with their erectors 21 extended, there occurs no interference between the stacks of steel plates carried by the stacked carriers. This prevents damage to the stacks of plates in transit, thus keeping them in good quality. Legs 28 at two edges of the carriers prevent the top plates of the pallets from getting into contact with one another when the emptied carriers together with the pallets are piled in a layered manner as shown in Fig. 42 for return haulage. In Fig. 23, reference numeral 25 denotes a pallet fixing positioning projection. The projections 25 eliminate the need for the conventional tedious task of positioning the pallet as it is being fixed to a carrier. Reference numeral 26 denotes a pallet fixing bolt hole. The bolts 26 are spaced equally apart in the longitudinal direction of the carrier. The bolt holes 26 are arranged so as to address possible future changes in the pallet dimensions. For example, the bolt hole spacing will accommodate pallets of one-half size, one-fourth size (plus two-fourths and three-fourths sizes), and one-fifth size (as well as two-fifths, three-fifths and four-fifths sizes). In Fig. 23, reference numeral 27 denotes a hole that accommodates the fork tips of a fork-lift truck for loading, moving and unloading.

### (3) Methods for packing stacks of steel plates, containing the stacks of steel plates into container, and transporting container

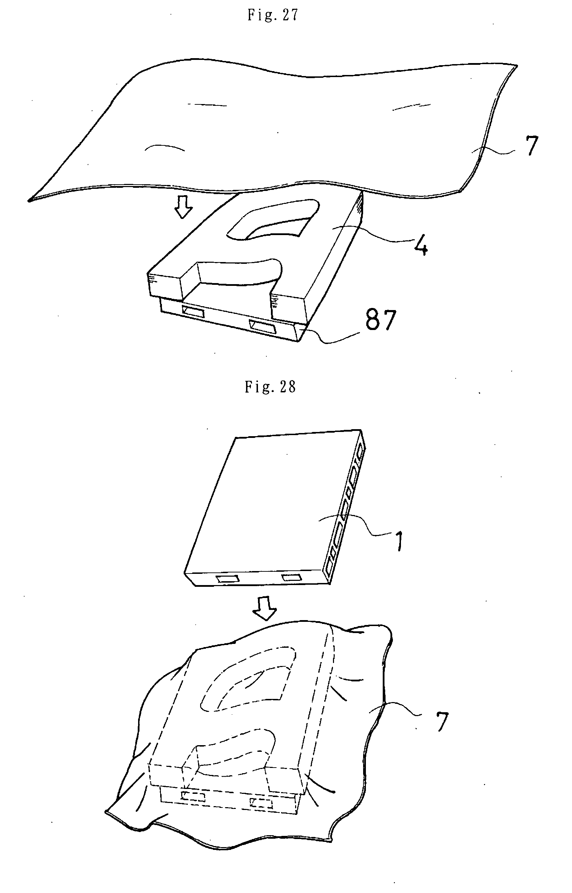

Methods for packing stacks of steel plates, containing the stacks of steel plates into a container, and transporting the container will be described with reference to Figs. 27 to 42.

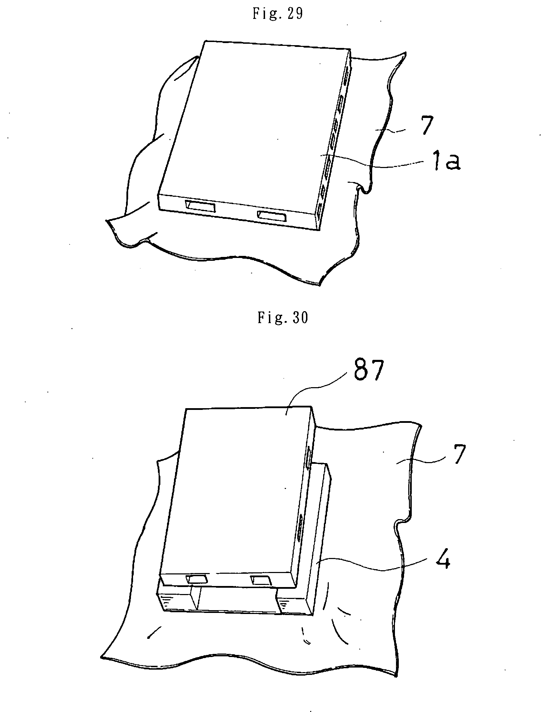

As shown in Fig. 27, numerous stacks steel plates (that are stacked on a predetermined pallet 87 and that may be moved about by a forklift) is covered with a packing sheet 7 from above. The pallet 1a shown in Fig. 20 is positioned and set on the packed stack using a crane or a forklift (Figs. 28 and 29).

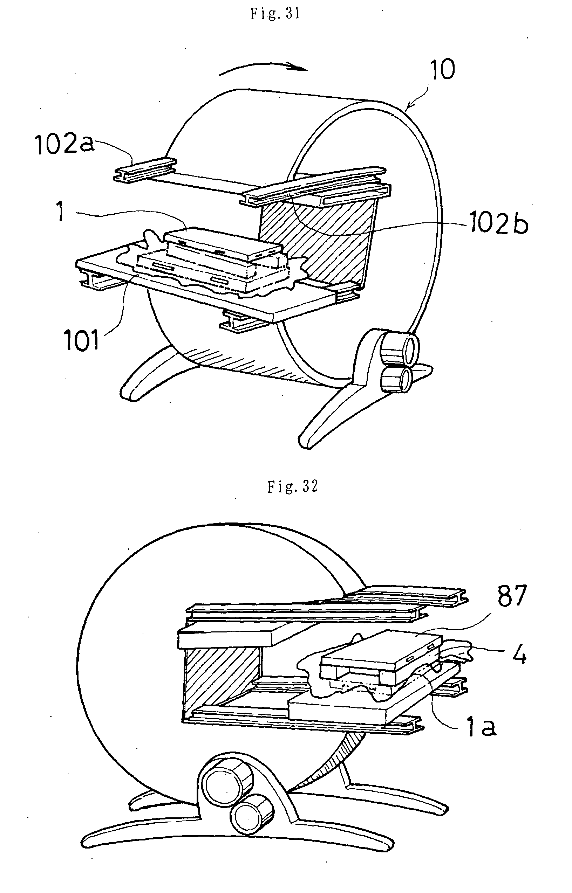

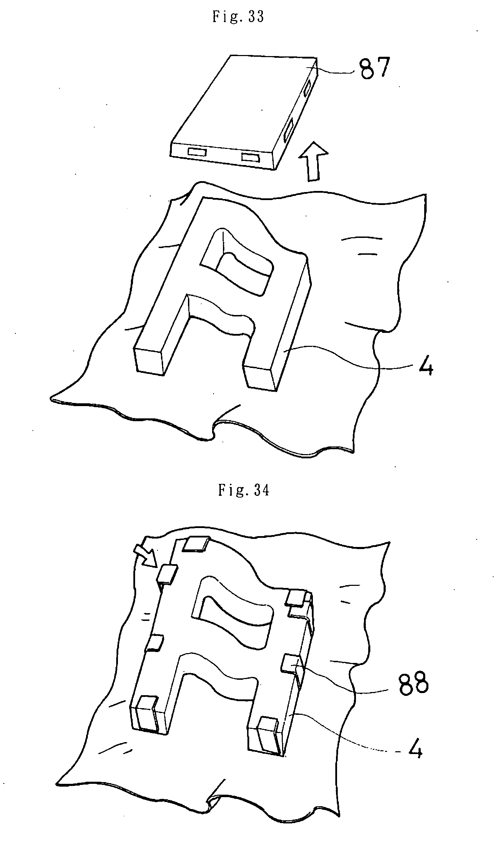

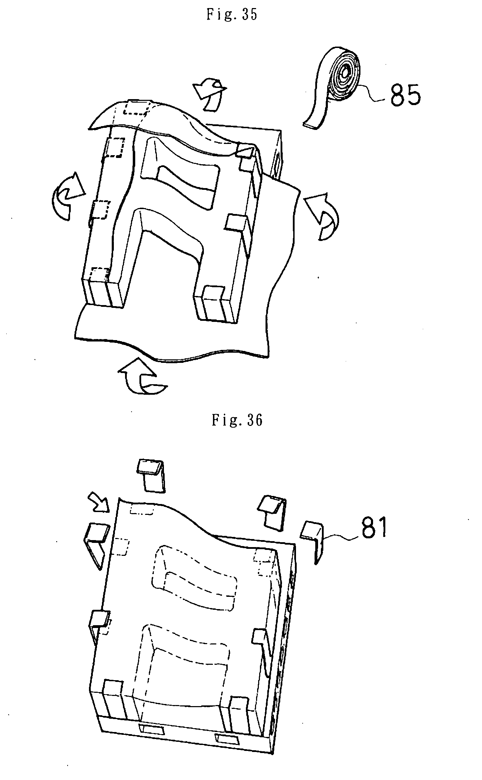

The stack of steel materials thus packed with the packing sheet and topped with the pallet is then placed on a base 101 of a stack reversing machine 10 shown in Fig. 31. With pressure arms 102a and 102b processed and pressed appropriately with respect to the stack of steel plates, the stack reversing machine 10 is activated (Figs. 31 and 32). The reversing action produces an assembly of the pallets 1, the packing sheet 7, the stack of steel plates 4, and the pallet 87 being piled up (Fig. 30). Thereafter, the pallet 87 is removed from the stack of steel plates 4 (Fig. 33). Inner dolly blocks 88 are attached to those positions of the stack which are to be strapped with hoop bands (Fig. 34). The packed stack is sealed with adhesive tapes 85 (Fig. 35).

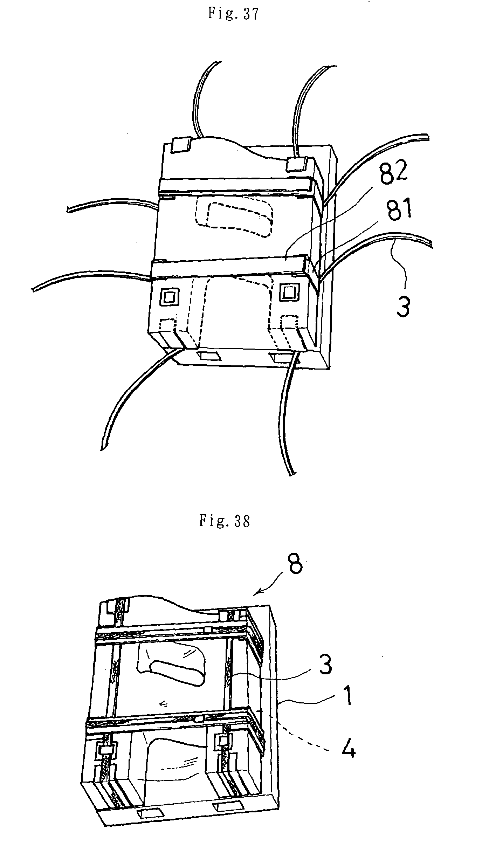

Next, outer dolly blocks 81 are attached to those positions of the stack which are to be strapped with hoop bands (Fig. 36). Traverse battens 82 are laid across the opposite dolly blocks 81, and hoop bands 3 are threaded through the appropriately located band holes of the pallet (Fig. 37). The sealing positions are tightened and sealed by sealer using L shaped fittings, thus producing a pallet assembly 8 composed of the stack of steel plates packed, fixed and sealed on the pallet (Fig. 38). Fig. 26 illustrates another example of a similar pallet assembly 8 comprising a stack of steel plates. Unlike what is shown in Fig. 38, the plane figure of the stacked steel plates in Fig. 26 is a trapezoid.

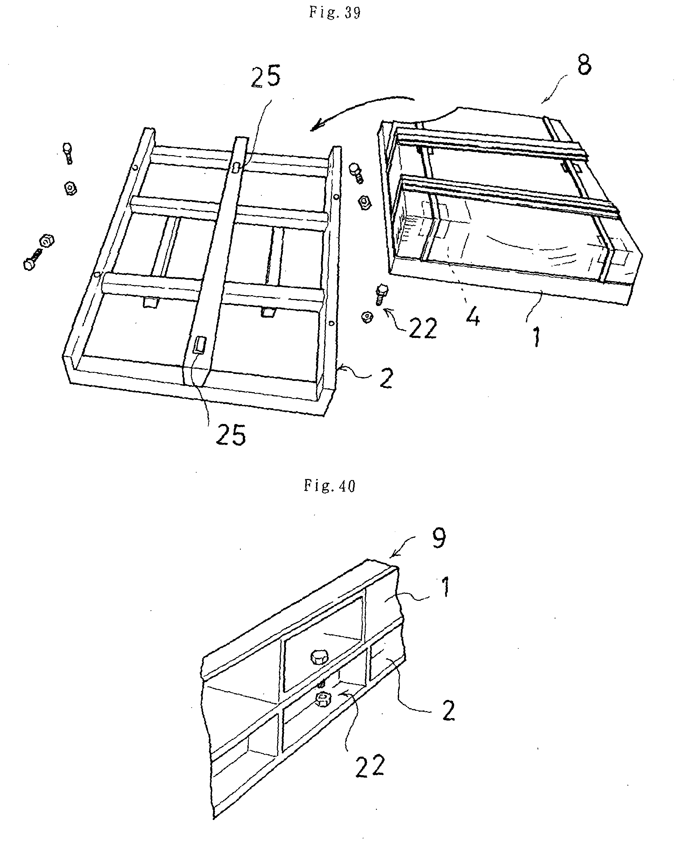

The pallet assembly 8 comprised of the plate stack is then placed on a carrier 2 and positioned so that alignment holes (not shown) on the back side of the pallet 1 will be engaged with the positioning projection 25 of the carrier 2 (Fig. 39). With the pallet assembly 8 positioned, bolts and nuts 22 are used to fix the pallet assembly 8 to the carrier 2, thus producing a carrier assembly 9 composed of the pallet and the plate stack (Figs. 39 and 40). There are four fixing positions, two each on the right and on the left (Figs. 39 and 40).

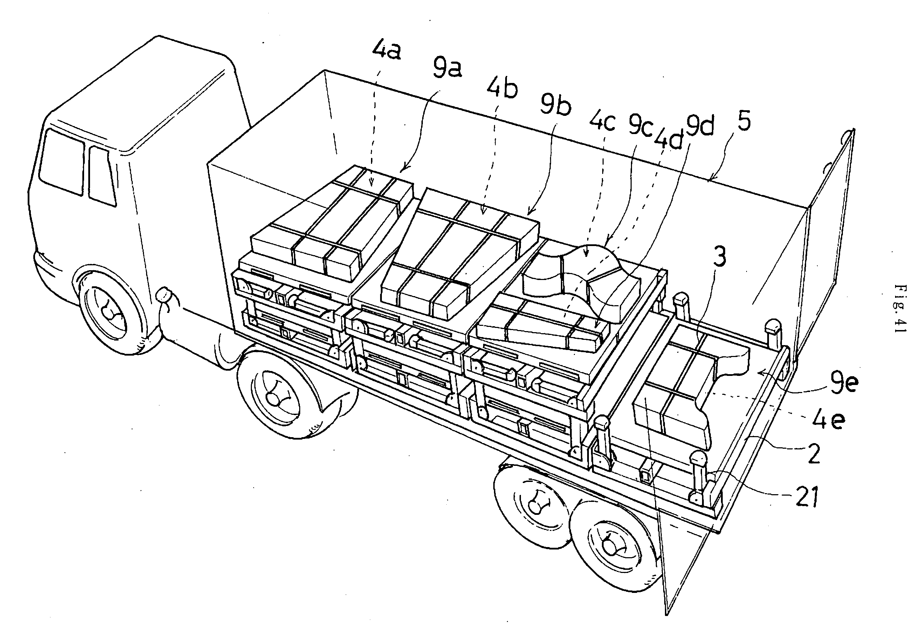

Thereafter, each carrier assembly 9 composed of the pallet and the plate stack is contained in the container 5 (Fig. 41). In this example, the container 5 accommodates, from back to front, carrier assemblies 9a to 9e composed of stacks of various steel forms packed and fixed. After the first layer of the carriers has been loaded, the erectors 21 of each carrier 2 are extended so that another layer of the carriers 9 composed of pallets and steel plate stacks will be piled on top. In this embodiment, in view of an available container space and a cleaner weight, two layers of the pallet-equipped carriers loaded with the stack of steel plates are contained in the container 5. The container 5 containing the stacks of steel plates 4 is transported.

### (4) Methods for unloading stacks of steel plates from container, unpacking stacks, and returning empty pallets and carriers

In this embodiment, the steps constituting the methods described in (3) earlier, "methods for packing stacks of steel plates, containing stacks into container, and transporting container" are effectively reversed.

Of the two layers in the container comprising the carrier assemblies 9a through 9e composed of the pallets and stacks of steel plates, the top layer is first unloaded by a forklift. After removal of the top layer of the carriers 9 equipped with the pallets having the steel plates stacked thereon, the erectors of the carriers constituting the bottom layer are folded. With all carriers taken out of the container, the bolts and nuts fixing the pallets to the carriers are removed. The pallets still loaded with their stacked steel plates are moved either onto appropriate product shelves for storage or to the site of manufacture for imminent use. The empty carriers and the bolts and nuts are held in temporary custody, to be returned for another use.

Each pallet with the stack of steel plates fixed thereon is unpacked as follows: the hoop bands are first cut and removed. With the hoop bands removed, the battens, seal guards and outer dolly blocks are taken off. After the adhesive tapes are peeled off the packing sheet, the sheet is unfolded. Then with the inner dolly blocks removed, a suitable pallet (e.g. , pallet 87 of Fig. 27) is prepared on site and placed on top of the stack of steel plates. The plate stack with the pallet placed on top is set on the stack reversing machine. After the assembly of the pallet and plate stack is turned upside down by the stack reversing machine, the pallet 1a is removed. At this point, the pallet 1a is empty and ready to be returned. With the packing paper removed, the stack of steel plates is obtained for use (i.e., the same as the stack of Fig. 27) on the pallet prepared on site.

Thereafter, the empty pallet 1 is fixed with bolts and nuts to the empty carrier 2. Each empty carrier equipped with the corresponding empty pallet (the assembly may be called a set) is loaded into a container. (This container may be the one which brought the stacks of steel plates to their destination). In this embodiment, up to ten sets may be piled up in a single column. In a 20-foot container, up to 40 sets (in four columns) may be loaded (Fig. 42).

The container thus loaded with the empty carriers and pallets is returned by truck, and/or by ship to the destination (e.g., the depot from which the stacks of steel plates were originated). When returned, the pallets, carriers, bolts and nuts are recycled for another use.

### (5) Advantages of embodiments

The invention when embodied as described above offers the following major advantages:
(1) Unlike conventional methods, there is no meticulously stacks of plates using large quantities of wood materials. The invention makes it possible easily and efficiently to pack, load, and contain the plate stacks in a transport container, with huge savings obtained in the man-hours required for such activities. In experiments conducted by the inventors, while the conventional methods required two workers 240 hours to pack and fix a given amount of plate stacks, the inventive methods allowed one worker working only 30 minutes to accomplish the same task.
(2) While materials are difficult to pack by conventional methods, the invention enables stacks of steel materials to be packed and fixed with ease. Because each pallet allows a variety of plates to be fixed thereto and transported thereby, the repeated use of a single kind of pallets can handle diverse kinds of stacked steel plates.
(3) Only small quantities of junk and scraps are produced upon unloading from the packing and fixing materials. Most of the materials used for packing and fixing may be recycled for repeated use.
(4) Because the invention eliminates interference between stacks of steel plates (piled one upon another and/or arranged side by side), damage to the contained stacks is minimized in transit.
(5) The invention makes it easier to load and unload the stacks of steel plates to and from the container.
(6) According to the invention, the pallets are dimensionally standardized with respect to carriers that carry them, and these carriers are in turn standardized dimensionally relative to a transport container that accommodates the carriers. This arrangement allows stacks of plates to be contained efficiently in a limited space. It is easy to fix stacks of steel plates to pallets and the stack-loaded pallets to the carriers. The carrier assemblies composed of the pallets and the plate stacks are loaded just as easily into the container. The man-hours for accomplishing these tasks are reduced appreciably. Stacks of plates in quantities are thus transported efficiently. This feature is particularly effective where stacks of steel materials are to be transported overseas in containers.
(7) The packing sheet is a transparent or translucent sheet coated with volatile corrosion inhibitor (VCI) . The sheet allows what is wrapped inside to be seen through. This makes it possible to inspect from the outside the packed stacks of steel plates for correction and other irregularities.
(8) According to the invention, the pallets, the pallet assemblies composed of stacks of steel plates, and the carrier assemblies composed of the pallets together with the stacks of steel plates are all furnished with holes that accommodate the fork tips of the forklift truck. The structure allows these packages to be readily handled and moved about by the forklift.

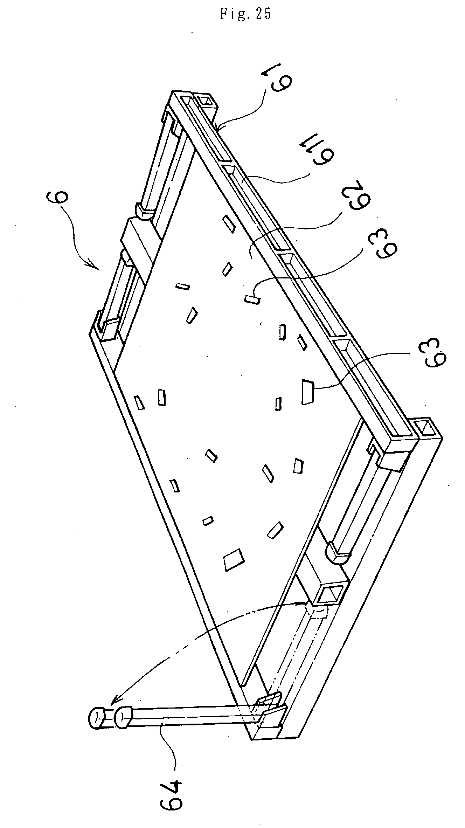

Now, Fig. 25 illustrates one example of a pallet-equipped carrier 6 as stated above. This carrier 6 has predetermined band fixing holes (substantially equal in function to the band fixing holes described in relation to the above-stated pallets) formed on a front surface (and a rear surface or one of the front and rear surfaces) of a base 61 that is substantially equal in structure to the carriers described above).

### [Pallet P2-1]

### (1) Configuration of coiled heavy article pallet

A pallet P2-1 (hereinafter "coiled heavy article pallet 2") will be described in detail with reference to Figs. 43 to 49.

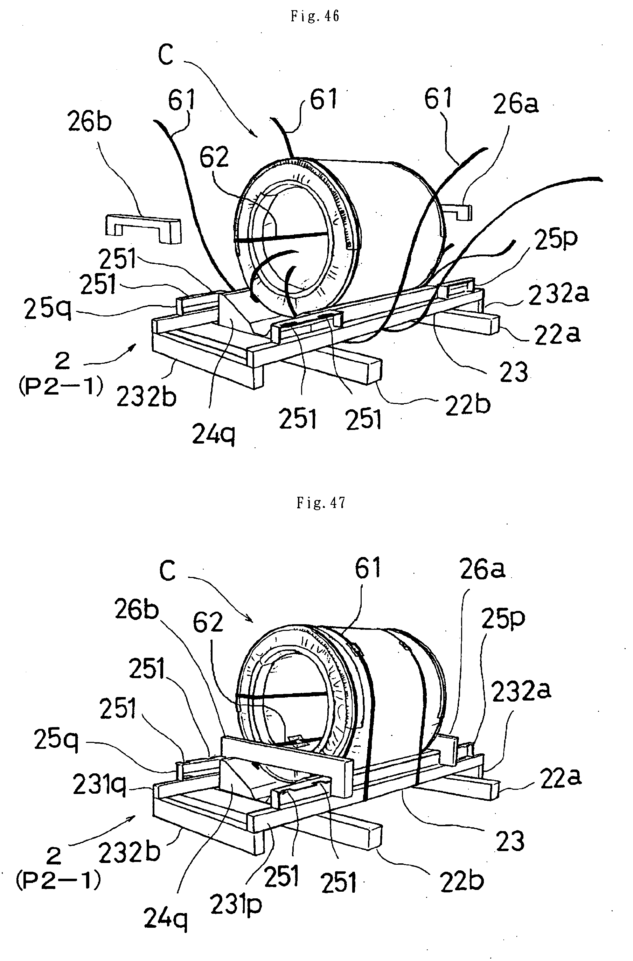

This coiled heavy article pallet 2 is a pallet used to contain a coiled heavy article C (see Fig. 47, hereinafter "coil") into a container B (see Fig. 49) that is normally referred to as "20-foot dry container" and transport the container B. This coil 2 is obtained by winding a steel plate into a coil of about 2 tons. The coil 2 has an outer peripheral surface covered with a cardboard, a vinyl sheet or the like, both column ends into which metal rings are fitted, respectively, and an outer circumference bound by a steel band (a width of about 30 mm). The outer peripheral surface of the coil is further covered with an iron plate at need.

In the following description, if a pair of members are arranged in parallel to the axial direction of the coil, they are assumed to be arranged in front and in rear, respectively, with one being denoted by p and the other being denoted by q. Further, if a pair of members are arranged in an orthogonal direction to the axial direction thereof, they are assumed to be arranged right and left, respectively, with one being denoted by a and the other being denoted by b.

The pallet 2 is made of steel and, as shown in Figs. 43 and 44, includes a pallet main body consisting of a mount portion 2m and leg portions 2f.

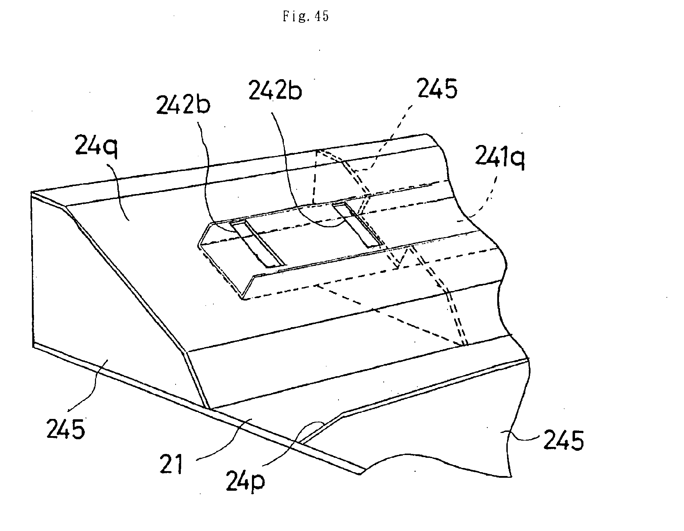

The mount portion 2m consists of a mount portion main body 21 and a pair of coil support portions 24p and 24q. As shown in Figs. 44 and 45, each of the coil support portions 24p and 24q has band through holes 242a and 242b provided right and left, respectively. The band through holes 242a and 242b differ in size, i.e., one band through hole 115a is longer than 242b in the lateral direction of the pallet. Further, band through paths 241p and 241q are provided along the back surfaces of the coil support portions 24p and 24q, respectively, to connect the left and right band through holes 242a and 242b to each other.

As shown in Figs. 43 and 44, the coil support portions 24p and 24q are a pair of steel plates arranged to face each other to form a trough and thereby form an inclined surface. As shown in Figs. 43 and 45, each of the coil support portions 24p and 24q is supported by seven plate supports 245 provided perpendicularly on the mount portion main body 21. As shown in Fig. 45, each plate support 245 is a flat plate in the form of a deformed pentagon, with a bottom side fixed perpendicularly onto the mount portion main body 21 by welding or the like and the other three sides fixed so as to support the coil support portion 24 from below.

The paired mount portions each of which supports the cylindrical side surface of the coil are arranged so that respective inclined surfaces face each other. Therefore, the coil can be stably mounted without rolling down. Since the cylindrical side surface of the coil is supported by the facing inclined surface, coils having various outside diameters can be handled in a certain range. Since the cylindrical side surface of the coil is supported by the facing inclined surface, the coil, even rocking slightly, is eventually attracted to the center of gravity and settled down near the central position of the paired mount portions. Even if this coil is in a state in which the above-described fixing operations are omitted, it is possible to transport the coil without a slippage and a damage.

As shown in Figs. 43 and 44, each leg portion 12 is obtained by arranging legs 22a and 22b and arms 231p and 231q in parallel crosses. Namely, the legs 22a and 22b are arranged in parallel, and the arms 231p and 231q are arranged on the legs 22a and 22b at right angle with respect to the legs 22a and 22b.

By taking this form, if a plurality of pallets 2 are arranged adjacently, end portions of the adjacent legs 22a and 22b and arms 231p and 231q contact each other, whereby the movement of the pallets 2 can be restricted and a slippage can be suppressed. Further, a lower open space 2s through which carrier can be inserted into the lower, front, and rear side surfaces of the legs 2f can be provided, which facilitates mounting the pallet 2 on the carrier 1.

The legs 22a and 22b are about 1450 mm in length, the arms 231p and 231q are about 2250 mm in length. The legs 22a and 22b and the arms 231p and 231q substantially quadrisect the pallet in the container B including a gap for carrying the pallet in a longitudinal direction. By doing so, if the four pallets 2 are contained in the container B, only a gap which does not cause slippages of the pallets 2 is left and it is unnecessary to fix the pallets 2 to the container B.

Sub-arms 232a and 232b are provided on the left and right lower end portions of the arms 231p and 231q in parallel to the arms 231p and 231q. The sub-arms 22a and 22b are provided to stably mount the pallet 2 on the floor.

As shown in Figs. 43 and 44, movement-inhibiting member guides 25p and 25q are provided along the longitudinal directions of the coil support portions 24p and 24q, respectively. On the upper side surface of each coil support portions 24p and 24q, each of the movement-inhibiting member guides 25p and 25q has U-shaped notches 251. The notches 251 are provided equidistantly near the both ends of each of the movement-inhibiting member guides 25p and 25q. Due to this, the interval of a combination of the notches on the both ends can be changed from 900 to 1900 nm step by step, thereby making it possible to fix the coil having a column length corresponding to the interval without causing a slippage.

Movement-inhibiting members 26a and 26b used while each being mated with the movement-inhibiting member guides 25p and 25q are obtained by combining rectangular timbers together into a U shape so that regions mated with the notches 251 projects downward of the both ends.

The movement-inhibiting members 26a and 26b are arranged to be inserted into the notches 251 of the mount portion 2m so as to stride over the two coil support portions 24p and 24q.

### (2) Method for fixing coiled heavy article to coiled heavy article pallet

Next, a method for fixing the coil onto the coil pallet 2 will be described. First, the packed coil C is mounted on the mount portion 2m of the pallet 2 using a lift, a large-sized forklift or the like. At this time, the coil C is mounted on the mount portion 2m so that the axis of the coil C is parallel to the floor surface and both ends of the axis are located on left and right of the pallet 2, respectively.

Thereafter, as shown in Fig. 46, binding bands 61 and a fixing band 62 are employed to fix the coil 2 onto the mount portion 2m. One end of one fixing band 62 is inserted into the axial hole of the coil C, and then inserted into the band through path 114 through the band through hole 115b. Through the band through hole 115b, the one end is pulled out from the band through hole 115a and connected to the other end of this fixing band 62. The binding band 61 is used to fixedly bind the coil C and the pallet 2 together to be integral with each other.

Further, the movement-inhibiting members 26a and 26b are inserted into and fixed to the notches 251 on the both sides of the movement-inhibiting member guides 25p and 25q so as to put the left and right of the coil C between themovement-inhibiting members 26a and 26b.

By thus mounting the coil C on the pallet 2, the fixing band 62 and the movement-inhibiting members 26a and 26b prevent the fixed coil C (see Fig. 47) from being moved laterally relative to the pallet 2. In addition, the coil support portions 24p and 24q and the binding band 61 between which the front and rear curved surfaces of the coil C are put, can prevent the coil C from being detached from the pallet 2 in longitudinal direction. The carrier such as the carrier 1 or the crane can be employed for the pallet 2. Due to this, cargo work can be carried out without directly contacting with the coil C.

### (3) Carry-in and carry-out method and containing structure for coiled heavy article pallet

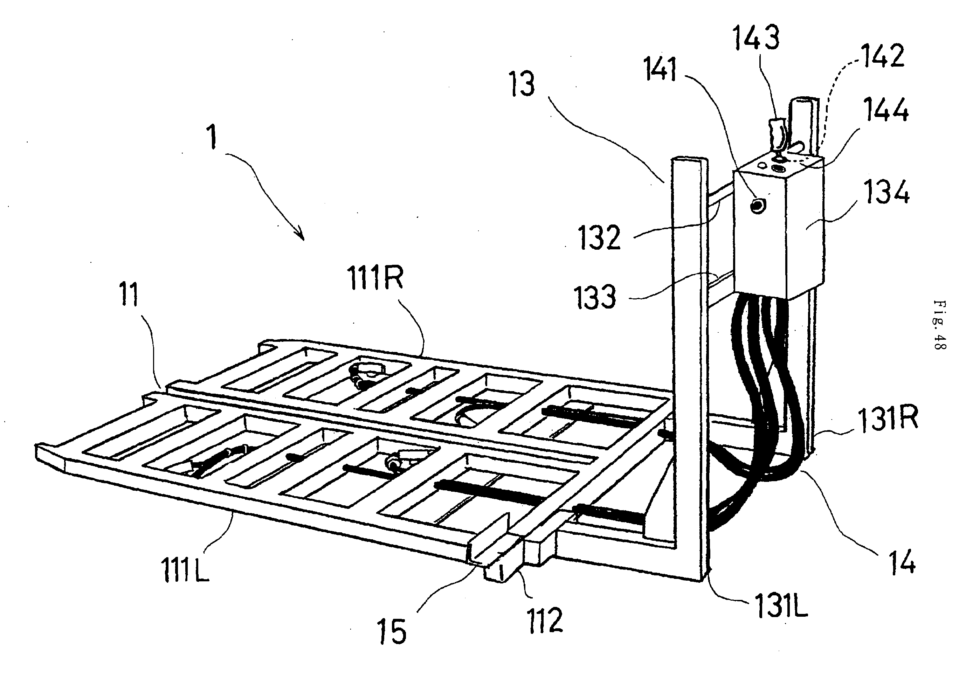

The pallet 2 on which the coil C is thus mounted can be carried on a levitation carrier 1 as shown in Figs. 48 and 54 to 64.

As shown in Figs. 48 and 54 to 56, this carrier 1 includes a support base 11 for lifting the pallet 2 loaded with the coil C, and an air bearing 12 which is provided on the lower surface of the support base 11 and which emits a compressed air toward the floor surface at a predetermined pressure. The carrier 1 can, therefore, float the support base 11 by this emitted air while the pallet 2 loaded with the coil C is mounted on the support base 11.

This carrier 1 may include a plurality of the above-stated air bearings 12, valves which are provided at the respective bearings 12 and which regulate the emitted air flow rate of the air bearings 12, and an operation pipe 143 which can simultaneously control openings of the plural valves. By operating the operation pipe 143, the carrier 1. can control a detailed attitude of the support base 11.

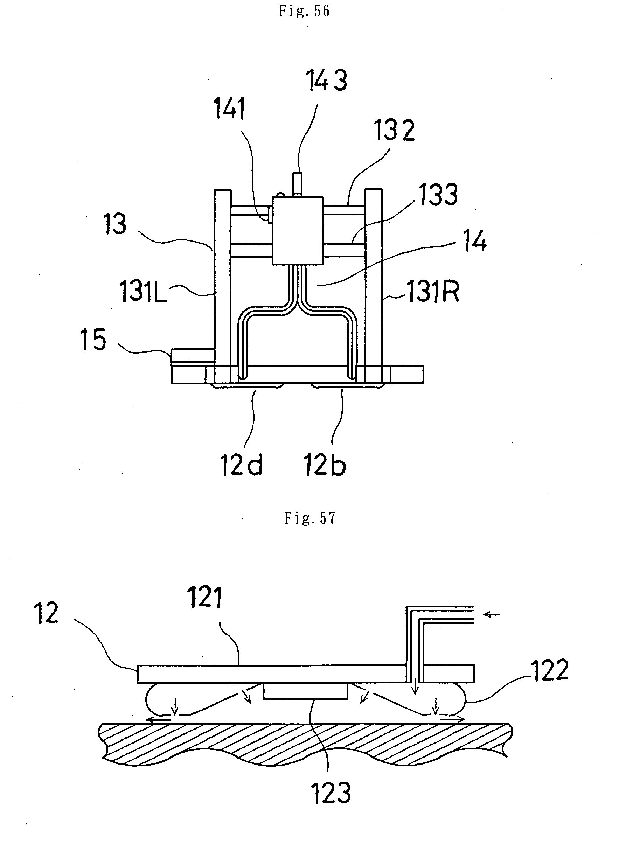

As shown in Figs. 55 and 56, if the compressed air is blown out from nozzles (see Figs. 57 and 58) of balloon portions 122 provided on the four air bearings 12 provided on the lower surface of the support base 11 toward the ground, the levitated carrier 1 is levitated by the pressure of the blown air. This carrier 1 can set a coefficient of friction between the device 1 and the ground to be very low by being levitated. Therefore, even if the pallet 2 loaded with the coil of several tons is mounted on the support base 11, the pallet 2 can be easily carriedmanually.

As shown in Fig. 49, this carrier 1 can be inserted into the lower open space 2s to thereby support the pallet 2 and carry the pallet 2 in and out of the container B or the like. By doing so, the pallet 2 can be stably carried. Since the carrier 1 is available, a high ceiling necessary for suspension becomes unnecessary. Due to this, the pallet 2 can be easily carried in and out of even the dry container having no opening portions on the ceiling.

Fig. 49 illustrates a state in which the pallet 2 loaded with the coil C is contained in the container B. Namely, the four pallets 2 each loaded with the coil C are contained in the container B in a depth direction so that end portions of the legs 22a and 22b of the pallets 2 contact with one another.

By standardizing the size of the bottom of each pallet 2 so as to quadrisect the bottom of the container B, it is possible to arrange the four pallets 2 so that the combined sizes of the bottoms of the pallets 2 are coincident with the size of the bottom of the container B even if the pallets 2 are contained thereinto at random. Furthermore, even if some of the pallets 2 are pallets 2' each provided with amount portion 2m' for mounting a coil C' different in size from the coil C, no problem occurs.

By thus containing the pallets 2 into the container B, gaps between the inner wall of the container B and the respective pallets 2 are almost eliminated. Therefore, even if the container B is in transit, slippages of the pallets 2 hardly occur. Further, simply by carrying the pallets 2 into and out of the container B, there is no need to carry out operations for fixing and removing the coil C and the pallets 2, making it possible to carry out the cargo work in short time. Even if the pallets 2 are shifted within a range of the gap for carrying, the slippage can be prevented by the arrangement of the legs 22a and 22b arranged in parallel crosses.

With this pallet 2, there is no need to fix the pallet 2 to the container B using wood materials or the like. Since the pallet 2 itself is made of steel, water-containing matters (wood materials or the like) can be eliminated from the interior of the container B and dews can be thereby prevented from being condensed in the container B. Due to this, as long as a lowhumidity state can be maintained at the time of sealing the container B which contains the pallets 2 each loaded with the coil C, the interior of the container B can be kept at low humidity in transit without the need of providing a dehumidifier and the coil C can be prevented from being rusted.

### [Pallet P2-2]

### (1) Configuration of coiled heavy article pallet

A pallet P2-2 (hereinafter, "coiled heavy article pallet 2") will be described with reference to Figs. 59 to 67. This coiled heavy article pallet 2 is substantially equal in configuration to the pallet P2-1 except that the pallet 2 includes movement-inhibiting members, pileup support portions, and the like.

First, as shown in Figs. 59 to 62, the coiled heavy article pallet 2 in this embodiment has side end guides 233a and 233b in place of the sub-arms 232a and 232b formed on tip ends of the sub-arms 231p and 231q.

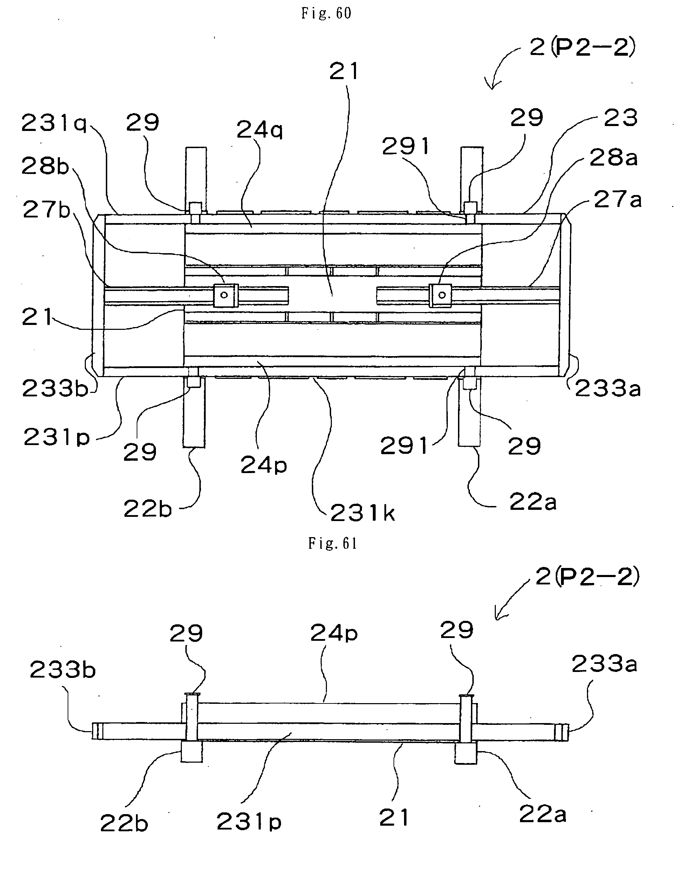

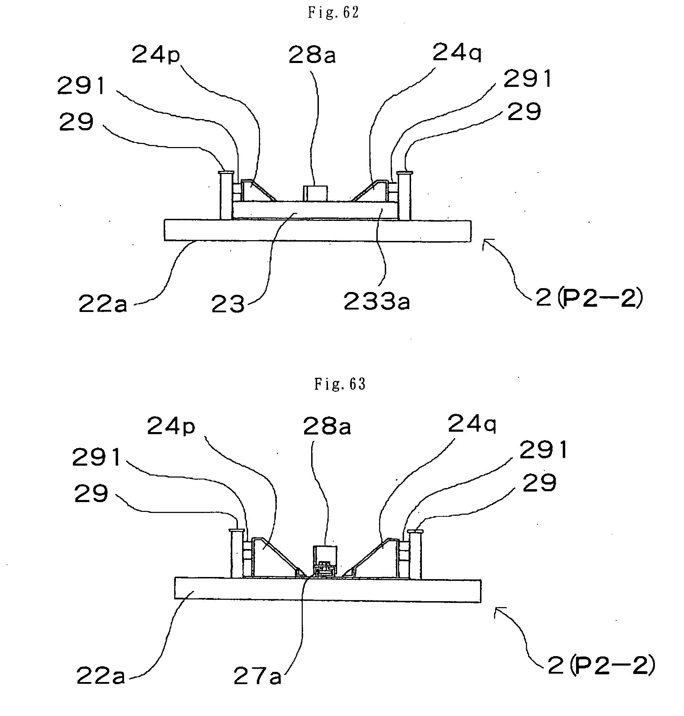

As shown in Figs. 60 and 61, the side end guides 233a and 233b are rod members with both ends of each of the side end guides 233a and 233b connected to the tip ends of the sub-arms 231p and 231q and spreading longitudinally. The interval between the outsides of the side end guides 233a and 233b are set several centimeters smaller than the width of the internal space of the container. Due to this, similarly to the sub-legs 232a and 232b, the side end guides 233a and 233b prevent the coiled heavy article pallet 2 from being moved laterally.

As shown in Figs. 59 and 60, front and rear outsides of the side end guides 233a and 233b are tapered. Namely, as shown in Fig. 60, each side guide is narrower on front and rear ends. Therefore, even if the pallet is contained into the container with either the sub-arm 231p side or 231q side being faced front, the pallet can be easily contained into the container without the need of delicate positioning.

The levitation carrier 1 is employed particularly in this embodiment. Due to this, if front end portions of the side end guides 233a and 233b contact with the inner wall of the container B with quite a weak force, tracks of the guides 233a and 233b are corrected accordingly, so that the coiled heavy article pallet 2 can be contained into the container without damaging equipment.

A plurality of notches 231k are provided in angular portions on the lower surface of a base plate 21. The notches 231k are provided to cause the binding band 61 to pass through. The binding band 61 is hardly cut and slid laterally because the band 61 does not directly strike against the corners of the sub-arms 231p and 231q.

The coiled heavy article pallet 2 in this embodiment has coil end fixing mechanisms. A pair of coil end fixing mechanisms, each of which consists of a slide rail 27 and a movement-inhibiting member 28, are provided right and left, respectively.

Namely, as shown in Figs. 59, 60, 62, and 63, a pair of slide rails 27a and 27b are arranged in parallel to and between coil support portions 24p and 24q provided on the base plate 21. These slide rails 27a and 27b extend outward from positions at which they face each other to the side end guides 233a and 233b with a distance of 40 cm kept therebetween.

The slide rails 27a and 27b have movement-inhibiting members 28a and 28b built slidably, respectively. Upper ends of the movement-inhibiting members 28a and 28b are either lower than or equal in height to the upper ends of the coil support portions 24p and 24q, respectively. The upper ends may be either built vertically or curved outward.

The movement-inhibiting members 28a and 28b include bolts that penetrate through the members 28a and 28b and oriented to the slide rails 27a and 27b, respectively. Blocks are contained in the respective slide rails 27a and 27b, and bolt holes are formed at the center of the blocks. By turning the bolts to couple the bolts to the blocks, the blocks are raised upward and abut against the lower surfaces of the upper frames of the slide rails, whereby the movement-inhibiting members 28a and 28b can be fixed to the slide rails 27a and 27b, respectively.

As described above, the coiled heavy article pallet 2 includes the movement-inhibiting members 28a and 28b. Due to this, if the coil is mounted on the inclined surfaces of the coil support portions 24p and 24q with the cylindrical side surface of the coil grounded, the coil end surfaces can be put between the movement-inhibiting members 28a and 28b and thereby fixed thereto.

The movement-inhibiting members 28a and 28b are provided slidably on the respective slide rails 27a and 27b and can be fixed at predetermined positions using the bolts. Therefore, the pallet 2 can handle coils of various widths. Each slide rail extends from the position at which the rail is put between the mount portions toward a position exceeding the end of the mount portion. Due to this, the paired movement-inhibiting members 28a and 28b can handle either the coiled heavy article narrower than the mount portion or the coiled heavy article wider than the mount portion and put the end surfaces of the article therebetween.

As shown in Figs. 59 to 63, the coiled heavy article pallet 2 has pileup support portions 29 provided on the legs 22a and 22b to put the arms 231p and 231q therebetween.

The pileup support portions 29 are columnar members, and a total of four pileup support portions 29 are provided to put the arms 231p and 231q therebetween on the legs 22a and 22b. The lower end of each pileup support portion 29 has a lower end surface that penetrates the leg 22a or 22b and formed to be concave, with the lower end surface being located at a position substantially coincident with a bottom surface (lower end surface) of the leg 22a or 22b, and the upper end thereof is connected to a front or rear end surface of the coil support portion 24p or 24q by an auxiliary column 291. Further, the lower end of the pileup support portion 29 is located at a position substantially coincident with the lower end surface of the leg 22a or 22b and the upper end thereof is located several centimeters higher than an upper end of the coil support portion 24p or 24q. The upper end surface of the pileup support member 29 is formed spherically convex and the lower end surface thereof is formed spherically concave.

The coiled heavy article pallets 2 in this embodiments can be piled up by the pileup support portions 29. That is, the coiled heavy article pallets 2 in this embodiments can be piled up so that the lower ends of the four pileup support portions 29 of the next coiled heavy article pallet 2 are put on the upper ends of the four pileup support portions 29 of the coiled heavy article pallet 2 put on the floor. Therefore, after carrying the heavy articles, many empty pallets can be piled up to make them compact and then returned.

Further, by positioning the pallets relative to the approximate positions of the pileup support portions, the positions of the pallets can be automatically adjusted and the pallets can be easily piled up without strict positioning. In addition, during pileup, it is difficult to cause slippages of the pallets. Since the upper surfaces of the pileup support portions are spherically convex and the lower surfaces thereof are spherically concave, less dust and the like collect on the upper and lower surfaces and do not deteriorate the stability of the pallets.

### (2) Method for fixing coiled heavy article to coiled heavy article pallet

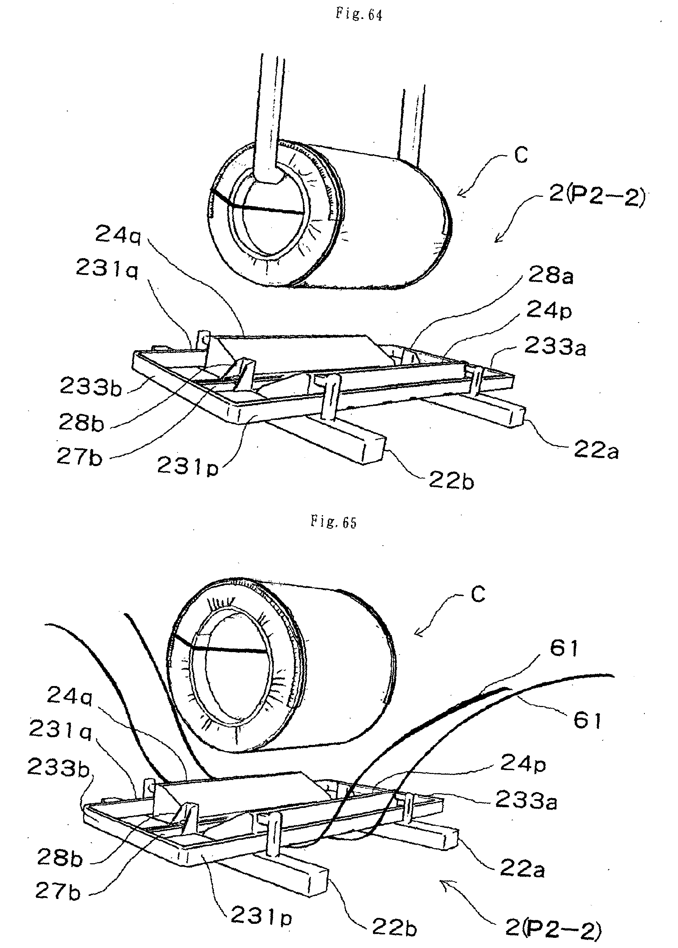

To fix the coil to the coiled heavy article pallet 2 in this embodiment, the packed coil C is first mounted on the inclined surfaces of the coil support portions 24p and 24q as shown in Figs. 64 and 65. Thereafter, as shown in Figs. 65 and 66, the coil C is fixed to the coiled heavy article pallet 2 so as to be integral with the pallet 2 by binding the coil C and the pallet 2 in a direction perpendicular to the axis of the coil C using the binding band 61. At that time, the binding band 61 is arranged to pass through the notches 231k formed in the angular portions on the lower surface of the base plate 21.

Thereafter, the movement-inhibiting members 28a and 28b are moved on the slide rails 27a and 27b, respectively and, as shown in Fig. 66, arranged to put the both end surfaces of the coil C therebetween. Using the bolts, the positions of the members 28a and 28b are fixed.

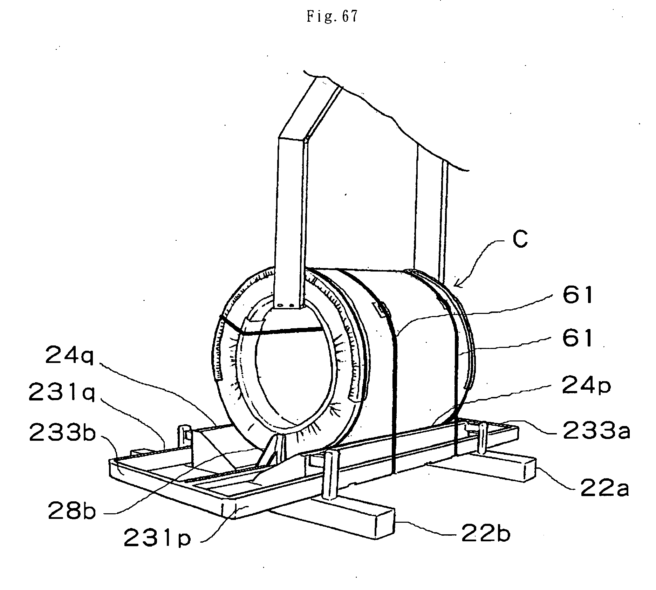

As shown in Fig. 66, the coil C thus fixedly mounted onto the coiled heavy article pallet 2 is inhibited from being moved laterally relative to the coiled heavy article pallet 2 by the movement-inhibiting members 28a and 28b. In addition, the coil support portions 24p and 24q, between which the front and rear curved surfaces of the coil C are put, and the binding band 61 can prevent the coil C from being slipped relative to the coiled heavy article pallet 2. Accordingly, as shown in Fig. 67, the coil C can be hung up by a tongue or the like and moved together with the coiled heavy article pallet 2.

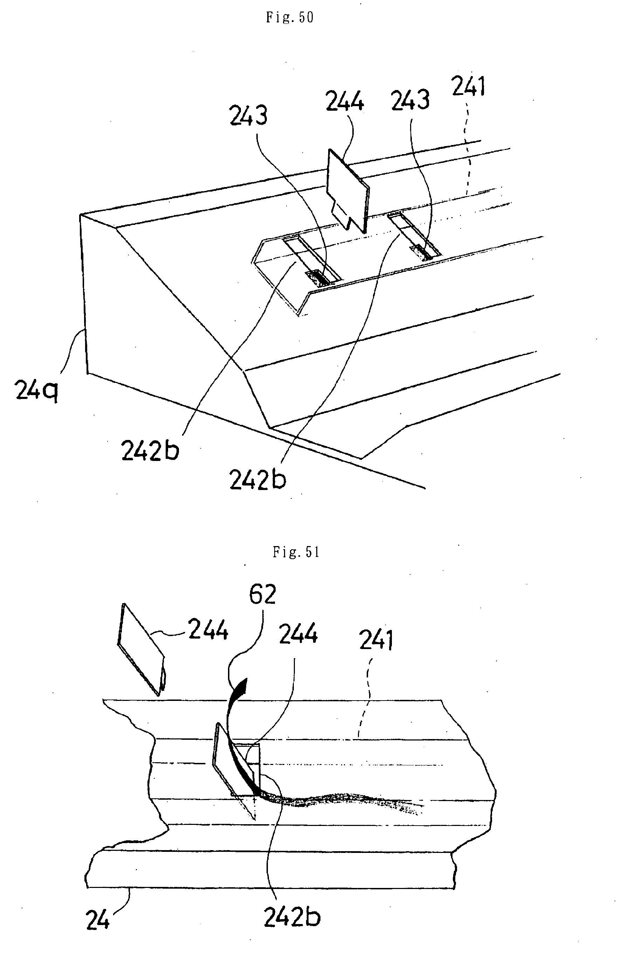

To take out the fixing band in the band through path from the band through hole, a band ejection tool 244 as shown in Figs. 50 and 51 is provided. Using the band ejection tool 244, the fixing band can be easily taken out from the band through hole. Since this band ejection tool 244 is flat, the end portions of the band through path 241 can be made inclined and the fixing band 62 can be prevented from being inserted into locations where the band 62 is unnecessary in the band through path by using the tool 244 to be fixedly inserted into a fixed hole 243 provided in the band through hole 241.

Furthermore, if the movement -inhibiting members can sufficiently inhibit the movement of the coil, it is unnecessary to fix the coil using the fixing band. In this case, as shown in Fig. 53, the band through path and the band through hole can be eliminated from the pallet.

Alternatively, the pileup support portions employed in the pallet P2-2 may be applied to the pallet P2-1 and the notches 231k provided in the base plate 21 may be provided in the base plate related to the pallet P2-1. Further, the sub-arms 231p and 231q used in the pallet P2-1 may be tapered to prevent the equipment from being damaged similarly to the pallet P2-2.

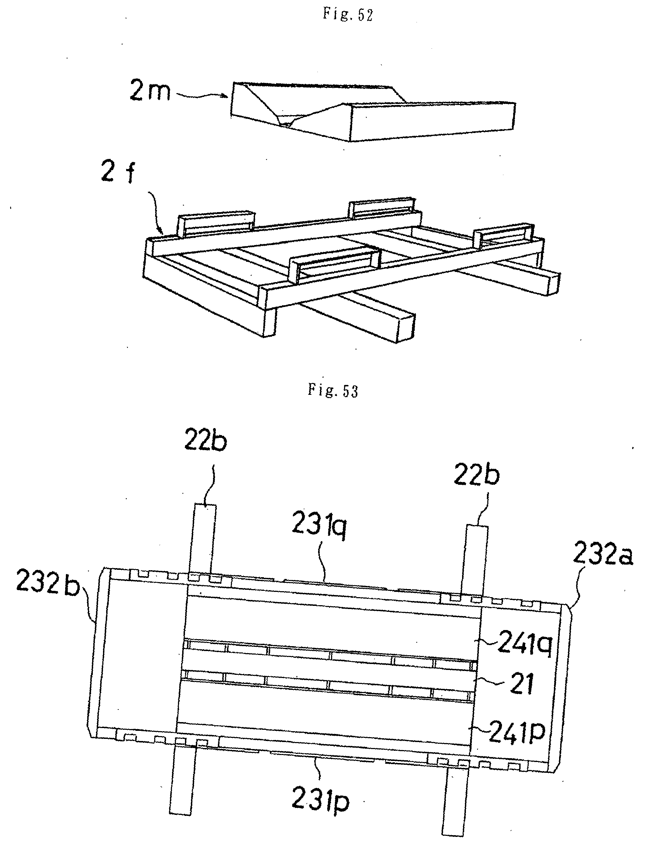

As shown in Fig. 52, the mount portion 2m and the leg portions 2f of the coiled heavy article pallet 2 in this embodiment can be separated from each other. Such a separable pallet can dispense with the leg portions by preparing a mount portion including appropriate coil support portions according to the size of the coil. By preparing leg portions according to the size of the container 5, the pallet including the mount portion which has a common form and a common size can be used.

The pallet can be carried not only by the carrier but also by the other carrier which has been conventionally, ordinarily used, such as a crane or a large-sized forklift. Even if such a conventional carrier is used, the pallet can be stably carried without contact with the coil on the pallet by inserting tips or the like from the lower open space to support the pallet.

For reference, a cylindrical heavy article, a columnar heavy article or the like which is uncoiled, i.e., consists of a single formed article, or a heavy article assembly or the like obtained by binding one rod heavy article or a rod member can be used in place of the coiled heavy article. The form of the pallet mount portion used in this case can be arbitrarily selected as long as the heavy article to be used can be loaded on the pallet.

### [Pallet P3]

A pallet P3 (hereinafter, "carry-in, carry-out pallet 7") will be described with reference to the drawings. This pallet is a general-purpose pallet for containers.

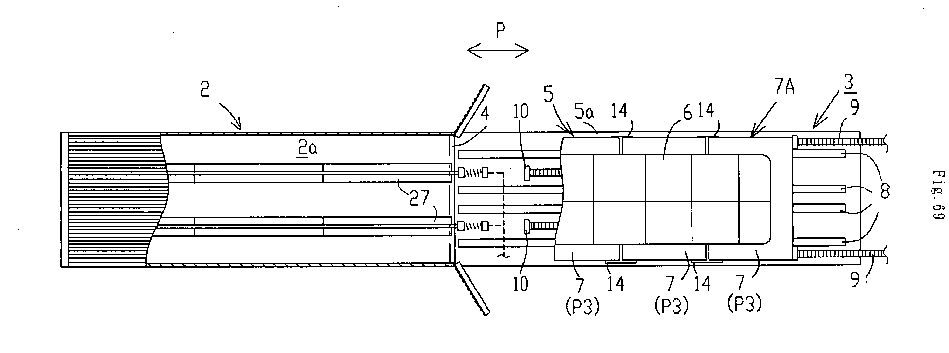

In the embodiment, as shown in Fig. 68 and 69, the application to a case where a dry container (the following are abbreviated to container 2) is placed on the ground at a specified point in a harbor container yard and article loading is performed for this container 2 placed on the ground.

An introducing/discharging device 3 for introducing or discharging a article introducing/discharging pallet according to this invention is provided at a specified location where a freight container 2 is placed. The introducing/discharging device 3 is constituted approximately similar to prior art, and consists of a stage 5 having a floor 5a with a height approximately equal to the height of a floor 4 of the container 2 placed on the ground, and first and second sliding means 8 and 27 that supports a introducing/discharging pallet 7 slightly above the floors 5a and 2a between the stage 5 and the container 2, and a pair of first displacement means 9 (which is shown herein as "displacement means") that move the introducing/discharging pallet 7 in the introducing/discharging direction of the article 6 (shown by the arrow P in Fig. 68 and Fig. 69) by applying a displacing force. The stage 5 of the introducing/discharging device 3 is equipped with a pair of second displacement means 10 that displaces said second sliding means 27 between the stage 5 and the container 2.

### (1) Configuration of introducing/discharging pallet

Said introducing/discharging pallet 7 comprises a pallet main body 70 and connecting means to be described later as shown in Figs. 70 through 72. The pallet main body 70 comprises three equally spaced beam-like base members 111 and multiple platform members 12 orthogonally arranged and affixed on said beam-like base members 11 in order to load said article 6 directly, thus forming a grid like structure having a rectangular article carrying surface with a larger width than the depth in the introducing direction of the article. The depth dimension of said introducing/discharging pallet 7 is set to a dimension, for example, approximately equal to one fourth of the depth length of a dry container with a total length of 20 feet and a width dimension of said introducing/discharging pallet 7 is set to a dimension approximating the width of the dry container.

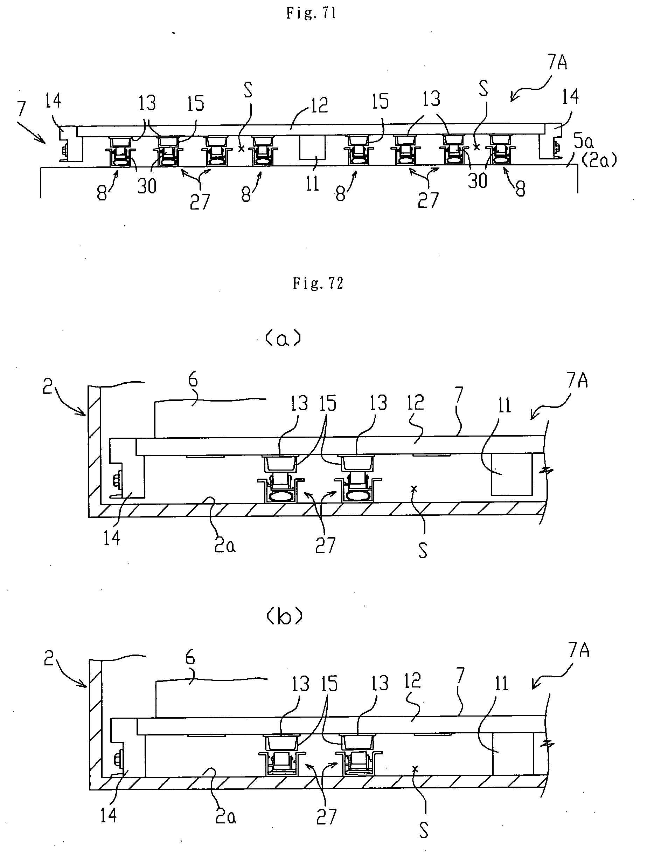

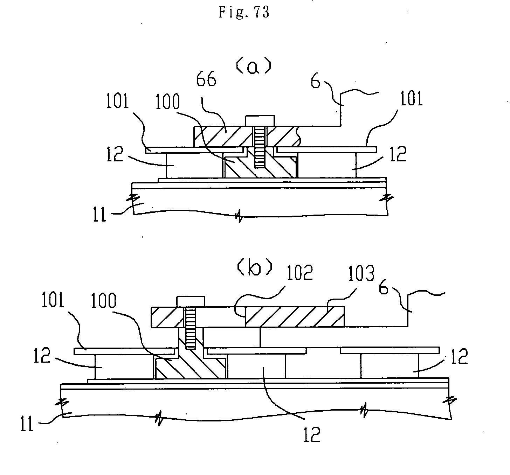

Several load bearing members 13 are affixed on the back surface of said platform members 12 of the introducing/discharging pallet 7 between adjacent beam-like base members 11, and a specified space S is formed underneath the load bearing members 13. The first and second sliding means 8 and 27 can be stored in said space S (shown in Fig. 71 and Fig. 72). Connecting means 14 are provided at four corners of the introducing/discharging pallet 7 for connecting with other introducing/discharging pallets similarly modularized as the introducing/discharging pallet 7.

Said load bearing members 13 , as shown in Fig. 71, perform the function as support for weights of said platform members 12 plus the weight of the article 6 by abutting with the top parts of the first and second sliding means 8 and 7 when the first and second sliding means 8 and 27 installed on the stage 5 support the introducing/discharging pallet 7 from underneath, and the rail when the introducing/discharging pallet 7 slides over the first and second sliding means 8 and 27.

The introducing/discharging pallet 7 can be equipped with fastening pieces 100, as shown in Fig. 73(a), with fastening holes provided on the top. The fastening pieces 100 are provided in a space defined by a pair of adjacent platform members 12 and restricting plates 101 attached to the top surface of each platform member 12. Therefore, the fastening pieces 100 are slidable along the longitudinal direction of the platform members 12 and are prevented from being pulled out upward by the restrict ing plates 101. When a machine tool is to be loaded as the article 106 on the introducing/discharging pallet 7, the fastening pieces 100 are moved to slide to proper positions to align with through holes formed on an anchor frame 66 of said machine tool so that the fastening pieces 100 and the anchor frame 66 can be fastened by screws. In order to supplement fastening pieces 100, it is also possible to use clamping pieces 103, each of which having an oblong hole 102 as shown in Fig. 73(b) adjusting said clamping pieces 103 along the platform members 12 as well as in a direction perpendicular to the longitudinal direction of the platform members 12.

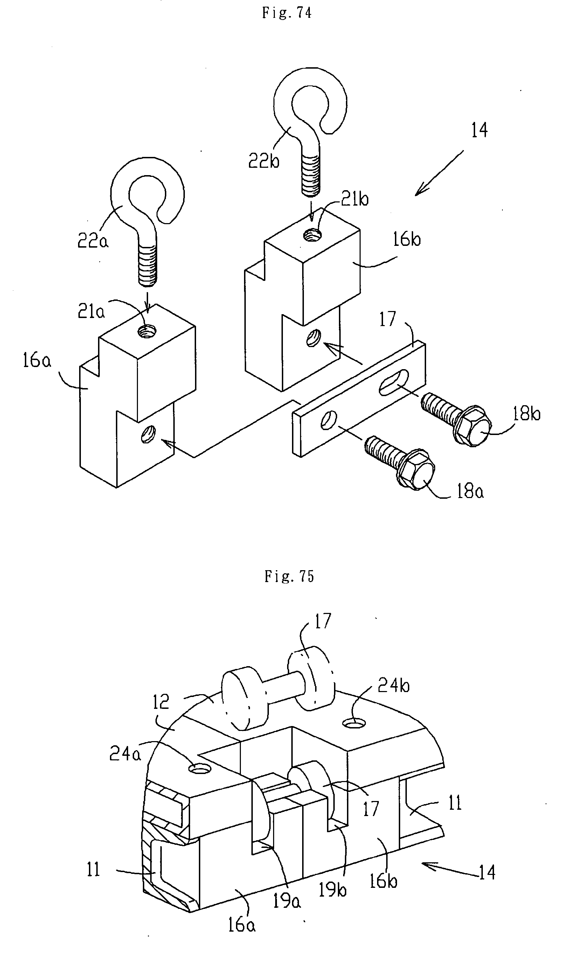

While it is possible to use said connecting means 14 of arbitrary types as long as they can connect multiple modularized introducing/discharging pallets 7, a combination type shown in Fig. 74 is used in this embodiment consisting of a pair of stepped block base members 16a and 16b, which are welded and fixed to both ends of said beam-like base members 11 on the outside of each corner of the introducing/discharging pallet 7, a plate-like connecting member 17 that connects the stepped block base members 16a and 16b on the outside of the introducing/discharging pallets 7, and two bolts 18a and 18b that fix the ends of the connecting member 17 onto the stepped block base members 16a and 16b.

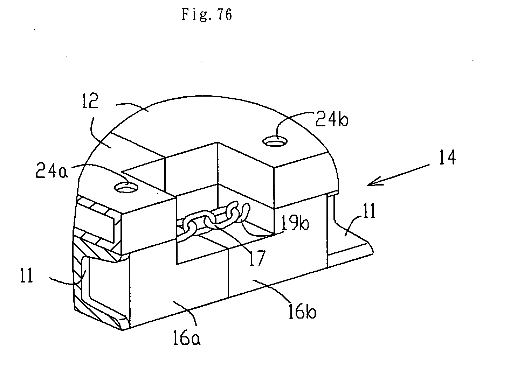

However, said connecting means 14 is not limited to such a combination type, but rather various other types can be used: for example, a type where a dumbbell-shaped connecting member 17 is dropped into latching parts 19a and 19b of the block base members 16a and 16b on the top side of the introducing/discharging pallet 7 to connect multiple introducing/discharging pallet 7 in order to form a pallet combination unit according to the present invention as shown in Fig. 75; or a type where a chain-like connecting member 17 is used, both ends of which being engaged with hook-like latching parts 19a (not shown) and 19b provided on the block base members 16a and 16b as shown in Fig. 76. In either case, the connecting means 14, in particular, connecting member 17, bolts 18a and 18b, latching parts 19a and 19b, etc., are built into the introducing/discharging pallet 7 in such a way as not to protrude outside of the outer beam-like base members 11 of the introducing/discharging pallet 7, and the connection and disconnection of the connecting member 17 with the block members 16a and 16b enable connection and disconnection of multiple units, that is, 2, 3 or 4 units of introducing/discharging pallets 7.

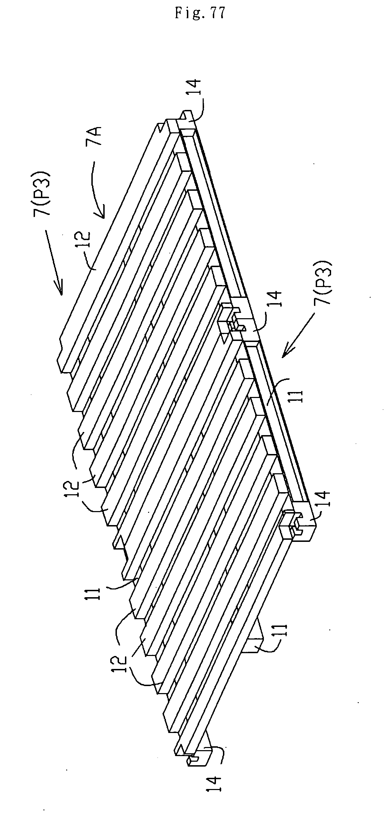

Multiple units of introducing/ discharging pallets 7 are connected by means of said connecting means 14 to form a pallet combination unit 7A as shown in Fig. 77, and the article 6 is loaded on the pallet combination unit 7A. Various forms of loading are possible here, for example: a single unit or multiple units of article 6 can be loaded on a single introducing/discharging pallet 7, which is a component of the pallet combination unit 7A; or a single or multiple units of article 6 are laid out over the entire pallet combination unit 7A connecting introducing/discharging pallets 7.

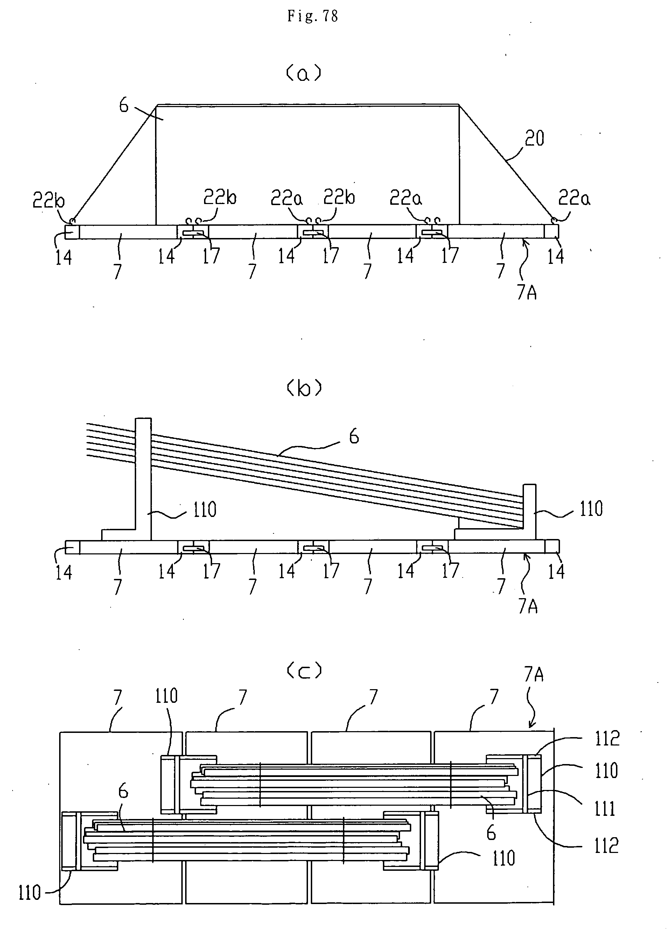

The mode of loading various articles on the pallet combination unit 7A will be described below. As shown in Fig. 78(a), if the article 6 is heavy and bulky, a single piece of article 6 is loaded over four units of introducing/discharging pallets 7 that constitute the pallet combination unit 7A. Also, if the article's size is equivalent to one half of the total length of the container 2, each pieces of article is mounted across the two adjacent pallets in tandem (not shown). If the article 6 consists of long steel pipes, or something similar, which are slightly longer than the total length of the container 2, the article can be loaded in a tilted position using proper supports 110 as shown in Fig. 78(b). Also, if the article 6 is a long object but is slightly shorter than the total length of the container 2, the article 6 can be arranged at an angle and in two rows on the pallet combination unit 7A, the two rows overlapping each other according to the length as shown in Fig. 78(c). The supports 110 provided on the pallet combination unit 7A prevent long article from flying out in the transportation direction P. The supports 110 are supported by slide rails 112 and can slide along the rail, while slide limiting members 111 are adjustable along the longitudinal direction.

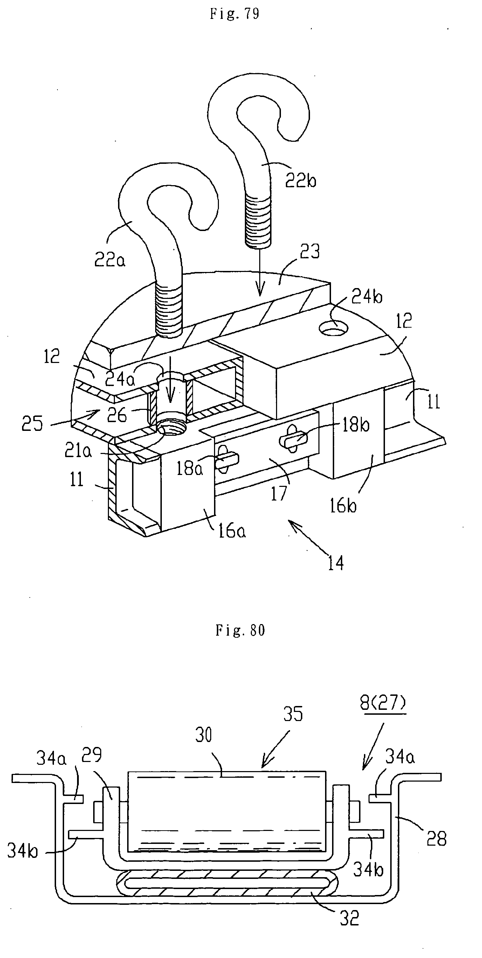

If there is a concern that the article 6 may be disrupted on the introducing/discharging pallet 7 during a long trip of the container 2, female screws 21a and 21b can be provided on said block base members 16a and 16b as shown in Fig. 79 and hooks 22a and 22b are screwed into those female screws 21a and 21b, so that the article 6 can be fixed via hooks 22a and 22b using lashing materials 20 such as fixing ropes, wires, and nets as shown in Fig. 78(a). These female screws 21a and 21b as well as hooks 22a and 22b can be used for lifting the introducing/discharging pallet 7 with a crane as well. As shown in Fig. 79, in covering the top surfaces of the block base members 16a and 16b with rectangular tube-like platform members 12, or covering the gaps of tube-like platform members 12 with another plate-like member 23, it is also possible to provide through-holes 24a and 24b in said rectangular tube-like platform members 12, and interpose short tube-like guide members 26 in cavities 25 of said rectangular tube-like platform members 12 in order to screw the hooks 22a and 22b into the female screws 21a and 21b of the block base members 16a and 16b by guiding the ends of the female screws 21a and 21b through those through-holes 24a and 24b.

### (2) Configuration of introducing/discharging device

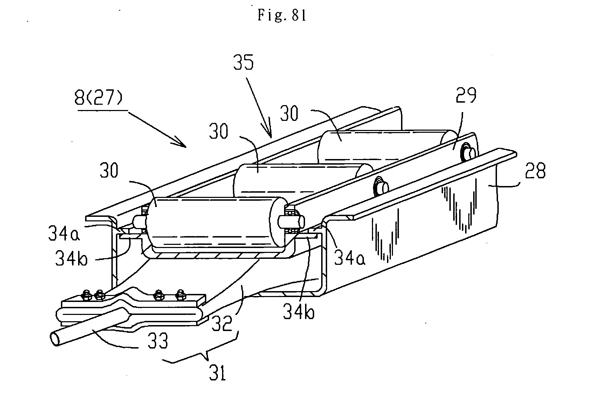

The first and second sliding means 8 and 27 for carrying said pallet combination unit 7A will first be described. As shown in Figs. 80 and 81, each of the first and second sliding means 8 and 27 includes a sliding unit which supports the introducing/discharging pallet 7 from below, and an lifting means for lifting up and down the sliding unit. In this embodiment, a roller conveyor 35 is used as the sliding unit, and an expanding/contracting member 31 which expands or contracts by the air is used as the lifting means. Said roller conveyor 35 consists of a base 28 having a generally U-shaped longitudinal section, a support member 29 dropped into the base 28 and having the same generally U-shaped longitudinal section, and a plurality of rollers 30 attached to said support member 29 at predetermined intervals at their axes. The expanding/contracting member 31 consists of a synthetic fiber code-reinforced tube 32 and a vent pipe 33 for introducing compressed air into the tube 32. If the compressed air is introduced into the tube 32, the tube 32 expands to push up said support member 29. If the compressed air that is introduced into the tube 32 is withdrawn from the tube, the tube 32 is crushed flat by the weights of the support member 29 and the rollers 30 to thereby lower the support member 29.

Plate stoppers 34a protruded inward horizontally are attached to the interior of said base 28, and stopper plates 34b equal in form to the stoppers 34a are attached to the exterior of said support member 29. If said tube 32 is expanded to raise the support member 29, said stopper plates 34b abut on the respective stoppers 34a, thus raising said support member 29 only up to a predetermined height position.

In this embodiment, a combination of said roller conveyor 35 and the first displacement means 9 realizes a carrying function of floating the pallet combination unit 7A from the floor and moving the unit 7A forward and backward of a carrying direction. This carrying function may be realized only by the roller conveyor 35 without using the first displacement means 9. In this case, the roller conveyor 35 constituted so that at least one roller among the plural rollers 30 rotates on its own axis by a driving motor (a hydraulic motor, an air motor, an electric motor or the like) or is driven by an external motor is appropriately used.

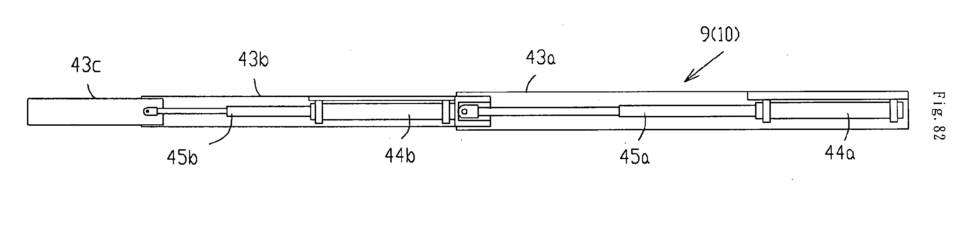

The first displacement means can be constituted as shown in Fig. 82 by connecting multiple of rectangular cylindrical struts 43a, 43b and 43c with different cross section sizes in a telescopic manner, and installing extending rods 45a and 45b that can extend or contract by means of hydraulic cylinders 44a and 44b inside the struts, so that the struts 43a, 43b and 43c can extend or contract by means of extending and contracting the extending rods 45a and 45b.

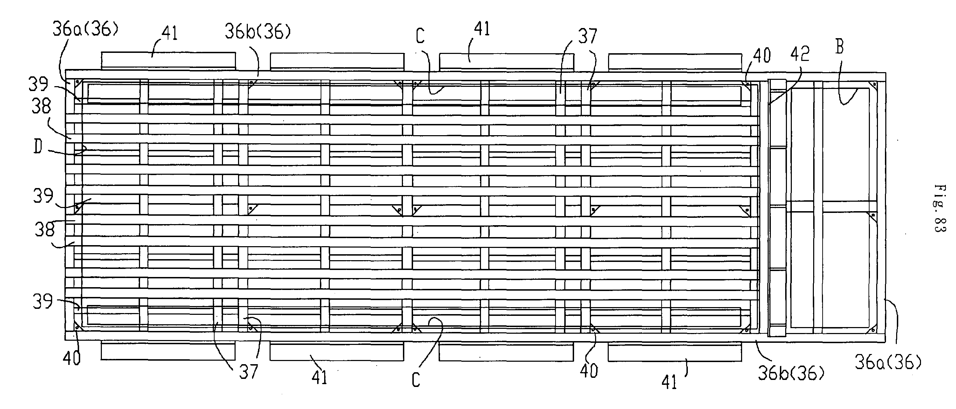

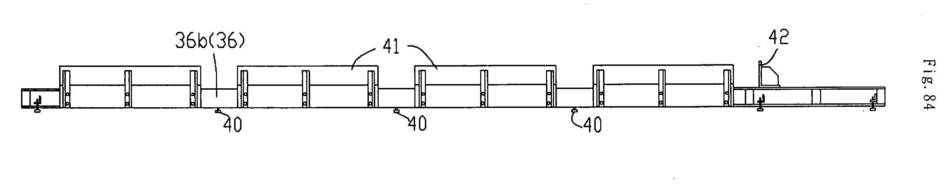

Said stage 5 can be a grid-like structure, as shown in Fig. 83 and Fig. 84, consisting of a rectangular frame-like base member 36 made of shaped steels, short side base members 37 that are assembled parallel to short side frame-like base members 36a of the frame-like base member 36, upper long side base members 38 that are assembled above the short side base members 37 and parallel with long side frame-like base members 36b of the frame-like base member 36, and lower long side base members 39 that that are assembled below the short side base members 37 and parallel with long side frame-like base members 36b.

The stage 5 has an area approximately equal to that of the floor 2a of the container 2 and is constructed so as to accumulate structures connecting four introducing/discharging pallets 7. An installation area B for installing the first displacement means 9 is provided in the front area that is adjacent to the opening 2a of the container 2 and rear area that is opposite 2a. An installation area C for installing the first displacement means 9 and others is provided close to the long side base frame member 36b. An installation area D for installing the first and second sliding means 8 and 27 and others for the entire area of the stage 5 are provided.

In addition, level adjusting means 40 are provided at the corner of frame-like base member 36, the cross point between the long side frame base members 36b and the short side base members 37, and the cross point between the short side base members 37 and the upper long side base members 39 so as to adjust the horizontal level of stage 5 to the floor 2a of the container 2. Stopper members 41 and 42 are provided on the outside of the long side frame members 36b and between the installation area B and the rear installation area D of the introducing/discharging pallet 7 so as to prevent the introducing/discharging pallet 7 from extending out of the stage 5.

### (3) Function of introducing and discharging by introducing/discharging pallet and device

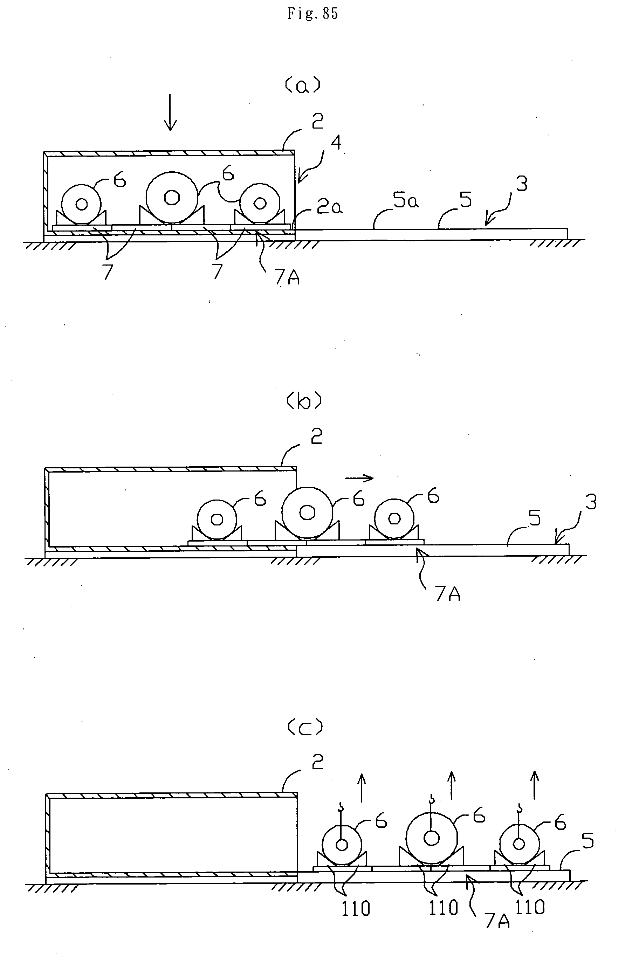

The operations of introducing and discharging the article 6 to/from the container 2 using of a pallet combination unit 7A formed by connecting four introducing/discharging pallets 7 of said introducing/discharging device 3 and 4 with connecting means 14 will be described below with reference to Fig. 85 through Fig. 86. The container 2 has arrived at the destination by transportation means such as a container truck, freight car, or ship, etc., and the pallet combination unit 7A inside the container 2 is loaded with the article 6. However, in some cases, there may be no article 6 on the pallet combination unit 7A inside the container 2.

First, the container 2 introduced with the pallet 7A loaded with the article 6 is transferred to the ground using a crane, etc., as shown in Fig. 85(a). Simultaneously, the container 2 is so positioned that its opening 4 is aligned with the leading edge of the stage 5 on the introducing/discharging device 3. The second sliding means 27 on the stage 5 is pushed into the container 2 by means of the second displacement means 10 and stored into the space S of the pallet combination unit 7A placed on the floor 2a of the container 2 (shown in Fig. 72 (b)). Next, compressed air is supplied into the tubes 35 of the first and second sliding means 8 and 17 to lift the roller conveyor 35. The pallet combination unit 7A will then be supported by the roller conveyor 35 via the load bearing members 13 and the spacers 15, and its beam-like base members 11 will lift off the floor 2a of the container 2 (shown in Fig. 72(a)).

Next, as shown in Fig. 85(b), the leading edge of the first displacement means 9 is latched in the extended condition with the pallet combination unit 7A, and contracts the first displacement means 9 to pull out the pallet combination unit 7A, sliding on the roller conveyor 35, out of the container 2 onto the stage 5. The article 6 transferred on the pallet combination unit 7A, which has been moved onto the stage 5, is the lifted using a crane, etc. , to be placed on a specified position as shown in Fig. 85(c). When all of the article 6 have been transferred, the supports 110 attached to the introducing/discharging pallet 7 are removed, replace these supports shaped corresponding to the article 6 to be loaded next and mount hooks used for nets, ropes or the like for fastening article.

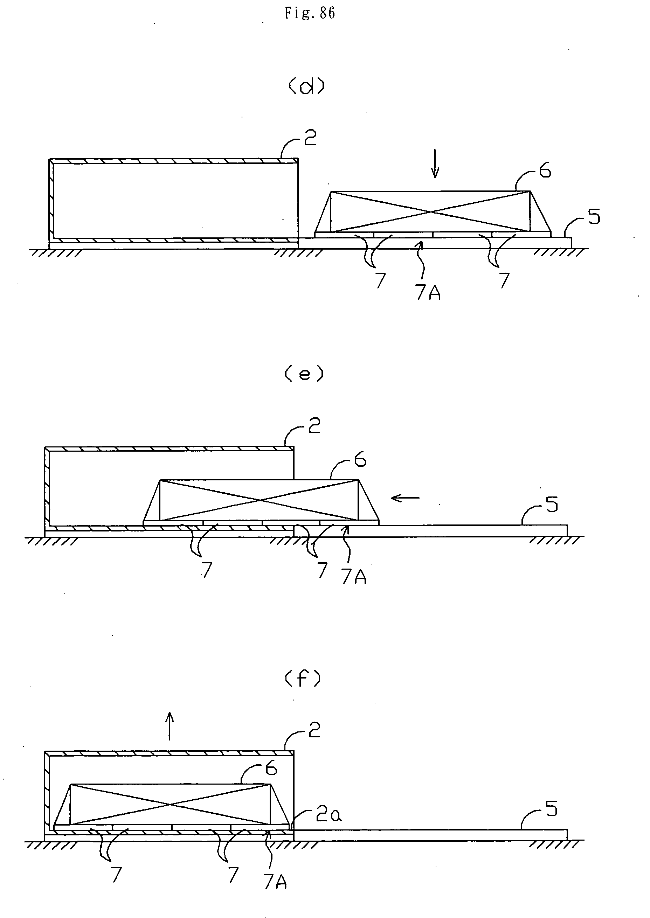

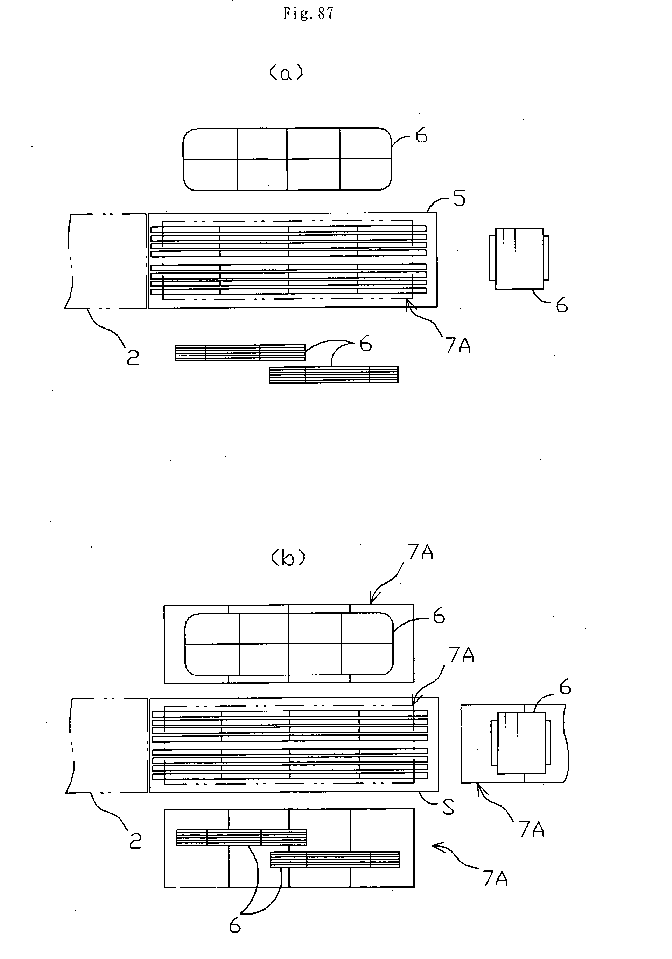

Next, as shown in Fig. 86(d), the next article 6 is transferred to the pallet combination unit 7A on the stage 5 using a crane, etc. As shown in Fig. 87 (a), the article 6 scheduled to be transported is laid out around the stage 5 in such a way that the article 6 can be distributed on the pallet combination unit 7A in a proper balance considering its weight and shape.

Next, as shown in Fig. 86(e), the leading edge of the first displacement means 9 is latched in the contracted condition to the pallet combination unit 7A, and extends the first displacement means 9 to push the pallet combination unit 7A, sliding on the roller conveyor 35, into the container 2 from the stage 5. When the pallet combination unit 7A is completely introduced into the container 2 as shown in Fig. 86 (f), the supply of the compressed air is stopped to the tube 35 of the first and second sliding means 8 and 27 to lower the roller conveyor 35. Then, the pallet combination unit 7A is relieved from the support by the roller conveyor 35, the beam-like base members 11 rests on the floor 2a of the container 2 (shown in Fig. 72(b)). Next, the second sliding means 27 on the floor 2a of the container 2 is pulled out using the second displacement means 10 to the original stage 5, and transfers the container 2 to the side of the transportation means from a position close to the stage 5 using a crane, etc. , thus completing the series of introducing/discharging operations.

### (4) Advantages of Embodiment

Consequently, the embodiment makes it possible to conduct introducing/discharging operations of the article 6 between the container 2 and the stage 5 using the pallet combination unit 7A, which is formed by connecting multiple pallets by means of the connecting means 14, so that the number of processes of introducing/discharging the article 6 can be reduced depending on the number of connected introducing/discharging pallets, thus making the introducing/discharging operations more efficient. Moreover, in transporting the container 2 by transportation means such as a truck, freight car, ship, etc., the article 6 can be made more stable inside the container 2 as the introducing/discharging pallet is relatively larger. Further, since the heavy and bulky article 6 is loaded on the pallet combination unit 7A on the stage 5, not only can the introducing operation of the article 6 to the container 2 be done more smoothly, but also the introducing/discharging pallet 7 can be prevented from being over introduced and the leading and trailing ends of the article 6 can be prevented from sticking out and hitting the inner wall of the container 2.

In the embodiment, after the article 6 introduced in the container 2 is discharged at the destination of the transported container, the emptied pallet combination unit 7A can be reused to introduce the article 6 to be transported to the next destination into the container 2 for transporting to the next destination or for shipping back to the original sender, so that there is no need to return the empty pallet combination unit 7A, thus reducing transportation costs and improving transportation efficiency.

It also makes it possible to arrange the next group of article 6 in the planned introducing sequence surrounding the stage 5 in advance, check the sequence easily and securely, and manage the article 6 more easily. Since introducing/discharging of the article 6 is carried out while the container 2 is placed on the ground, it is possible to maintain the container 2 in a stable leveled condition even if a heavy article is introduced, eliminating an otherwise cumbersome container leveling process. It also enables introducing of heavy and bulky article (such as large machine tools, large glass products, masonry products, and automobiles) which have been impossible or extremely cumbersome to introduce into a dry container 2.

It is also possible not to use said introducing/discharging device 3 at the destination of transportation, but rather prepare at least one pair of sliding means, insert said sliding means to the floor 2a of the container 2 resting on the ground through the lower opening space S of the introducing/discharging pallet 7, pull out the front introducing/discharging pallet 7 using a forklift, etc., withdraw the next and all other pallets 7 to the area near the opening 4 of the container 2 one by one using wires, etc. , and pull out each pallet one by one using a forklift, etc., outside the container 2.

Although it was suggested in the embodiment that the same pallet combination unit 7A is carried inside the container at all times, discharging and introducing of article is carried out in sequence using the same pallet combination unit 7A at the transportation destination, or the container carrying the empty pallet combination unit 7A is shipped to the next destination after the article is unloaded at the destination, it does not need to be limited to such schemes, but rather the pallet combination unit 7A can be unloaded together with the article 6 at the destination. In such a case, it is possible to prepare pallet combination units 7A loaded with article 6 to be shipped next placing around the stage 5 as shown in Fig. 87(b). Also, by disconnecting the connecting means 14 of a pallet combination unit 7A pulled out from a container 2, article carried on each introducing/discharging pallet 7 can be individually controlled or transferred.

The stage 5 can also be used for a line operation. That is, a packaging line that can transfer the introducing/discharging pallet 7 or the pallet combination unit 7A is sequentially installed in the stage 5, whereby it is possible to conduct loading of article on the introducing/discharging pallet 7 or the pallet combination unit 7A, fastening of article, or preparation work for the article to be shipped next on this packaging line.

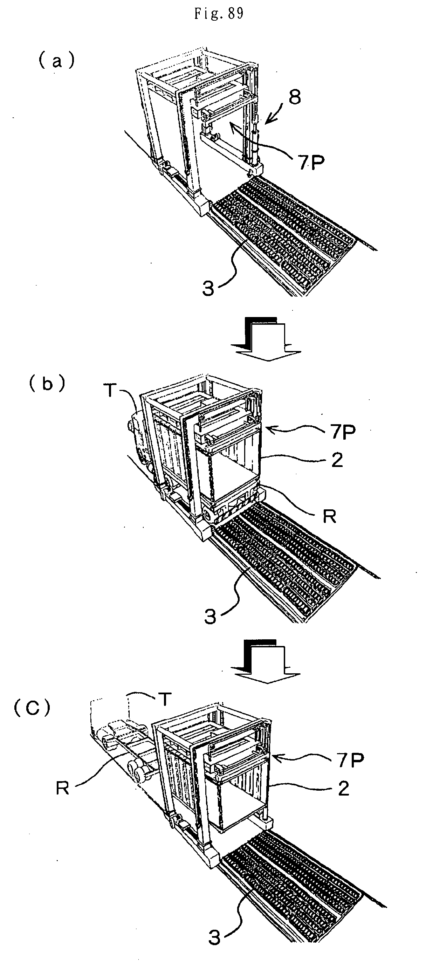

Although it was assumed in the embodiment to lower the container 2 from the transportation means to the ground using a crane, etc., the invention is not to be limited to this. For example, if a container truck is used as the transportation means, the side lifter of the container truck can be used to bring the container 2 down to the ground. It is also possible to have a transportation machine 7P installed near the introducing/discharging device 3 as shown in Fig. 89, it is possible to lower the container 2 from the chassis R of the container truck T to the ground using the transportation machine 7P.

Although in the embodiment it was assumed to conduct the introducing/discharging operation between the container 2 resting on the ground and the stage 5, the invention is not limited to this. For example, it is possible to provide a stage 55 with a floor height approximately matching the height of the floor 2a of the container 2 as it is loaded on a container truck 52, and conduct the introducing/discharging operation of the pallet combination unit between the stage 55 and the container 2 on the truck 52.

### [Pallet P4]

A pallet P4 (hereinafter, "pallet P") will be described with reference to the drawings. This pallet is a pallet for transporting a heavy article formed by winding a steel wire rod.

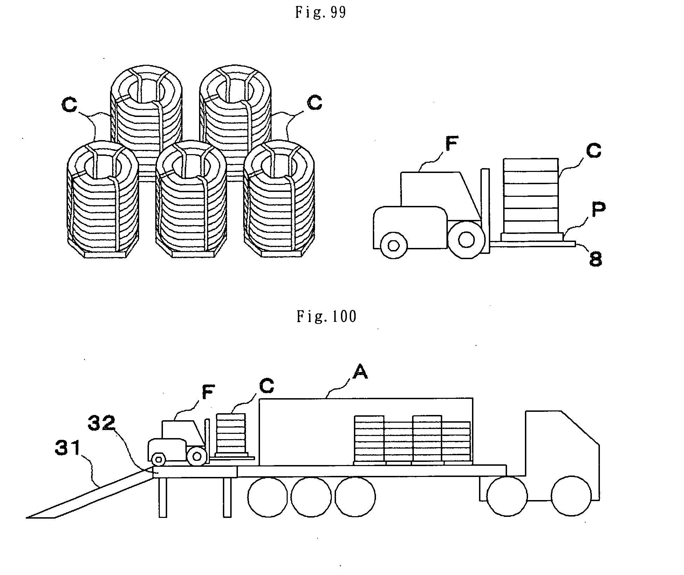

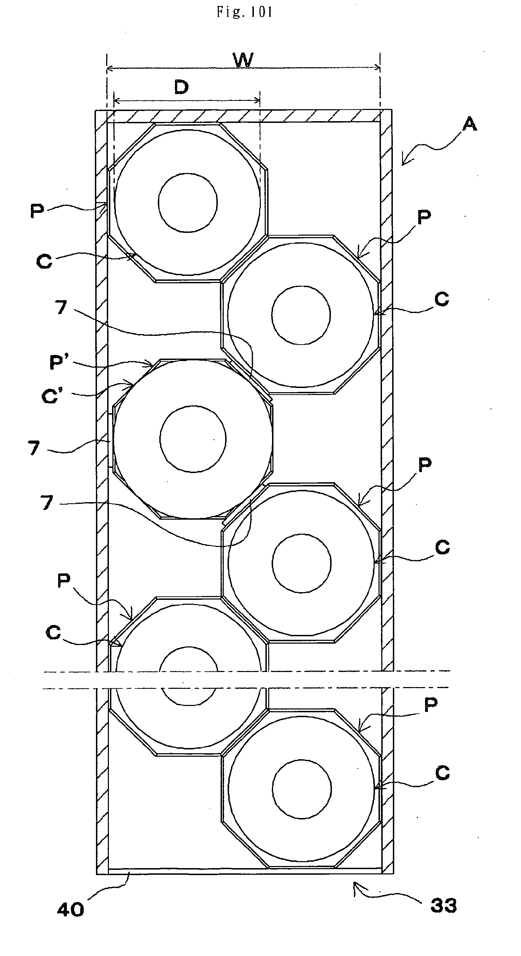

In this embodiment, a container A (see Fig. 101) which is normally referred to as "dry container of 40 feet" is employed as a container. In this embodiment, as a coiled carrying article, a coiled carrying article C (see Fig. 101) formed by winding a wire rod made of metal (e.g., stainless steel or steel) with a predetermined number of turns and having a weight of about 2t is employed. The diameter D of this carrying article C is set at about 1200 to 1300 mm to be not less than half of the width of the container A. In addition, the outer and inner peripheral sides of the carrying article C are bound with a plurality of steel bands (or resin bands) . In this embodiment, a forklift F (see Fig. 99) is exemplified as a transport means for transporting a pallet.

### (1) Configuration of coiled carrying article pallet

A pallet for a coiled carrying article according to the present invention is a pallet which is employed to store a carrying article in the container A and to transport the article. This pallet P is made of steel and consists of a pallet main body 1, and mount sections 2 which are provided on the pallet main body 1 as shown in Figs. 90 to 93.

The pallet main body 1 includes an abutment frame section 3 (which is shown herein as "an abutment section") which can abut on the inner wall of the container A and other pallets P, and a leg section 4 which is provided in the inner region of the abutment frame section 3. This abutment frame section 3 is formed as a regular octagonal ring-like frame as a whole by preparing eight square pipe-like frame base materials 13 equal in outside dimension and fixing the end portions of these frame base materials 13 to one another by welding or the like. The plane dimension of this abutment frame section 3 basically has a regular octagonal shape which includes a circular region on the axial end face side of the carrying article C and is set to be able to contain a predetermined number of (twelve) pallets P in the container A as will be described later (see Figs. 90 and 101).

In addition, the leg section 4 is formed by forming a pair of square pipe-like leg base materials 14a and a pair of leg base materials 14b into a well crib-like frame. The end portions of these pairs of leg base materials 14a and 14b are fixed to the inner surfaces of the frame base materials 13 by welding or the like. The paired leg base materials 14a are set to have a length protruding downward from the lower surface of the abutment frame section 3. A pair of auxiliary base materials 16 are provided at predetermined intervals to be fixed to the lower surfaces of the left and right frame base materials 13 which are parallel to the paired base materials 14a. The leg base materials 14a and the auxiliary base materials 16 enable the pallet P to stably land on the ground or the floor face of the container A.

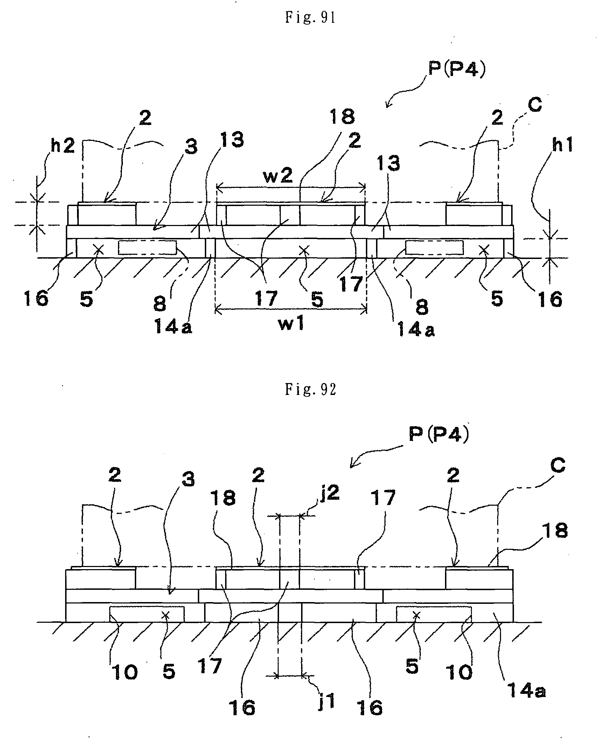

In addition, the protrusion quantity h1 of each leg base material 14a by which the leg base material 14a protrudes downward from the lower surface of the abutment frame section is set to be slightly larger than the height h2 of the mount section 2. Moreover, the distance w1 of a pair of leg base material 14a is set slightly larger than a lateral width of a mount section 2 (see Fig. 91). Further, the distance j between the paired auxiliary base material 16 is set to be slightly larger than the width j2 of a central mount base material 17 which constitutes the mount section 2 (see Fig. 92).

Notches 10 with such a size as to insert the pawls 8 of a forklift F thereinto are formed halfway along the paired leg base materials 14a. A lower open space 5 which includes notch spaces formed by the notches 10 is formed below the abutment frame section 3. This lower open space 5 is a space in which the lower portion of the pallet main body 1 and the longitudinal and lateral directions thereof (vertical and lateral directions in Fig. 90) are opened. By inserting the pawls 8 of the forklift F into the lower open space 5, the pallet P is floated and transported. By thus making the lower open space 5 into a space which has four open sides in the longitudinal and lateral directions, it is possible to improve the degree of freedom for a transport direction in which the forklift F transports the pallet P and particularly to appropriately transport the pallet P on which carrying article C is loaded by an inverting machine to be described later.

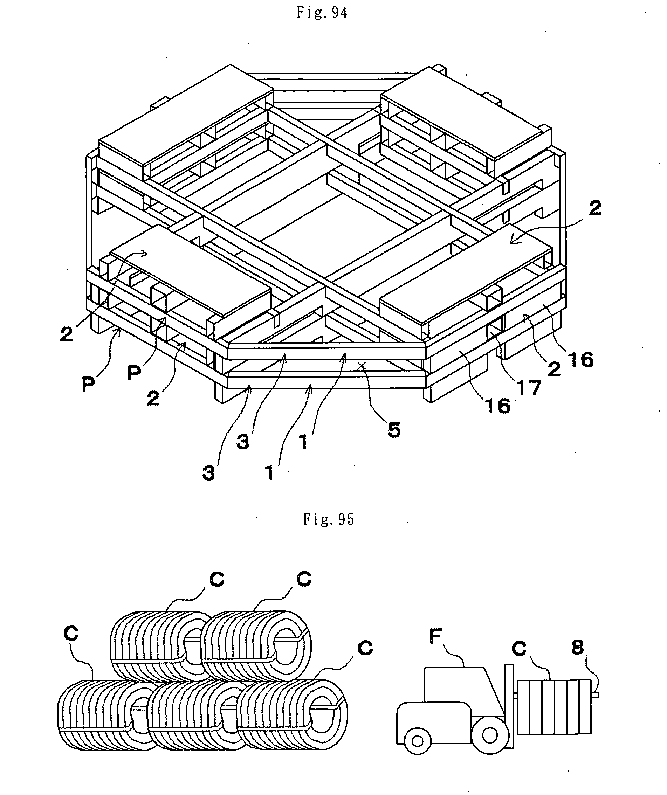

Further, as shown in Fig. 94, if no carrying article C is loaded on the pallet P and the other pallet P is vertically stacked on the pallet P, then the mount sections 2 are stored in the lower open spaces 5 and the mount base materials 17 of the mount sections 2 are fitted between the paired auxiliary base materials 16, respectively, whereby the upper and lower pallets Pare positioned relative to each other while the movements thereof are restricted by each other. In this embodiment, the auxiliary base materials 16, the mount section 2 and the like which constitute the pallet P, may be said to constitute "a stack support section" according to the present invention.

The mount section 2 is in rectangular parallelopiped form and four mount sections 2 are circumferentially arranged on the upper surface of the pallet main body 1 at intervals of 90 degrees. Three square pipe-like mount base materials 17 are provided on the upper surface of a support base material 15 (see Fig. 90) among the predetermined frame base material 13 and the leg base materials 14a and 14b, and a thin plate-like rubber plate material 18 is fixed onto the upper surfaces of these mount base materials 17. The axial end face of the carrying article C is mounted and supported on the upper surfaces of the rubber plate materials 18 of the respective mount sections 2. Further, as shown in Fig. 93, the mount base materials 17 are formed into square pipes and the both ends of each mount base material 17 form a pair of band insertion holes 17a for a band 9 which binds and fixes the carrying article. In addition, the internal space of each mount base material 17 forms a band insertion path 17b which couples the paired band insertion holes 17a.

As shown in Fig. 93, stopper sections 7a of a steel spacer member 7 are freely engaged with and disengaged from each frame base material 13 of the abutment frame section 3. This spacer member 7 is employed if a carrying article C (e.g., carrying article C having a diameter of about 140 mm) which slightlyprojects out from the plane shape of the pallet P is loaded. The spacer member 7 prevents the peripheral surface of this large-diameter carrying article C from contacting with the inner wall of the container A or the carrying articles C loaded on the other pallets P.

### (2) Function of transporting coiled carrying article loading pallets into container

Next, the function of transporting carrying article loading pallets P into the container A will be described with reference to Figs. 95 to 100. Before describing this function, the function of loading the carrying article C on the pallet P will be described. As shown in Fig. 95, carrying articles C to be transported among the many articles C which are stored in a predetermined storage space such as a warehouse or the like are transported close to an inverting machine 23 by the forklift F. At this moment, the carrying articles C are transported in a state in which pawls 8 are inserted into the hollow sections of the respective articles C and the articles C are put horizontally.

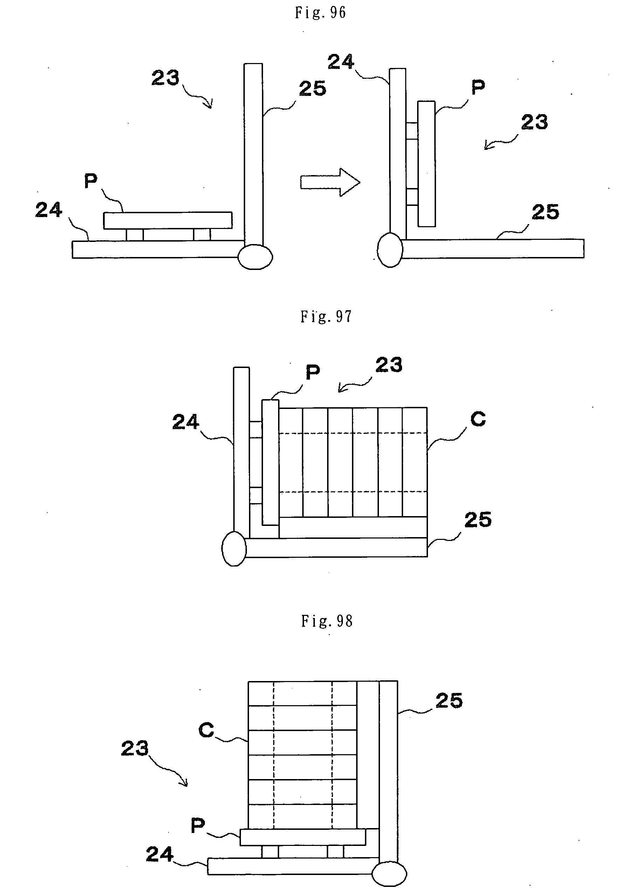

Next, as shown in Fig. 96, the inverting machine 23 attaches the pallet P to a pallet support base 24 in a horizontal state appropriately by a clamper or the like, and inverts this pallet support base 24 together with the pallet P by 90 degrees to put the pallet P vertically. Thereafter, as shown in Fig. 97, the carrying article C is put horizontally on the horizontal transport support base 25 by the forklift F, the crane or the like to put the axial end face of this carrying article C on the mount section of the pallet P. As shown in Fig. 98, the inverting machine 23 oppositely inverts the transport support base 25 together with the carrying articles C by 90 degrees to thereby mount the carrying article C on the pallet P vertically with the axial direction of the article C oriented vertically. In this state, the band 9 is inserted into each band insertion path 17b through the paired band insertion holes 17a, the both ends of the band 9 are bound together through the hollow section of the carrying article C and the carrying article C and the pallet P are thereby fixedly, integrally bound (see Fig. 93). By repeating this operation a predetermined number of times (twelve times), twelve carrying article loading pallets P on which the carrying articles C are loaded, respectively, are prepared.

Next, as shown in Fig. 99, the carrying article loading pallet P which is temporarily mounted is transported close to the container A by the forklift F. At this moment, the pawls 8 are inserted into the lower open space 5 of the pallet P and the carrying article C is transported while being kept vertically. As shown in Fig. 100, the forklift F goes into the container A through a slope 31 and a stage 32, the carrying article loading pallets P are sequentially transported into the container A from the deep side thereof and the twelve carrying article loading pallets P are eventually contained in the container A. Thereafter, this container A is transported by land with a container truck or the like or by sea with a container ship or the like.

A process for sending the carrying articles C in the container A and transporting the articles C toward a destination has been described so far in detail. An operation for taking out the carrying articles which have been transported to the destination from the container A can be handled by adopting opposite procedures to those of the above-stated sending-in operation.

Meanwhile, as shown in Fig. 101, while the carrying article loading pallets P are contained in the container A, each pallet P is positioned so that the frame base materials of the abutment frame section 3 of each pallet P abut on the inner walls (sidewalls or longitudinal walls) of the container A and also on the other pallets P. The carrying articles C loaded on these pallets P, respectively, are arranged in a zigzag fashion so that the adjacent carrying articles are overlapped in longitudinal and lateral directions.

A carrying article C' which is loaded on a pallet P' is a large-diameter carrying article C' which projects out from the plane of the pallet P' . Three spacer members 7 are attached to this pallet P' and the pallet P' abuts on the inner wall of the container A and the other pallets P through these spacer members 7. If no spacer members 7 are employed, the container A is designed to generate a clearance of about 500 mm on the opening side 33 of the container A and a spacer member 40 is appropriately fitted into this clearance.

### (3) Advantages of Embodiment

As described above, in this embodiment, the pallet P on which the coiled carrying article C is loaded can be easily transported into the dry container A which has the opening section 33 only on the rear end side thereof, by the forklift F. It is, therefore, possible to realize container transport for the coiled carrying article C, to protect the carrying article C by the container A, to shorten loading time and transport period, to save storage spaces before and after the transport (actual location and destination),andtofacilitate inventory management and the like.

Further, in this embodiment, the carrying article C is transported into the container A using the pallet P. It is, therefore, possible to prevent the pawls 8 of the forklift F from directly contacting with the carrying article C and to prevent the carrying article C from being damaged as much as possible, compared with the conventional transport system of directly transporting the carrying article by the forklift. In addition, the plane shape of the abutment frame section 3 of the pallet P is set to have a larger region than the axial end face of the coiled carrying article C. Due to this, even if an operator erroneously operates the transport of the carrying article C, the abutment frame section 3 abuts on the inner wall and floor face of the container A, making it possible to prevent the carrying article C from being directly struck against the inner wall and floor face of the container A and to thereby prevent the carrying articles C from being damaged as much as possible. Besides, it is possible to ensure transporting all the carrying articles to be transported into the container A and to thereby deliberately execute the transport of the carrying articles C into the container A.

Moreover, in this embodiment, the carrying articles C contained into the container A are mounted on the floor face of the container A with the axial direction set vertically and the outer peripheral sides of the articles C are out of contact with the inner wall of the container A and the carrying articles C on the other pallets P. Therefore, it is possible to dispense with a laborious operation for, for example, strictly packaging the entire carrying articles C by a vinyl sheet or the like.

Furthermore, in this embodiment, the carrying articles C contained in the container A are mounted on the floor face of the container A with the axial direction thereof set vertically and adjacent articles among a predetermined number of (twelve) carrying articles C loaded on the respective pallets are arranged in a zigzag fashion to be overlapped in longitudinal and lateral directions. Due to this, compared with the conventional system of containing the coiled carrying articles C with the axial direction thereof set horizontally, it is possible to greatly improve efficiency for loading the carrying articles C into the container A. In particular, even if the diameter D of each coiled carrying article C is larger than half the width W of the container A, it is possible to improve loading efficiency.

Further, in this embodiment, the coiled carrying articles C are transported into the container A using the respective pallets P. It is, therefore, possible to conduct operations for fixing and detaching the carrying articles C to and from the pallets P outside of the container A. Compared with a conventional system which requires a complicated operation for fixing the carrying articles in a narrow container, it is possible to carry out the transport operation for transporting the carrying articles C easily in short time. Further, in this embodiment, the abutment frame sections 3 of the adjacent pallets P abut on each other, so that the movements of a predetermined number of (twelve) pallets P which are contained in the container A are restricted and the pallets are positioned to such an extent that the articles are not poorly loaded. It is, therefore, possible to dispense with operations for fixing and detaching the pallets P to and from the container A and to thereby simply carry out the transport operation for transporting the carrying articles C in short time.

Furthermore, in this embodiment, a plurality of pallets P can be vertically stacked while the mount sections 2 are stored in the lower open spaces 5 of the respective pallets 2. It is, therefore, possible to stack many empty pallets P and send back the pallets compactly after transporting the carrying articles and to save a storage space for the empty pallets P. Besides, in this embodiment, since the upper surface of each mount section 2 is constituted out of the rubber plate material 18, it is possible to prevent the axial end faces of the coiled carrying articles C which are mounted on the mount sections 2, from being damaged as much as possible. In addition, since a pair of band insertion holes 17a and the band insertion path 17b are provided in the mount section 2, it is possible to integrally fix the coiled carrying articles C to the respective pallets P by the band 9 more strongly, thereby making it possible to easily carry out a fixing operation in short time.

Further, in this embodiment, a case in which the diameter D of the coiled carrying article C is slightly larger than half the width W of the container A and in which a manner of efficiently containing the carrying articles C into the container A (arranging the articles in two rows in a zigzag fashion) has been exemplified. However, the present invention is not limited to this case. For example, if the diameter of each coiled carrying article is slightly larger than a third of the width of the container, the coiled carrying articles may be arranged in three rows in a zigzag fashion in the container.

In this embodiment, a case of employing the pallets P equal in size and shape has been described. However, the pallets are not limited thereto. A combination of a plurality of types of pallets having different sizes and shapes may be employed. In that case, it is possible to increase the number of thin coiled carrying articles to be loaded into the container. It is possible to load even thick coiled carrying articles without projecting out from the pallets. Thus, it is possible to efficiently load the articles into the container using appropriate pallets according to coil size.

As a modification, not the coiled carrying articles but non-coiled, i.e., cylindrical carrying articles, columnar carrying articles or the like which consist of single formed products may be used. It is also possible to employ one rod-like carrying article, a carrying article assembly obtained by binding rod materials and the like. The shapes of the mount sections of the pallets which are employed for these cases may be selected arbitrarily as long as the carrying articles to be used can be loaded on the pallets.

### [Other pallets]

Examples of pallets other than the pallets described above include a pallet which includes a carrier loading carried articles and carrying means provided at this carrier. In this case, examples of the carrying means include an exhaust nozzle which emits a gas toward a floor surface at a predetermined pressure, rollers which can rise and sink related to the floor surface, and the like.

### 7. Cargo distribution management system in the second embodiment

The cargo distribution management system in the second embodiment is not limited to the cargo distribution management system for handling the loaded cargo having the cargo loaded into the pallet in the first embodiment as explained in Sections 1. to 5. above, but can be used as a cargo distribution management system for handling the cargo by vanning the cargo to the container without using the pallet.

As shown in Fig. 1, the cargo distribution management system in the second embodiment is constituted so that the server computer 1 and the terminals 7 are connected to the communication network 6.

The terminals 7 and the communication network 6 are equal in configuration to those of the cargo distribution management system explained in Sections 1. to 5. In addition, the identification information storage medium 54 is equal in configuration to that of the cargo distribution management system explained in Sections 1. to 5. However, information on a pallet such as a pallet number is arbitrarily set and may be either included or not included in the medium 54. The medium 54 is provided in one of or both of the cargo group 51 and the container 52.

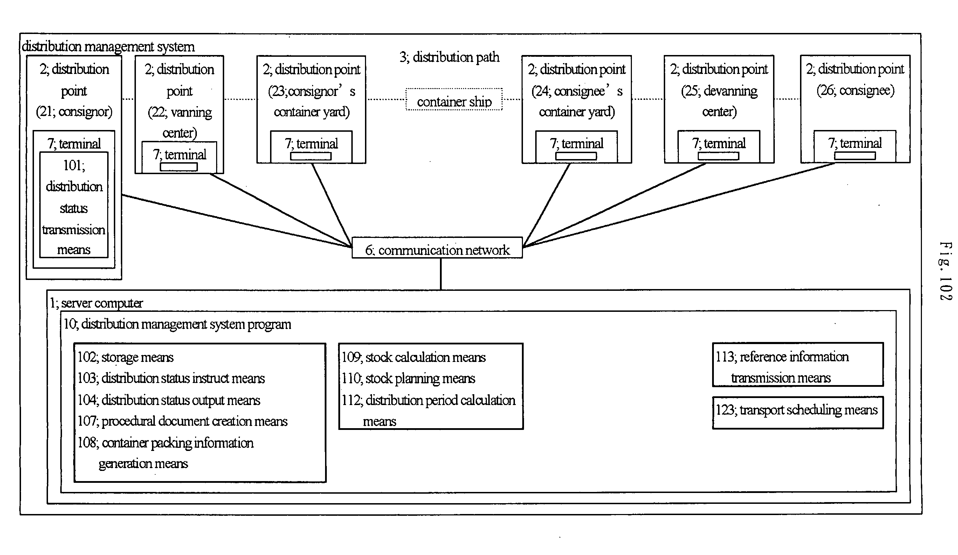

As shown in Fig. 102, a cargo distribution management system program executed by the server computer 1 of the cargo distribution management system in the second embodiment includes a storage means 102, a distribution status instruct means 103, a distribution status output means 104, a procedural document creation means 107, a container packing information generation means 108, a stock calculation means 109, a stock planning means 110, a distribution period calculation means 112, a transport scheduling means 123, and a reference information transmission means 113.

Similarly to the cargo distribution management system for handling the loaded cargo having the cargo group loaded into the pallet as explained in Section 1. to 5. above, the cargo distribution management system in the second embodiment individually allocates identification information to each cargo group so as to be able to grasp a distribution position of the cargo group. Therefore, it is possible to acquire information for appropriate distribution management. Further, the shipping schedule is planned so that the stock volume by which the cargo group 51 is stored on the consignee side can fall within a certain range. Therefore, it is possible to determine the shipping date of the cargo group 51.

### 8. Other embodiments

The present invention is not limited to the above-stated concrete embodiments but can include embodiments variously changed and modified within the scope of the invention according to objects and purposes.

As shown in Fig. 47, the cargo distribution management system in the embodiments handles heavy articles such as steel plates as cargoes. However, the articles handled by the system are not limited thereto but the system can handle general cargoes.

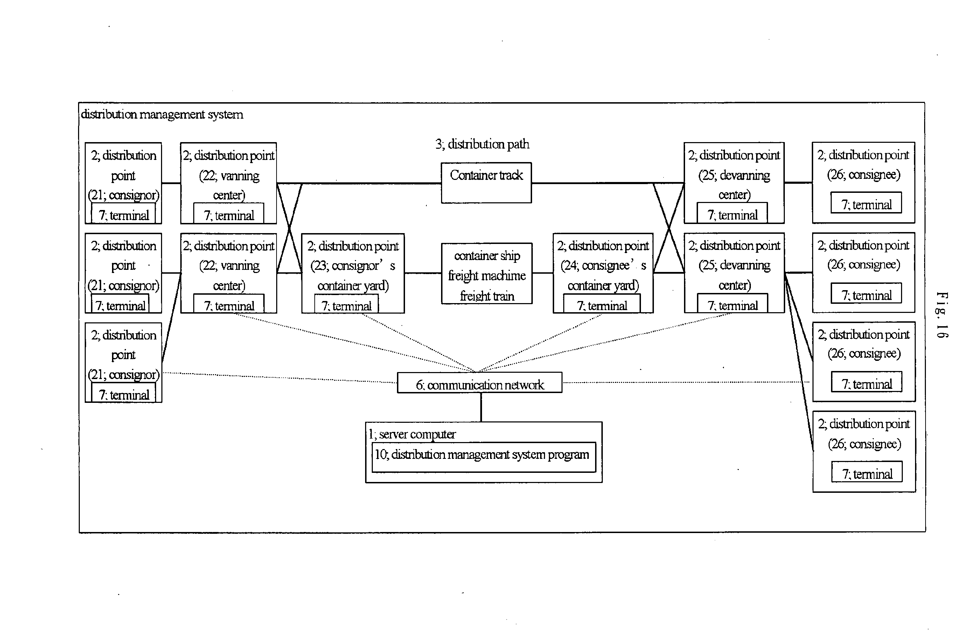

The embodiments illustrate a case including marine transport. However, the present invention is not limited to this case. As shown in Fig. 16, the present invention can also realize ground transport using a container truck, a freight train or the like and air transport using a cargo plane. Further, a plurality of transport paths can be used. If the container yards are unnecessary, the cargo distribution management system which does not include the container yards can be constituted.

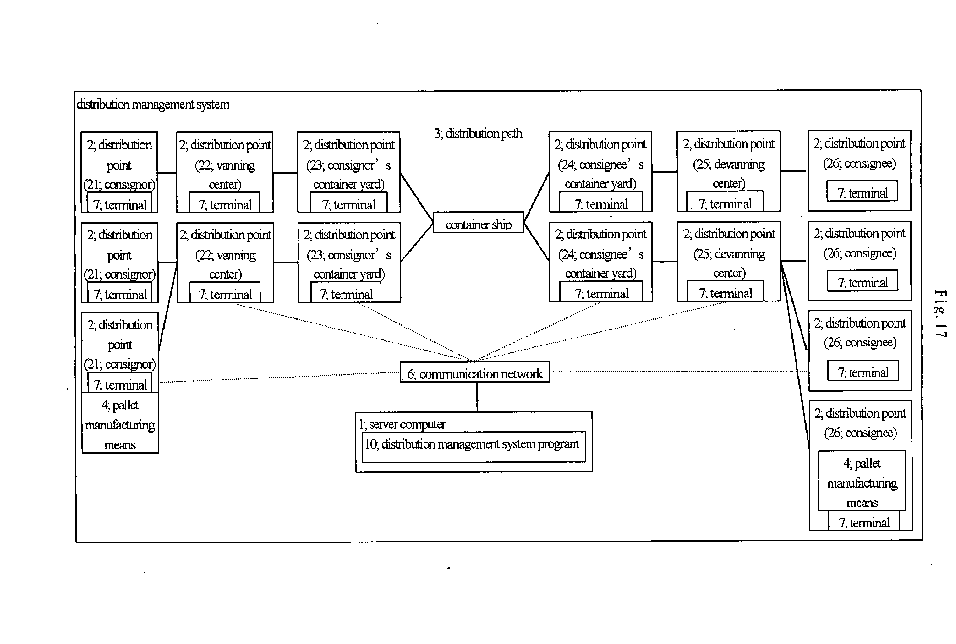

As shown in Fig. 17, the cargo distribution management system can include pallet manufacturing means 4 in or independent of each of the distribution points 2. This pallet manufacturing means 4 is a means for manufacturing pallets 55 in response to an instruction from the pallet supply means 106 if the pallet supply means 106 determines that empty pallets 552 are in short supply. The manufactured pallets 55 are transported to the distribution point 2 indicated by the pallet supply means 106.

The cargo distribution management system including such pallet manufacturing means 4 can manufacture and supply pallets 55 if the pallets 55 are in short supply. Therefore, the cargo distribution management system can prevent a distribution delay caused by the insufficient supply of pallets 55.

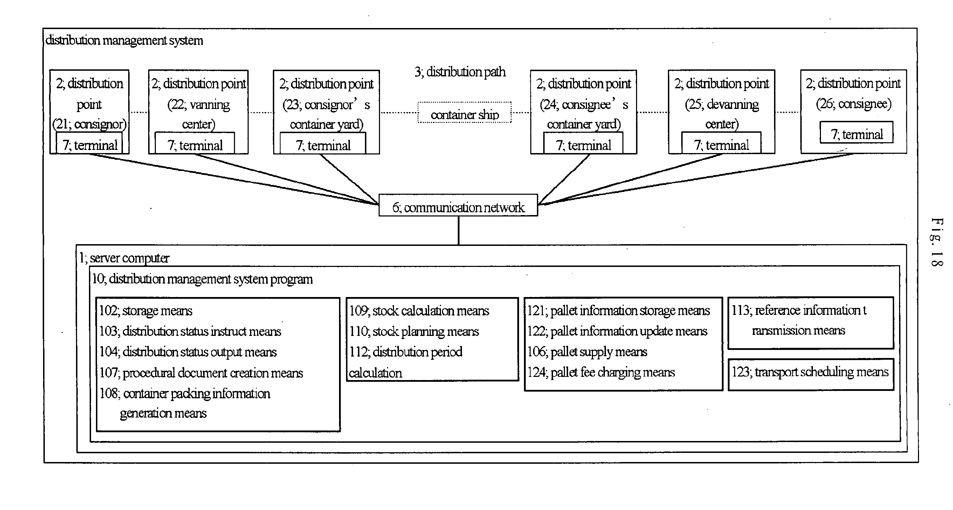

As shown in Fig. 18, the cargo distribution management system can include pallet fee charging means 124 in the server computer 1. The pallet fee charging means 124 is means for calculating a pallet fee based on the history of the pallet 55 stored in the pallet information storage means 121 and charging a party which uses the pallet 55 for the fee.

The pallet fee is calculated based on an arbitrarily set charging system. For example, the pallet fee charging means 124 can calculate a fee proportional to the number of times of the use of the pallet 55 in a predetermined period and charge the consignee for the calculated fee.

The cargo distribution management system including such pallet fee charging means 124 can easily charge a fee of the use of the cargo distribution management system.

## Claims

1. A cargo distribution management system for allowing a server computer 1 to manage a cargo group 51, which is one of or both of a loaded cargo 53 which is a pallet 55 loaded with a cargo 531 and the pallet 55 unloaded with the cargo 531 and contains into a container 52, and distributing the cargo group 51 between distribution points 2 including a consignor 21, a vanning center 22, a devanning center 25, and a consignee 26, wherein
each of the distribution points 2 comprises a terminal 7, the terminal 7 comprising a distribution status transmission means 101 for transmitting distribution status information including at least identification information for individually identifying the cargo group 51 and position information on the distribution point 2, to the server computer 1 and
the server computer 1 comprises:
a storage means 102 that constitutes a database storing the identification information and the distribution status information;
a distribution status instruct means 103 for instructing the storage means 102 to store the received identification information and the distribution status information, and thereby instructing the storage means 102 to update the distribution status information stored in the storage means 102; and
a distribution status output means 104 for outputting a result obtained by processing the distribution status information stored in the storage means 102.

2. The cargo distribution management system according to claim 1, wherein
said identification information further includes container packing information which includes at least a volume and a containing position of said cargo group 51 in said container 52,
said server computer 1 further comprises a container packing information generation means 108 for generating the container packing information so that a gross weight and a position of a center of gravity of the container 52 which contains the cargo group 51 fall within respective predetermined ranged, and
said one of or both of said loaded cargo 53 and said container 52 comprise an identification information storage medium 54 which stores said identification information.

3. The cargo distribution management system according to claim 2, wherein
said identification information storage medium 54 is a two-dimensional barcode.

4. The cargo distributionmanagement systemaccording to claim 2, wherein
said server computer 1 further comprises a procedural document creation means 107 for creating a procedural document necessary for distribution based on said distribution status information stored in said storage means 102.

5. The cargo distributionmanagement systemaccording to claim 2, wherein
said server computer 1 further comprises:
a distribution period calculation means 112 for calculating a distribution period of said cargo group 51 between said distribution points 2;
a stock calculation means 109 for calculating stock information of said cargo 531 based on said distribution status information stored in said storage means 102, and for outputting the calculated stock information; and
a stock planning means 110 for creating a plan of supplying the cargo 531 to the consignee 26 based on the stock information obtained by the stock calculation means 109 and said distribution period obtained by said distribution period calculation means 112 so that a stock quantity of said consignee 26 becomes constant, and wherein
said distribution period calculation means obtains a distribution processing period for each predetermined distribution processing element, and calculates a sum of distribution processing periods as the distribution period.

6. The cargo distribution management system according to claim 2, wherein
said server computer 1 further comprises a reference information transmission means 113 for transmitting one of or both of said distribution status information stored in said storage means 102 and an output result of the distribution status output means 104 to a reference terminal 7 connected to a communication network 6 in accordance with a reference request signal transmitted from the reference terminal 7, and
said reference information transmission means 113 determines a reference right of said reference terminal, and restricting a range in which said distribution status information can be referred to in accordance with a result of the determination.

7. The cargo distribution management system according to claim 2, wherein
said server computer 1 further comprises:
a pallet information storage means 121 for storing pallet information including a use history and a present position of said pallet 55;
a pallet information update means 122 for updating the pallet information stored in the pallet information storage means 121 based on said distribution status information output from said distribution status output means 104; and
a pallet supply means 106 for issuing an instruction to supply an empty pallet 552 that is said pallet 55 which is unloaded from one of said distribution points 2 which has the empty pallet 552 to one of the distribution points 2 which needs the empty pallet 552 while referring to said pallet information stored in said pallet information storage means 121.

8. The cargo distribution management system according to claim 2, comprising a pallet use fee charging means 124 for calculating and charging a use fee for using said pallet 55 based on said distribution status information output from said distribution status output means 104.

9. The cargo distribution management system according to claim 2, wherein
said identification information storage medium 54 includes cargo details information of said loaded cargo 531.

10. The cargo distribution management system according to any one of claims 3 to 9, wherein
a transport path of said cargo includes a container ship transport path.

11. The cargo distribution management system according to claim 10, wherein
said cargo is a heavy article.

12. A consignor-side cargo distribution management system used for allowing a server computer 1 to manage a cargo group 51, which is one of or both of a loaded cargo 53 which is a pallet 55 loaded with cargo 531 and the pallet 55 unloaded with the cargo 531 and contains into a container 52, and distributing the cargo group 51 between distribution points 2 including a consignor 21, a vanning center 22, a devanning center 25 of an export destination, and a consignee 26, wherein
the server computer 1 comprises:
a storage means 102 constituting a database, for storing identification information for individually identifying the cargo group 51 and distribution status information including at least position information on the distribution points 2;
a distribution status instruct means 103 for instructing the storage means 102 to store the received identification information and the distribution status information, and thereby instructing the storage means 102 to update the distribution status information stored in the storage means 102; and
a distribution status output means 104 for outputting a result obtained by processing the distribution status information stored in the storage means 102.

13. A consignee-side cargo distribution management system used for allowing a server computer 1 to manage a cargo group 51, which is one of or both of a loaded cargo 53 which is a pallet 55 loaded with cargo 531 and the pallet 55 unloaded with the cargo 531 and contains into a container 52, and distributing the cargo group 51 between distribution points 2 including a devanning center 25, a consignee 26, and a consignor 21 which imports the cargo to the consignee 26, and a vanning center 22, wherein
the server computer 1 comprises:
a storage means 102 constituting a database, for storing identification information for individually identifying the cargo group 51 and distribution status information including at least position information on the distribution points 2;
a distribution status instruct means 103 for instructing the storage means 102 to store the received identification information and the distribution status information, and thereby instructing the storage means 102 to update the distribution status information stored in the storage means 102; and
a distribution status output means 104 for outputting a result obtained by processing the distribution status information stored in the storage means 102.

14. A pallet management system for allowing a server computer 1 to manage a pallet 55 used to distribute a cargo 531 between distribution points 2 including a consignor 21 and a consignee 26, wherein
said server computer 1 comprises:
a pallet information storage means 121 for storing pallet information including a use history and a present position of the pallet 55;
a pallet information update means 122 for updating the pallet information stored in the pallet information storage means 121;
a pallet supply means 106 for issuing an instruction to supply an empty pallet 552 that is said pallet 55 which is unused and which is unloaded with the cargo 531 from one of said distribution points 2 which has the empty pallet 552 to one of the distribution points 2 which needs the pallet 552 while referring to said pallet information stored in said pallet information storage means 121; and
a pallet use fee charging means 124 for calculating and charging a use fee for using said pallet 552 based on said pallet information stored in said pallet information storage means 121.

15. A computer readable recording medium storing a program for allowing a computer to operate as the cargo distribution management system according to any one of claims 1, 12 and 13.

16. A computer readable recording medium storing a program for allowing a computer to operate as the pallet management system according to claim 14.

17. A program for allowing a computer to operate as the cargo distribution management system according to any one of claims 1, 12, and 13.

18. A program for allowing a computer to operate as the cargo distribution management system according to claim 14.

19. A cargo distribution management system for allowing a server computer 1 to manage a cargo group 51 including the cargo 531 and contains into a container 52, and distributing the cargo group 51 between distribution points 2 including a consignor 21, a vanning center 22, a devanning center 25, and a consignee 26, wherein
each of the distribution points 2 comprises a terminal 7, the terminal 7 comprising a distribution status transmission means 101 for transmitting distribution status information including at least identification information for individually identifying the cargo group 51 and position information on the distribution point 2, to the server computer 1 and
the server computer 1 comprises:
a storage means 102 that constitutes a database storing the identification information and the distribution status information;
a distribution status instruct means 103 for instructing the storage means 102 to store the received identification information and the distribution status information, and thereby instructing the storage means 102 to update the distribution status information stored in the storage means 102;
a distribution status output means 104 for outputting a result obtained by processing the distribution status information stored in the storage means 102; and
a distribution period calculation means 112 for calculating a distribution period of said cargo group 51 between said distribution points 2, and wherein
said distribution period calculation means obtains a distribution processing period for each predetermined distribution processing element, and calculates a sum of distribution processing periods as the distribution period.

20. The cargo distribution management system according to claim 19, wherein
said server computer 1 further comprises:
a stock calculation means 109 for calculating stock information of said cargo 531 based on said distribution status information stored in said storage means 102, and for outputting the calculated stock information; and
a stock planning means 110 for creating a plan of supplying the cargo 531 to the consignee 26 based on the stock information obtained by the stock calculation means 109 and said distribution period obtained by said distribution period calculation means 112 so that a stock quantity of said consignee 26 becomes constant.

21. A consignor-side cargo distribution management system used for allowing a server computer 1 to manage a cargo group 51 including cargo 531 and contains into a container 52, and distributing the cargo group 51 between distribution points 2 including a consignor 21, a vanning center 22, a devanning center 25 of an export destination, and a consignee 26, wherein
the server computer 1 comprises:
a storage means 102 constituting a database, for storing identification information for individually identifying the cargo group 51 and distribution status information including at least position information on the distribution points 2;
a distribution status instruct means 103 for instructing the storage means 102 to store the received identification information and the distribution status information, and thereby instructing the storage means 102 to update the distribution status information stored in the storage means 102;
a distribution status output means 104 for outputting a result obtained by processing the distribution status information stored in the storage means 102; and
a distribution period calculation means 112 for calculating a distribution period of said cargo group 51 between said distribution points 2.

22. A consignee-side cargo distribution management system for allowing a server computer 1 to manage a cargo group 51 including the cargo 531 and contains into a container 52, and distributing the cargo group 51 between distribution points 2 including a devanning center 25, a consignee 26, and a consignor 21 which imports the cargo to the consignee 26, and a vanning center 22, wherein
the server computer 1 comprises:
a storage means 102 constituting a database, for storing identification information for individually identifying the cargo group 51 and distribution status information including at least position information on the distribution points 2;
a distribution status instruct means 103 for instructing the storage means 102 to store the received identification information and the distribution status information, and thereby instructing the storage means 102 to update the distribution status information stored in the storage means 102;
a distribution status output means 104 for outputting a result obtained by processing the distribution status information stored in the storage means 102; and
a distribution period calculation means 112 for calculating a distribution period of said cargo group 51 between said distribution points 2.

23. A computer readable recording medium storing a program for allowing a computer to operate as the cargo distribution management system according to any one of claims 19, 21 and 22.

24. A program for allowing a computer to operate as the cargo distribution management system according to any one of claims 19, 21, and 22.
